# EUROPÄISCHE PATENTSCHRIFT

(11) **EP 0 865 681 B1**
(45) Veröffentlichungstag und Bekanntmachung des Hinweises auf die Patenterteilung: **15.09.2004**
(21) Anmeldenummer: 96940648.7
(22) Anmeldetag: 26.11.1996
(51) Int. Cl.: H02P 5/06, H02P 5/17, H02P 6/08, G05F 1/10

(54) **VERFAHREN ZUM REGELN EINER PHYSIKALISCHEN GRÖSSE, UND ANORDNUNG ZUR DURCHFÜHRUNG EINES SOLCHEN VERFAHRENS**
PROCESS FOR CONTROLLING A PHYSICAL QUANTITY, AND ARRANGEMENT FOR CARRYING OUT SAID PROCESS
PROCEDE DE REGULATION D'UNE GRANDEUR PHYSIQUE, ET DISPOSITIF POUR LA MISE EN OEUVRE DUDIT PROCEDE

(30) Priorität: 04.12.1995 DE 19545109
(43) Veröffentlichungstag der Anmeldung: 23.09.1998
(60) Teilanmeldung: 04011334.2
(73) Patentinhaber: ebm-papst St. Georgen GmbH & Co. KG, 78112 St. Georgen (DE)
(72) Erfinder: DIETERLE, Roland, D-78112 St. Georgen (DE); KARWATH, Arno, D-78628 Rottweil (DE); RAPPENECKER, Hermann, D-78147 Vöhrenbach (DE)
(74) Vertreter: Raible, Hans, Dipl.-Ing.
(86) Internationale Anmeldenummer: PCT/EP1996/005216
(87) Internationale Veröffentlichungsnummer: WO 1997/021268

(56) Entgegenhaltungen:
- EP-A- 0 352 397
- DE-A- 2 526 044
- DE-A- 3 643 221
- DE-A- 4 441 372
- F. FRÖHR ET AL: "Grundbegriffe der Regelungstechnik" EINFÜHRUNG IN DIE ELEKTRONISCHE REGELUNGSTECHNIK SIEMENS AG, 4TH EDITION, 1970, Seiten 11-18, XP002969785 Berlin, Munich

## Beschreibung

Die Erfindung bezieht sich auf ein Verfahren zum Regeln einer physikalischen Größe, insbesondere der Drehzahl eines Motors, und auf eine Anordnung zur Durchführung eines solchen Verfahrens.

Aus der DE-A1,4 441 372 kennt man ein derartiges Verfahren und eine entsprechende Anordnung, die sich in der Praxis bewährt haben. Jedoch ist es schwierig, dieses bekannte Verfahren auf verschiedene Motortypen anzuwenden, da jeweils Programmänderungen erforderlich werden. Außerdem erfolgt bei der bekannten Anordnung die Regelung in relativ groben Schritten über einen Rechner, der einen digitalen Wert PI vorgibt, durch welchen die Zeitdauer gesteuert wird, während der ein Strom zu einem Verbraucher fließt. Soll der Motor schneller laufen, so fließt dieser Strom länger; soll der Motor langsamer laufen, so fließt dieser Strom kürzer.

Ferner kennt man aus der DE-A, 2 526 044 eine Driftkompensationsschaltung für einen Speicherkondensator. Man nennt das auch eine Sample-and-Hold-Schaltung. Zu einem gegebenen Zeitpunkt wird hier die Spannung an diesem Speicherkondensator als digitaler Bezugswert in einem Register gespeichert. Anschließend wird die Spannung am Speicherkondensator ständig überwacht. Dies geschieht dadurch, dass diese Spannung fortlaufend digitalisiert und mit dem digitalen Bezugswert (im Register) verglichen wird. Wenn sich eine Differenz zum Bezugswert ergibt, wird der Speicherkondensator während einer konstanten Zeitdauer entweder geladen oder entladen.

Aufgabe der Erfindung ist es, ein neues Verfahren dieser Art, und eine Anordnung zur Durchführung eines solchen Verfahrens, bereitzustellen.

Nach der Erfindung wird diese Aufgabe gelöst durch ein Verfahren gemäß Patentanspruch 1. Hierdurch ergibt sich eine präzise und schnelle Regelung mit geringem Aufwand. Diese Regelung hat vor allem den Vorteil, dass ein Teil von ihr mit einem preiswerten Mikroprozessor durchgeführt werden kann, während ein anderer Teil mit einfachen analogen Bauteilen realisiert werden kann, so dass sich insgesamt sehr niedrige Kosten ergeben, wobei Schnelligkeit und Genauigkeit der Regelung sehr hoch sind, und durch Änderungen im analogen Teil sehr einfach eine Anpassung an verschiedene Regelaufgaben möglich ist.

In weiterer Ausgestaltung der Erfindung geht man mit Vorteil gemäß Patentanspruch 25 vor. Dafür eignet sich ein billiger Mikroprozessor mit geringer Datenbreite, z.B. von 4 Bits, der bei einem elektronisch kommutierten Motor (ECM) auch zur Steuerung der Kommutierung verwendet werden kann.

Eine weitere vorteilhafte Ausgestaltung zeichnet sich dadurch aus, dass gemäß Anspruch 26 durch die Größe der Ladung der Speicheranordnung das Tastverhältnis eines PWM-Stellers gesteuert wird, dessen Ausgangssignal die zu regelnde physikalische Größe direkt oder indirekt beeinflusst. Alternativ kann die Größe der Ladung der Speicheranordnung auch direkt ein Signal steuern, z.B. ein Gleichspannungssignal (z.B. über einen Impedanzwandler).

Eine weitere Lösung der gestellten Aufgabe ergibt sich durch eine Anordnung gemäß Patentanspruch 13. Sie ermöglicht die Verwendung eines preiswerten Mikroprozessors oder Mikrocontrollers, bei guter Genauigkeit der Regelung.

Eine besonders bevorzugte Lösung der gestellten Aufgabe ergibt sich durch einen Elektromotor gemäß Patentanspruch 26. Da ein preiswerter Mikroprozessor oder Mikrocontroller verwendet werden kann, ist diese Lösung auch bei Motoren für kleine Leistungen anwendbar.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: ein teilweise nur schematisch dargestelltes Schaltbild eines ersten Ausführungsbeispiels einer erfindungsgemäßen Anordnung mit einer digital-analog arbeitenden Regelanordnung zur Drehzahlregelung,
- Fig. 2: die Darstellung eines bei Fig. 1 verwendeten, vier Bit langen Datenworts,
- Fig. 3: einen Ausschnitt aus Fig. 1,
- Fig. 4: ein Schaubild zur Erläuterung von Fig. 1 und 3,
- Fig. 5: ein Schaubild zur Erläuterung von Fig. 1 und 3,
- Fig. 6: ein Flußdiagramm, welches in Form einer Übersichtsdarstellung die Hauptelemente einer erfindungsgemäßen Anordnung zur Drehzahlregelung zeigt,
- Fig. 7: den als Regler (S114) bezeichneten Teil der Fig. 6 in einer ausführlichen Darstellung; dieser Teil ist als Binärbaum ausgebildet, um eine sehr rasche Arbeitsweise und damit eine hohe Regelgenauigkeit sicherzustellen,
- Fig. 8 - 10: Schaubilder zur Erläuterung der Arbeitsweise des Drehzahlreglers nach dem ersten Ausführungsbeispiel,
- Fig. 11: eine erste Variante zu Fig. 3,
- Fig. 12: eine zweite Variante zu Fig. 3,
- Fig. 13: eine bevorzugte Ausführungsform eines PWM-Stellers,
- Fig. 14: Schaubilder zur Erläuterung von Fig. 13,
- Fig. 15: die Darstellung einer Ausführungsform der Erfindung in Verbindung mit einem beispielhaft dargestellten, zweiphasigen, elektronisch kommutierten Motor, dessen Drehzahl geregelt wird,
- Fig. 16: eine Darstellung der Anschlüsse des bei Fig. 1 und 15 verwendeten Mikroprozessors 17P103 der Firma NEC,
- Fig. 17: ein Flußdiagramm zur Erläuterung der durch den Mikroprozessor gesteuerten Kommutierung des Motors nach Fig. 15,
- Fig. 18: die Anwendung der Erfindung zur Drehzahlregelung bei einer Brennkraftmaschine,
- Fig. 19: ein Schaubild zur Erläuterung eines beim Mikroprozessor 17P103 verwendeten Ausgangs, der zwischen LOW und hochohmig umgeschaltet werden kann,
- Fig. 20: ein Schaubild zur Erläuterung eines sogenannten Tristate-Ausgangs bei einem Mikroprozessor,
- Fig. 21: eine Darstellung eines Mikroprozessors mit vier Ausgängen analog Fig. 19, und deren Anwendung zur Beeinflussung des P- und I-Anteils bei einem Regler,
- Fig. 22: eine schematische Darstellung zur Erläuterung von Fig. 21,
- Fig. 23 bis 28: Schaubilder zur Erläuterung von Fig. 21 und 22,
- Fig. 29: eine Darstellung zur Erläuterung allgemeiner Aspekte der Erfindung,
- Fig. 30 und 31: Darstellungen zur allgemeinen Erläuterung der Erfindung,
- Fig. 32 und 33: eine Darstellung zur Erläuterung der digitalen Vorgabe eines Sollwerts,
- Fig. 34: eine Darstellung zur Erläuterung eines weiteren Ausführungsbeispiels der Erfindung, bei dem der Sollwert digital vorgegeben wird und bei dem der P-Anteil bei der Regelung berücksichtigt wird und separat einstellbar ist,
- Fig. 35: ein Flußdiagramm, welches in Form einer Übersichtsdarstellung die Hauptelemente eines Programms zeigt, das bei der Anordnung nach Fig. 34 verwendet werden kann,
- Fig. 36: ein Flußdiagramm, welches die digitale Vorgabe des Drehzahl-Sollwerts bei Fig. 34 zeigt,
- Fig. 37A und 37B: ein Flußdiagramm, welches den Ablauf des Regelvorgangs zeigt,
- Fig. 38: ein Flußdiagramm zur Erläuterung der durch den Mikroprozessor gesteuerten Kommutierung des Motors nach Fig. 34,
- Fig. 39 - 42: Schaubilder zur Erläuterung der Wirkungsweise von Fig. 32 bis 38,
- Fig. 43: eine Variante zu Fig. 31,
- Fig. 44: eine Variante zu Fig. 29,
- Fig. 45: eine Variante zu Fig. 37A,
- Fig. 46: eine Variante zu den Fig. 1, 3 oder 18, und
- Fig. 47: eine Variante für die Ausbildung der Speicheranordnung.

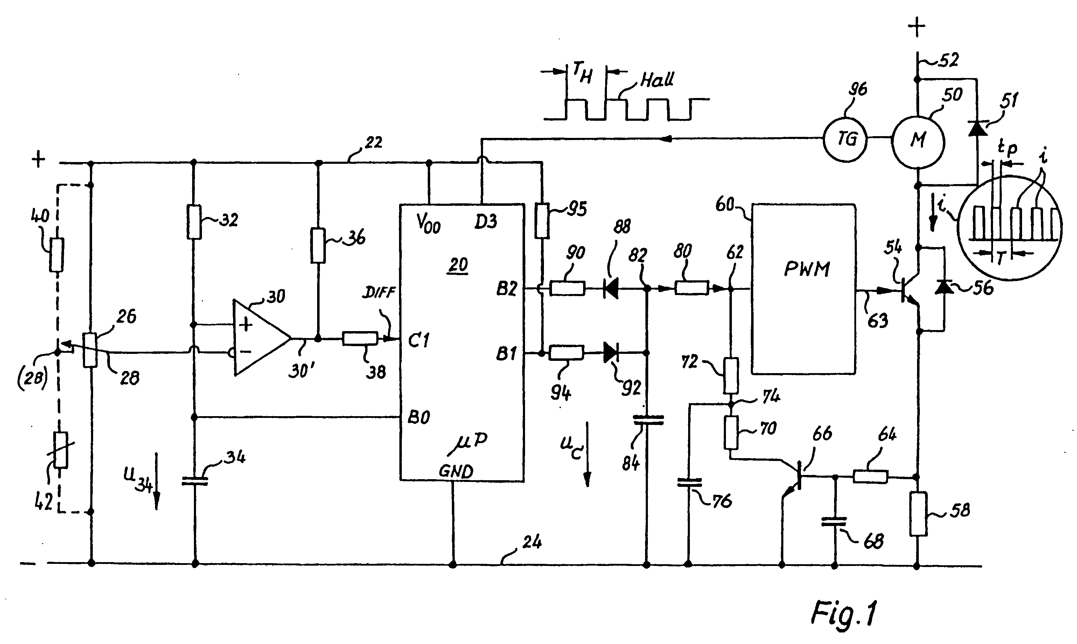

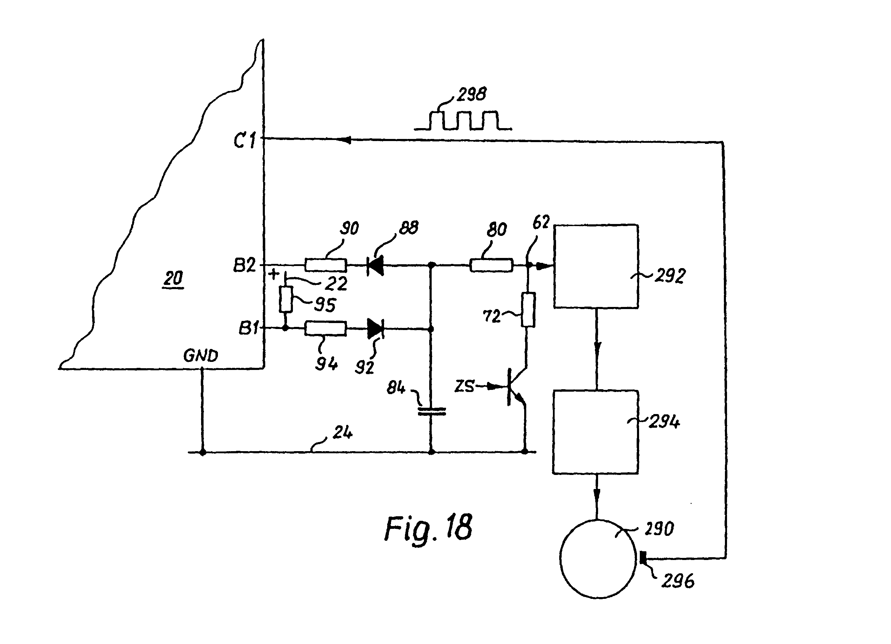

Fig. 1 zeigt an einem Ausführungsbeispiel wesentliche Elemente der vorliegenden Erfindung. Mit 20 ist ein Mikroprozessor bezeichnet, z.B. der Mikroprozessor 17P103 der Firma NEC mit einer Datenbreite von vier Bits. Es ist ein Vorteil der vorliegenden Erfindung, daß ein solcher einfacher Mikroprozessor verwendet werden kann. Dieser enthält ein ROM, in dem sich das Programm für die Steuerung des Mikroprozessors befindet. Die wesentlichen Teile dieses Programms werden nachfolgend an Flußdiagrammen erläutert. Es handelt sich bei Fig. 1 um einen Regler (I-Regler) für die Drehzahl eines Elektromotors 50, der aber z.B. in gleicher Weise als Drehzahlregler für eine Brennkraftmaschine verwendet werden kann, vgl. Fig. 18, oder für sonstige beliebige Regelaufgaben zur Regelung physikalischer Größen.

Der Mikroprozessor 20 ist in üblicher Weise an eine geregelte Versorgungsspannung von z.B.+5 V angeschlossen, die zwischen einer Plusleitung 22 und einer Minusleitung 24 liegt. Zwischen diesen Leitungen liegt ein Potentiometer 26, dessen Abgriff 28 mit dem negativen Eingang eines Komparators 30 verbunden ist, dessen positiver Eingang über einen Widerstand 32 (z.B. 100 kΩ) mit der Plusleitung 22, über einen Kondensator 34 (z.B. 100 nF) mit der Minusleitung 24, und direkt (oder über einen - nicht dargestellten kleinen Widerstand von z.B. 100 Ω) mit dem Port B0 des Mikroprozessors 20 verbunden ist. Der Port B0 kann durch das Programm so gesteuert werden, daß er intern mit der Minusleitung 24 verbunden wird und dann den Kondensator 34 entlädt. Alternativ kann der Port B0 so gesteuert werden, daß er hochohmig wird, so daß sich der Kondensator 34 über den Widerstand 32 aufladen kann.

Die zeitliche Steuerung dieser Abläufe durch das Programm wird nachfolgend im einzelnen beschrieben. Die Ports B1 und B2, die auch als Reglerports bezeichnet werden, können in der gleichen Weise gesteuert werden, d.h. bei B1 = 0 ist der Port B1 mit der Minusleitung 24 verbunden, und bei B1 = 1 ist er hochohmig. Dasselbe gilt für B2.

Der Ausgang 30' des Komparators 30 ist über einen Widerstand 36 mit der Plusleitung 22 und über einen Widerstand 38 mit einem Port C1 des Mikroprozessors 20 verbunden. Das Potential am Port C1 wird mit DIFF bezeichnet.

Der Ausgang 30' des Komparators 30 hat das Potential "niedrig", also DIFF = 0,solange der Kondensator 34 entladen ist, da in diesem Fall der Pluseingang des Komparators 30 ein negativeres Potential hat als dessen Minuseingang.

Wenn der Ausgang B0 des Mikroprozessors 20 hochohmig wird, wird der Kondensator 34 über den Widerstand 32 geladen, so daß die Spannung an ihm ansteigt und zu einem bestimmten Zeitpunkt, den man als "Meßzeitpunkt" bezeichnen kann, der Pluseingang des Komparators 30 positiver wird als dessen Minuseingang, wodurch das Potential am Ausgang 30' plötzlich auf einen positiveren ("hohen") Wert springt (DIFF = 1).
Das Signal DIFF am Eingang C1 zeigt also durch diesen Potentialsprung den "Meßzeitpunkt" an. Wenn das Potential am Ausgang B0 zunächst niedrig war (Kondensator 34 entladen) und dann auf hochohmig geschaltet wird, erhält man also in einem vorgegebenen zeitlichen Abstand hierzu einen positiven Potentialsprung des Signals DIFF, und dieser zeitliche Abstand hängt von der Einstellung des Potentiometers 26 ab, d.h. der zeitliche Abstand wird umso größer, je positiver das Potential am Abgriff 28 des Potentiometers 26 ist.

Das Potentiometer 26 dient zum Einstellen des Sollwerts für die Drehzahl. Ggf. ist hier statt des Potentiometers 26 eine Anordnung mit einem Festwiderstand 40 und einem temperaturabhängigen widerstand 42 (z.B. NCT) möglich, wie in Fig. 1 mit gestrichelten Linien angedeutet, um den Sollwert für die Drehzahl temperaturabhängig zu machen. Dies kann z.B. nützlich sein, wenn ein Lüfter bei niedrigen Temperaturen mit niedriger Drehzahl und bei hohen Temperaturen mit hoher Drehzahl rotieren soll.

Die in Fig. 1 dargestellte Anordnung dient zur Regelung der Drehzahl eines Elektromotors 50, z.B. eines Kollektormotors oder eines elektronisch kommutierten Motors (ECM), der an eine positive Gleichspannung 52 von z.B. 12, 24, 48 oder 60 V angeschlossen ist. Alternativ kann mit ihr auch die Drehzahl einer Brennkraftmaschine geregelt werden, wie in Fig. 18 beispielhaft dargestellt. Parallel zum Motor 50 liegt eine Freilaufdiode 51.

Der dem Motor 50 zugeführte Strom wird gesteuert durch einen npn-Darlingtontransistor 54, zu dem eine Freilaufdiode 56 antiparallel geschaltet ist. Der Emitter des Transistors 54 ist über einen Meßwiderstand 58 (z.B. 3 Ω) mit der gemeinsamen Minusleitung 24 verbunden.

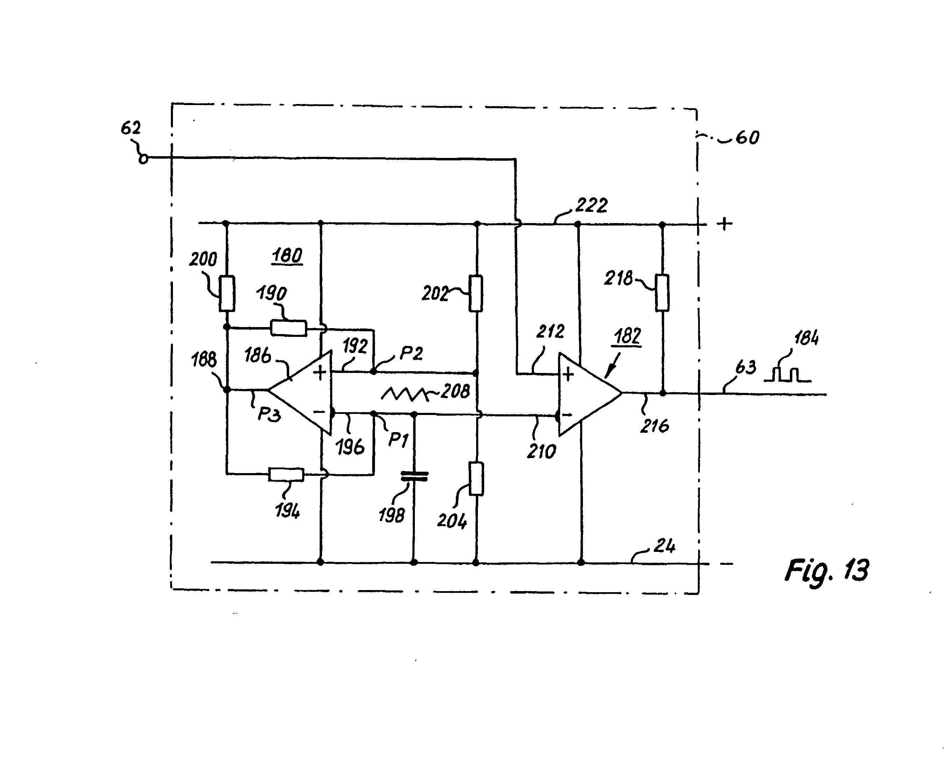

Zur Steuerung des Stroms im Transistor 54 dient ein PWM-Steller 60, der nachfolgend anhand von Fig. 13 beschrieben wird. Dieser schaltet mit einer Frequenz von z.B. 25 kHz den Strom im Transistor 54 ein und aus. Wenn der Motor 50 viel Strom braucht, werden dabei die Pausen zwischen den Stromimpulsen kurz gemacht, und wenn der Motor 50 wenig Strom braucht, werden diese Pausen lang gemacht, wobei die Frequenz der Impulse im wesentlichen unverändert bleibt.

Das Tastverhältnis TV der Stromimpulse i, also das Verhältnis der Impulsdauer tp zu ihrer Periodendauer T (Fig. 1, rechts) wird bestimmt durch das Potential am Eingang 62 des PWM-Stellers 60, d.h. wenn dieses Potential hoch wird, wird TV klein und ggf. 0 %, und wenn das Potential am Eingang 62 niedrig wird, wird TV groß und ggf. 100 %, d.h. der Strom i fließt dann kontinuierlich durch den Transistor 54.

Während des Anlaufs des Motors 50 (mit einem entsprechend hohen Anlaufstrom) wird das Potential am Eingang 62 bestimmt durch die Spannung am Meßwiderstand 58. Diese Spannung wird über einen Widerstand 64 der Basis eines npn-Transistors 66 zugeführt, der als veränderlicher Widerstand wirkt (z.B. Typ BC846) und dessen Emitter mit der Minusleitung 24 verbunden ist. Ein Siebkondensator 68 (z.B. 10 nF) liegt zwischen seiner Basis und der Minusleitung 24. Der Kollektor des Transistors 66 ist über zwei Widerstände 70, 72 (z.B. je 1 kΩ) mit dem Eingang 62 verbunden; ihr Verbindungspunkt 74 ist über einen Siebkondensator 76 (z.B. 100 nF) mit der Minusleitung 24 verbunden. Die Teile 70, 72, 76 bilden zusammen ein Zeitglied erster Ordnung, das als Siebglied dient, um die Spannungsimpulse am Widerstand 58 in eine im wesentlichen gleichförmige Gleichspannung am Eingang 62 umzuwandeln.

Wenn beim Anlauf ein hoher Strom durch den Widerstand 58 fließt und dort eine entsprechend hohe Spannung erzeugt, wird der Transistor 66 zunehmend leitend und zieht das Potential am Eingang 62 in negativer Richtung, so daß das Tastverhältnis des Stromes i abnimmt und dieser Strom auf einen vorgegebenen Höchstwert begrenzt wird. Hierdurch erreicht man eine Strombegrenzung beim Anlauf des Motors 50.

Der Eingang 62 ist über einen hochohmigen Widerstand 80 (z.B. 100 kΩ) mit einem Knotenpunkt 82 verbunden. Ein relativ großer Kondensator 84 (z.B. 3,3 µF) liegt zwischen dem Knotenpunkt 82 und der Minusleitung 24. Wie man erkennt, bestimmt die Spannung u_{C} am Kondensator 84 das Potential am Eingang 62, wenn der Transistor 66 gesperrt ist. Da der Transistor 66 praktisch nur beim Anlauf des Motors stromleitend wird, beeinflußt er nach dem Anlauf die Drehzahlregelung nicht, welche durch die Spannung u_{C} bewirkt wird. Jedoch hat die Strombegrenzung in jedem Fall Vorrang vor der Drehzahlregelung, d.h. wenn der Transistor 66 leitend wird, beeinflußt hauptsächlich er, und nicht die Drehzahlregelung, das Potential am Eingang 62 und bewirkt, daß der Strom i einen vorgegebenen Höchstwert nicht überschreitet.

An den Knotenpunkt 82 ist die Anode einer Diode 88 angeschlossen, deren Katode über einen Widerstand 90 (z.B. 100 kΩ) mit dem Port B2 des Mikroprozessors 20 verbunden ist. Mit dem Knoten 82 ist die Katode einer Diode 92 verbunden, deren Anode über einen Widerstand 94 (z.B.43 kΩ) mit dem Port B1 des Prozessors 20 verbunden ist. Dieser Port ist auch über einen Widerstand 95 (z.B. 3,3 kΩ) mit der Plusleitung 22 verbunden.

Mit dem Motor 50 ist ein Tachogenerator 96 gekoppelt, der eine Ausgangsspannung "Hall" liefert, deren Frequenz der Drehzahl des Motors 50 proportional ist. Bei einem Motor 50 kann die Spannung Hall die Ausgangsspannung eines Hallgenerators sein, der als Rotorstellungssensor dient. Hierfür eignet sich jedoch jede Art von Ausgangsspannung, z.B. solche mit Impulsen, deren Frequenz der Drehzahl proportional ist, mit einer Sinusspannung, einer Rechteckspannung etc. Da hier häufig - aus Preisgründen - ein Hallgenerator verwendet wird, besonders bei einem Motor, wird das Signal mit "Hall" bezeichnet.

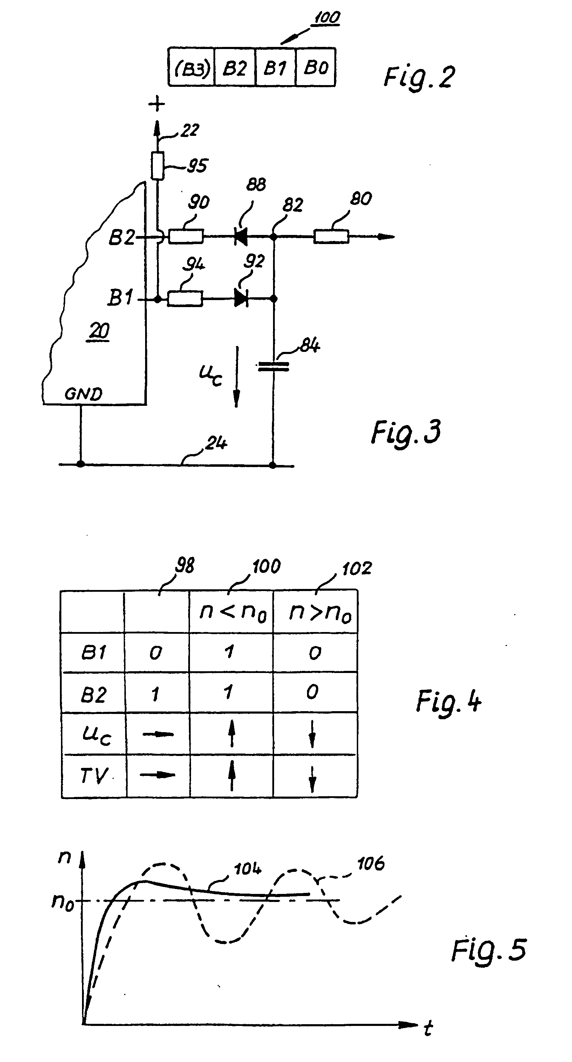

Fig. 2 zeigt ein Datenwort 100 des Mikroprozessors 20, das aus vier Bits B3, B2, B1 und B0 besteht, z.B. 0111. Das Bit B3 wird im vorliegenden Fall nicht verwendet.

Das Bit B0 steuert den Port B0 des Mikroprozessors 20. Wenn es "0" ist, wird dieser Port mit der Minusleitung 24 verbunden, und wenn es "1" ist, wird der Port B0 hochohmig. Dasselbe gilt für die Ports B1 und B2, wie bereits erläutert.

Fig. 3 zeigt nochmals als Ausschnitt den Teil der Schaltung mit den beiden Dioden 88 und 92, und Fig. 4 zeigt die Signale an den Ports B1 und B2 bei verschiedenen Betriebszuständen, wobei "1" bedeutet, daß der Port hochohmig ist (open collector), und "0", daß der Port mit der Minusleitung 24 verbunden ist.

Beim Zustand 98 gilt B1 = 0 und B2 = 1, d.h. beide Dioden 88, 92 sind gesperrt, und es kann kein Strom von einem der Ports B1, B2 zum oder vom Kondensator 84 fließen, so daß dessen Ladung, und damit die Spannung u_{C}, unverändert bleibt. Dadurch bleibt auch das Tastverhältnis TV des PWM-Stellers 60 unverändert, was in Fig. 4 durch horizontale Pfeile symbolisiert ist. Der Zustand 98 entspricht dem Zustand, der während mindestens eines Teils des Meßvorgangs - für die Differenz zwischen Drehzahl-Sollwert (Stellung des Potentiometers 28) und Drehzahl-Istwert (zeitlicher Abstand T_{H} der Impulse Hall) - eingestellt bleibt. Man kann den Zustand 98 als die Neutralstellung bezeichnen, da sich bei ihr am Tastverhältnis TV der Stromimpulse i für den Motor 50 nichts ändert.

Ist die Drehzahl n zu niedrig, also kleiner als die Solldrehzahl n₀, so wird gemäß Spalte 100 der Fig. 4 B1 = 1 und B2 = 1 eingestellt. In diesem Fall sperrt die Diode 88, und die Diode 92 wird leitend, so daß über die Widerstände 95 und 94 ein Ladestrom zum Kondensator 84 fließt und dessen Spannung u_{C} erhöht, wodurch auch das Tastverhältnis TV zunimmt, also der Strom i im Motor 50 zunimmt, was in Fig. 4 durch nach oben zeigende Pfeile symbolisiert ist. Dadurch nimmt die Drehzahl n des Motors 50 zu.

Ist diese Drehzahl zu hoch, so wird gemäß Spalte 102 in Fig. 4 B1 = 0 und B2 = 0 gesetzt. Dadurch sperrt die Diode 92, da der Strom von der Plusleitung 22 über den Widerstand 95 und den Port B1 zur Minusleitung 24 fließt, so daß der Port B1 angenähert das Potential 0 V erhält.Die Diode 88 wird leitend, so daß über sie, den Widerstand 90, und eine interne Verbindung im Mikroprozessor 20 ein Strom vom Kondensator 84 zur Minusleitung 24 fließt und die Spannung u_{C} am Kondensator 84 reduziert, wodurch das Tastverhältnis TV abnimmt, also der Strom i durch den Motor 50 kleiner wird. Dies ist in Fig. 4 durch nach unten zeigende Pfeile symbolisiert. Hierbei nimmt die Drehzahl n entsprechend ab.

Durch die Schaltung gemäß Fig. 3 wird also ein sogenannter Tristate-Ausgang nachgebildet, also ein Prozessorausgang, der außer den Zuständen "0" (Fig. 3, Spalte 102) und "1" (Fig. 3, Spalte 100) auch den Zustand "hochohmig" (Fig. 3, Spalte 98) annehmen kann.

Die Schaltung nach Fig. 3 hat den Vorteil, daß mittels der Widerstände 90 und 94 unterschiedliche Regelparameter einstellbar sind. Die Widerstände 94 und 95 bestimmen zusammen den Regelparameter für "Motor zu langsam", und der Widerstand 90 bestimmt den Regelparameter für "Motor zu schnell". Mit Vorteil wird die Summe der Widerstände 94 und 95 kleiner gewählt (z.B. 46 kΩ) als der Widerstand 90 (z.B. 100 kΩ), d.h. wenn die Drehzahl n zu niedrig ist, wird die Ladung des Kondensators 84 schnell erhöht, so daß beim Anlauf die Drehzahl rasch ansteigt. Umgekehrt wird, wenn die Drehzahl n etwas zu hoch ist, die Ladung des Kondensators 84 nur langsam reduziert, so daß beim Start des Motors keine Oszillationen der Drehzahl auftreten.

Dies zeigt Fig. 5. Dort ist die Kurve 104 für die angegebenen unterschiedlichen Werte der Widerstände 90 und 94 dargestellt, während die Kurve 106 den Fall zeigt, daß die Widerstände 90 und 94 gleich groß sind. Im letzteren Fall dauert es länger, bis die Solldrehzahl n₀ erreicht ist, d.h. das System ist weniger stark gedämpft. Die Möglichkeit, die Widerstände 90 und 94 ungleich groß zu machen, stellt also einen wichtigen Vorteil der Anordnung nach Fig. 3 dar, ebenso die Möglichkeit, gesteuert durch ein Programm, je nach Befehl die Ladung des Kondensators 84 (im wesentlichen) konstantzuhalten (Spalte 90 in Fig. 4), zu erhöhen (Spalte 100), oder zu reduzieren (Spalte 102). Nachfolgend werden auch Varianten zu dieser Schaltung dargestellt und beschrieben.

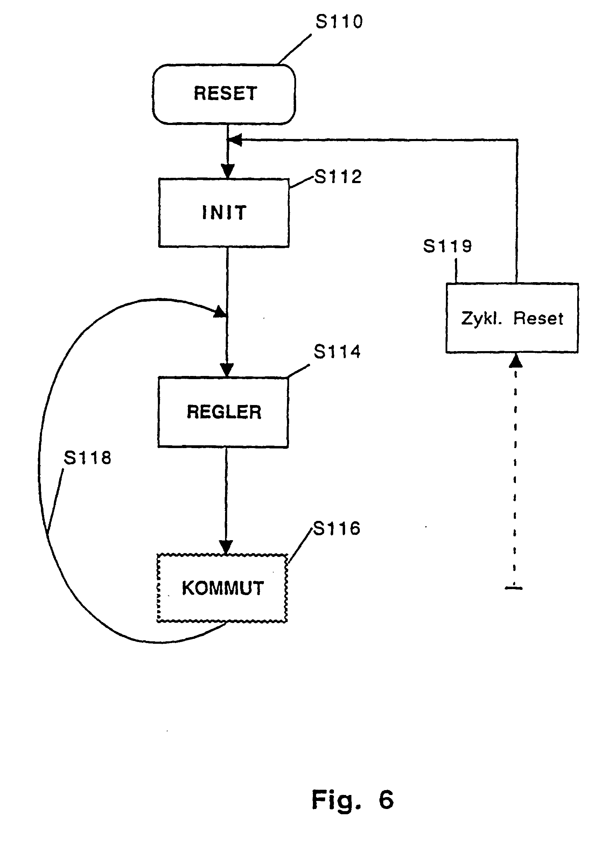

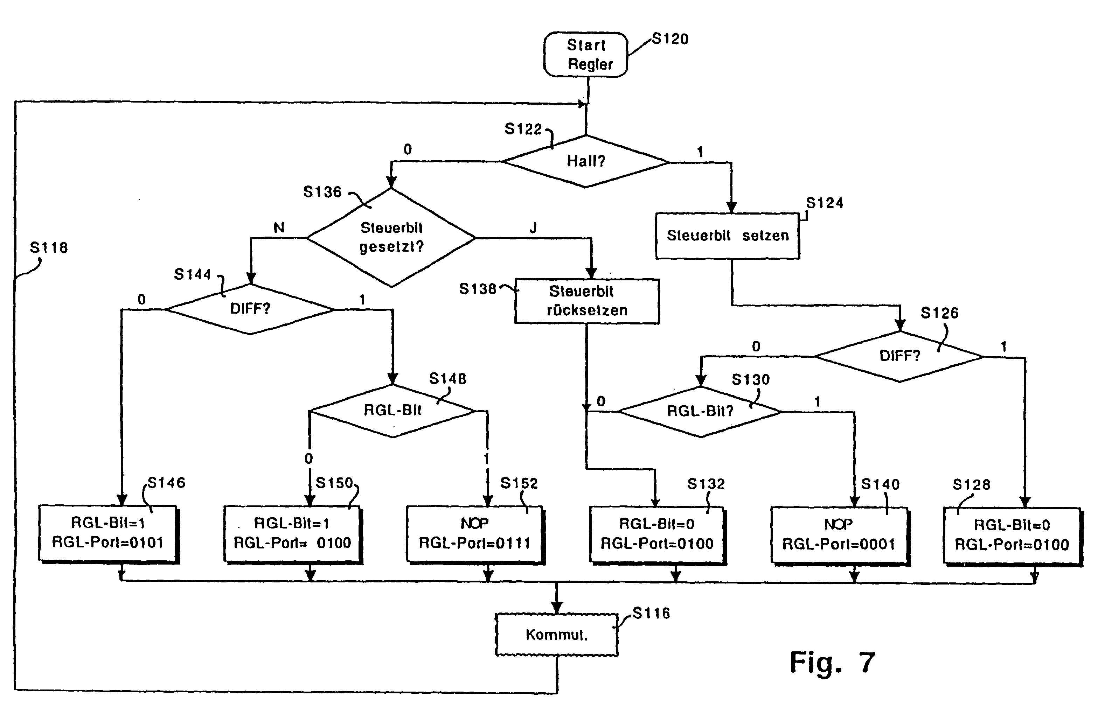

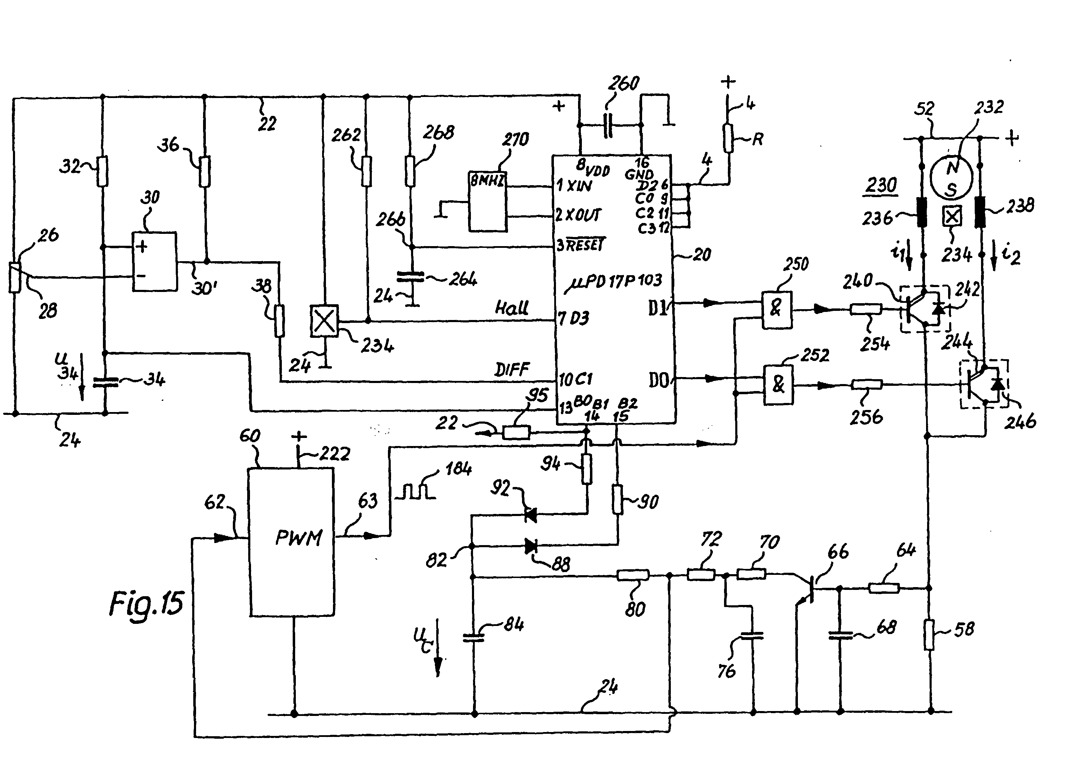

Fig. 6 zeigt den prinzipiellen Ablauf des Regelprogramms in Form eines üblichen Flußdiagramms. Der Schritt S110 ist der Einsprung in das Programm nach einem Reset, z.B. beim Einschalten nach einem Power-Up-Reset. Im Schritt S112 wird die Initialisierung vorgenommen. Hier können Variable und Konstanten geladen werden, welche die für das Programm notwendigen Werte und Zustände vorgeben. Schritt S114 enthält den Regler, dessen Aufbau in Fig. 7 dargestellt ist. Falls der Motor 50 ein elektronisch kommutierter Motor ist, enthält Schritt S116 die Kommutierung. Ein solcher elektronisch kommutierter Motor, und das Programm für seine Kommutierung, werden später anhand der Fig. 15 bis 17 beschrieben. Falls der Motor 50 ein Kollektormotor ist, entfällt der Schritt S116.

Da sich ein Mikroprozessor durch Störimpulse "aufhängen" kann, d.h. daß sein Programm stehenbleibt und nicht mehr weiterläuft, ist bei S119 ein zyklischer Resetvorgang angedeutet, der durch die Drehung des Motors 50 gesteuert wird und z.B. einmal pro Umdrehung vorgenomen werden kann. Hierzu wird verwiesen auf die japanische Patent-Offenlegungsschrift 7-194 170, welche eine Anordnung zum zyklischen Reset bei einem Elektromotor zeigt. Diese ist bei einer Brennkraftmaschine in gleicher Weise möglich ist. Es ist zweckmäßig, eine Anordnung dieser oder ähnlicher Art bei einem Motor gemäß der Erfindung vorzusehen, damit in einer Umgebung mit vielen elektrischen Störimpulsen Schwierigkeiten vermieden werden und der Motor sicher mit der gewünschten Drehzahl läuft. Jedoch ist diese Möglichkeit nicht bei allen Mikroprozessoren gegeben.

Der Schritt S114 (und ggf. der Schritt S116) sind Teil einer Schleife S118, die im Betrieb ständig durchlaufen wird. Sie wird bevorzugt so ausgelegt, daß für einen Durchlauf durch sie eine konstante Zeit benötigt wird, z.B. 20 µs, so daß die Zählung der Zahl von Schleifen eine Zeitmessung ermöglicht. Diese konstante Zeitdauer ist erreichbar durch NOP-Befehle in einzelnen, kürzeren Programmabschnitten, z.B. in den Schritten S152 und S140 (Fig. 7). Auf diese Weise ist eine einfache Zeitmessung dadurch möglich, daß man die Zahl der durchlaufenen Schleifen zählt. Während der zyklischen Resetvorgänge wird die Schleife S118 kurzzeitig verlassen, wie im Flußdiagramm dargestellt.

Fig. 7 zeigt den Aufbau des Reglerteils im einzelnen. Die Angaben bezüglich "RGL-Port" beziehen sich auf das Datenwort gemäß Fig. 2, welches die Ausgänge B2, B1 und B0 des Mikroprozessors 20 steuert. Beispielsweise bedeutet RGL-Port = 0101, daß Bit B0, also das niedrigste Bit, gleich 1 ist, d.h. daß der Kondensator 34 geladen wird, ferner daß B1 = 0 und B2 = 1 sind, d.h. daß gemäß Spalte 98 von Fig. 4 der Kondensator 84 weder geladen noch entladen wird (Neutralstellung).

Bei S120 (Fig. 7) beginnt der Regelvorgang. Im Schritt S122 wird das Signal "Hall" abgefragt, also das Ausgangssignal des Tachogenerators 96. Hat es den Wert "1", so wird im Schritt S124 ein Steuerbit (Register) gesetzt, wodurch gespeichert wird, daß das Signal "Hall" im Augenblick gleich "1" ist. In S126 wird das Signal DIFF am Port C1 des Mikroprozessors 20 abgefragt. Hat es den Wert "1", so ist die Messung der Drehzahl abgeschlossen und im Schritt S128 werden die Vorbereitungen für eine neue Messung getroffen. Hierzu wird dort ein Register namens RGL-Bit auf "0" gesetzt, und das Datenwort RGL-Port = 0100 wird erzeugt, wodurch der Kondensator 34 entladen und die Spannung u_{C} am Kondensator 84 unverändert gehalten wird (Neutralstellung gem. Fig. 4, Spalte 98).

Sofern eine Kommutierung folgt, wird im Schritt S116 die Kommutierung geprüft und ggf. geändert. Dies wird nachfolgend anhand der Fig. 15 bis 17 im einzelnen erläutert.

Nach Durchlaufen der Schleife S118 gelangt das Programm erneut zum Schritt S122. Sofern sich das Signal "Hall" nicht geändert hat (Hall = 1), geht das Programm über die Schritte S124, S126 zu einem Schritt S130, da durch die Entladung des Kondensators 34 das Signal DIFF zu "0" geworden ist. Vom vorhergehenden Schritt S128 steht das Register RGL-Bit auf "0", d.h. das Programm verzweigt bei S130 zum Schritt S132, der mit Schritt S128 identisch ist, d.h. an den Ports B0, B1, B2 treten keine Veränderungen ein.

Anschließend durchläuft das Programm erneut die Schleife S118. Hat sich jetzt das Signal "Hall" (vom Tachogenerator 96) von "1" nach "0" geändert, so verzweigt das Programm im Schritt S122 zu S136. Dort wird das Steuerbit abgefragt, das zuvor in S124 gesetzt worden war. Ist es noch gesetzt, so wird es in S138 zurückgesetzt, um im Programm festzuhalten, daß Hall = 0 ist. Anschließend wird Schritt S132 erneut durchlaufen, um den Kondensator 34 sicher zu entladen und das Signal DIFF sicher zu "0" zu machen.

Letzteres ist notwendig, damit der Kondensator 34 auch wirklich entladen ist, bevor begonnen wird, ihn erneut zu laden. Wenn nämlich der Wechsel des Signals "Hall" von "1" auf "0" auftritt, während das Programm den Schritt S140 abarbeitet, der nachfolgend beschrieben wird, kann das Signal DIFF hierbei gleich "1" sein oder werden. Dieses Problem tritt besonders auf, wenn der Drehzahl-Sollwert (am Potentiometer 26) rasch von hohen zu niedrigen Drehzahlen geändert wird. Da im Schritt S132 der Kondensator 34 auch in diesem Sonderfall entladen wird, ergeben sich keine Probleme.

Beim nächsten Durchlauf des Programms, wobei weiterhin Hall = 0 ist, ist das Steuerbit nicht mehr gesetzt, und das Programm verzweigt zu S144. Dort wird das Signal DIFF abgefragt, also der Ladezustand des Kondensators 34. Ist DIFF = 0, so wird in S146 das Register RGL-Bit auf "1" gesetzt, und das Datenwort gemäß Fig. 2 wird auf 0101 eingestellt. Hierdurch kann die Ladung des Kondensators 34 beginnen, d.h. die Messung der Differenz zwischen gewünschter Drehzahl und tatsächlicher Drehzahl hat begonnen.

Beim nächsten Durchlauf durch das Programm (für Hall = 0) geht dieses erneut über die Schritte S122 und S136 zu S144. Hat sich in der Zwischenzeit der Kondensator 34 so weit geladen, daß DIFF = 1 geworden ist, so ist die Messung der Drehzahl abgeschlossen und das Programm verzweigt zu S148. Dort wird das Register RGL-Bit abgefragt.

Dieses hat vom Schritt S146 den Wert "1", und deshalb geht das Programm zu S152. Dort steht ein NOP-Befehl oder ein sonstiger "inerter" Befehl, der, wie erläutert, dazu dient, auch für diesen Fall die Zeit für einen Schleifendurchlauf gleich lang zu machen wie in den anderen Fällen. Außerdem erhält in S152 das Datenwort RGL-Port gemäß Fig. 2 den Wert 0111, d.h. der Kondensator 34 wird weiterhin geladen, um das Signal DIFF auf dem Wert "1" zu halten, und gemäß Spalte 100 von Fig. 4 wird jetzt der Kondensator 84 über die Widerstände 94, 95 und die Diode 92 geladen, so daß die Spannung u_{C} ansteigt. Da im vorliegenden Fall das Signal DIFF im Bereich Hall = 0 zu "1" wurde, ergibt sich, daß die Drehzahl n des Motors 50 zu niedrig ist, und durch das Erhöhen der Spannung u_{C} erhält der Motor 50 - über den PWM-Steller 60 - einen höheren Strom, so daß seine Drehzahl ansteigt.

Ist die Drehzahl des Motors zu hoch, so behält das Signal DIFF während Hall = 0 den Wert "0". Hier geht nach dem Wechsel des Hallsignals, also auf Hall = 1, und solange DIFF = 0 ist, das Programm über die Schritte S122, S124, S126 und S130 zum bereits erwähnten Schritt S140. Dort befindet sich ebenfalls ein NOP-Befehl (aus den gleichen Gründen wie im Schritt S152), und das Datenwort RGL-Port gemäß Fig. 2 erhält im Schritt S140 den Wert 0001, d.h. der Kondensator 34 wird weiterhin geladen (B0 = 1), und gemäß Spalte 102 von Fig. 4 wird der Kondensator 84 über den Widerstand 90 und die Diode 88 entladen, so daß die Drehzahl etwas reduziert wird. Die Entladung des Kondensators 84 wird solange fortgesetzt, bis entweder - während Hall = 1 - der Wert DIFF = 1 wird, wonach Schritt S128 ausgeführt, die Entladung des Kondensators 84 beendet, und der Kondensator 34 entladen wird, oder bis das Drehzahlsignal wieder zu Hall = 0 wird, wobei dann in S132 der Kondensator 34 entladen und die Entladung des Kondensators 84 beendet wird.

Sofern bei einem Durchlauf durch die Schleife S118 das Programm S140 durchläuft, weil das Signal DIFF noch nicht zu "1" geworden ist, und sich anschließend das Signal "Hall" von "1" nach "0" ändert, durchläuft das Programm die Schritte S122, S136, S138 und S132. Hierbei kann das Signal DIFF zu "1" werden, und an sich würde dann im Schritt S132 durch B0 = 0 der Kondensator 34 entladen. Die Entladezeit ist aber in diesem Fall sehr kurz, so daß DIFF auch beim nächsten Schleifendurchlauf den Wert "1" haben kann.

In diesem Sonderfall, also bei DIFF = 1, geht das Programm beim nächsten Schleifendurchlauf über die Schritte S136, S144, S148 zum Schritt S150. Dort wird das RGL-Bit = 1 gesetzt, und das Datenwort RGL-Port (Fig. 2) wird zu 0100 gemacht, so daß der Kondensator 34 durch B0 = 0 sicher entladen wird, bevor anschließend - in der nächsten Schleife - im Schritt S146 eine neue Ladung des Kondensators 34 beginnt.

Durch die Binärbaumstruktur der Fig. 7 erhält man einen sehr einfachen Aufbau eines I-Reglers mit wenigen Programmschritten und - vor allem - sehr schneller Programmausführung, und die Ladung oder Entladung des Kondensators 84 ist abhängig von Vorzeichen und Größe der Differenz zwischen gewünschter Drehzahl no und tatsächlicher Drehzahl n, also von der sogenannten Regelabweichung. Sofern die Regelabweichung gleich 0 ist, erhält der Kondensator 34 gelegentlich alternierend einen kurzen Ladeimpuls und beim nächsten Regelvorgang einen kurzen Entladeimpuls, so daß sich seine Ladung, und damit die Spannung u_{C}, per saldo nicht ändert. - Wie aus der vorstehenden Beschreibung ersichtlich, wird während jeder Periode T_{H} (Fig. 1) des Signals "Hall" die Drehzahl einmal korrigiert.

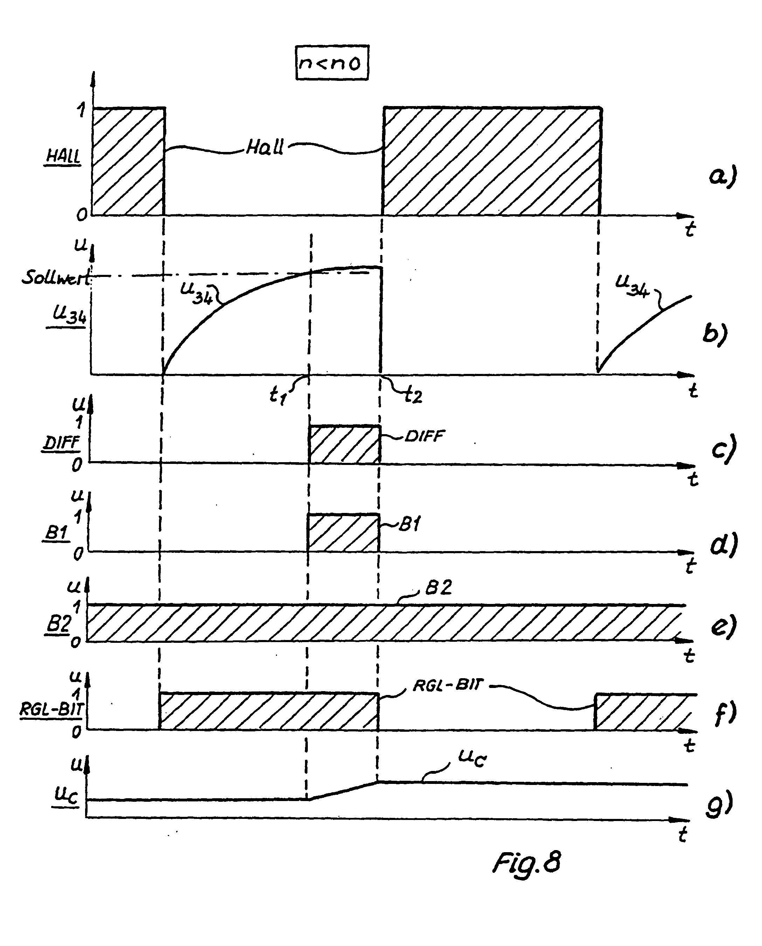

Fig. 8 zeigt graphisch die Abläufe für den Fall, daß die Drehzahl zu niedrig ist. In Zeile a) ist das Signal "Hall" dargestellt, in Zeile b) das Signal u₃₄ am Kondensator 34. Letzterer wird bei einer Änderung des Hallsignals von "1" nach "0" durch den Schritt S132 (oder den Schritt S150) der Fig. 7 entladen, und anschließend beginnt im Schritt S146 seine Ladung. Da in Fig. 8 die Drehzahl zu niedrig ist, wird zum Zeitpunkt t1 das Signal DIFF = 1, also während Hall = 0, und dadurch werden in S152 die Ports B1 und B2 auf "1" eingestellt, so daß gemäß Spalte 100 von Fig. 4 der Kondensator 84 über die Widerstände 94, 95 und die Diode 92 geladen und die Drehzahl des Motors 50 durch Erhöhung des Tastverhältnisses TV erhöht wird.

Nach dem Wechsel des Hallsignals von "0" auf "1" zum Zeitpunkt t2 wird im Schritt S128 der Kondensator 34 entladen, wodurch DIFF = 0 wird, ebenso B1 (vgl. die Erläuterung in Fig. 2), was die Ladung des Kondensators 84 beendet, d.h. dieser wird nur im Zeitraum t1 bis t2 geladen. Je niedriger die tatsächliche Drehzahl im Verhältnis zur gewünschten Drehzahl ist, umso mehr wandert in Fig. 8 der Zeitpunkt t1 nach links, und umso länger wird der Kondensator 84 geladen, wie in Fig. 8, Zeile g) dargestellt. Gemäß Fig. 8, Zeile e) bleibt in diesem Fall während der ganzen Zeit das Signal B2 auf "1", und das Register RGL-Bit hat den Wert "1", solange Hall = 0 ist.

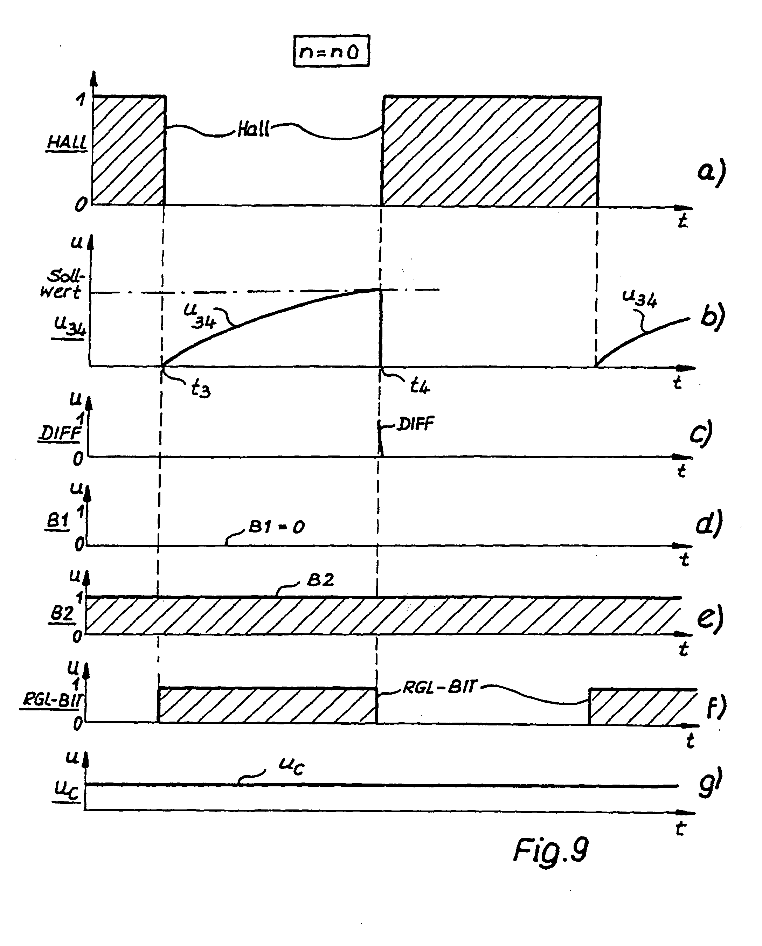

Fig. 9 zeigt den Ablauf für den Fall, daß die tatsächliche Drehzahl n der gewünschten Drehzahl no entspricht. Auch hier beginnt die Ladung des Kondensators 34 beim Wechsel des Hallsignals von "1" auf "0" (Schritt S146; Zeitpunkt t3), und beim Wechsel des Hallsignals von "0" auf "1", also zum Zeiptunkt t4, erreicht das Signal u₃₄ den am Potentiometer 26 eingestellten Sollwert, wodurch DIFF = 1 wird. Dadurch geht das Programm zum Schritt S128, wo der Kondensator 34 entladen wird (durch B0 = 0), und an der Ladung des Kondensators 84 ändert sich folglich nichts.

Sofern der Zeitpunkt t4 ganz kurz vor dem Wechsel des Signals "Hall" von "0" auf "1" liegt, wird im Schritt S152 der Kondensator 84 ganz kurzzeitig etwas geladen, und sofern t4 ganz kurz nach dem Hallwechsel liegt, wird der Kondensator 84 im Schritt S140 ganz kurzzeitig etwas entladen, nämlich jeweils während eines Durchlaufs durch die Reglerschleife, also z.B. während 20 µs.

Gemäß Fig. 9, Zeilen d), e) und f) bleibt das Signal B1 hier ständig auf "0", das Signal B2 bleibt ständig auf "1", und das Register RGL-Bit bleibt zwischen t3 und t4 auf "1". Gemäß Zeile g) ändert sich an der Ladung des Kondensators 84 nichts.

In der Praxis treten in diesem Fall, wie bereits beschrieben, alternierend ganz kurze Impulse auf, die abwechselnd den Kondensator 84 ganz wenig laden und ganz wenig entladen, so daß sich dessen Ladungszustand nach Erreichen der Solldrehzahl praktisch nicht mehr ändert (I-Verhalten des Reglers).

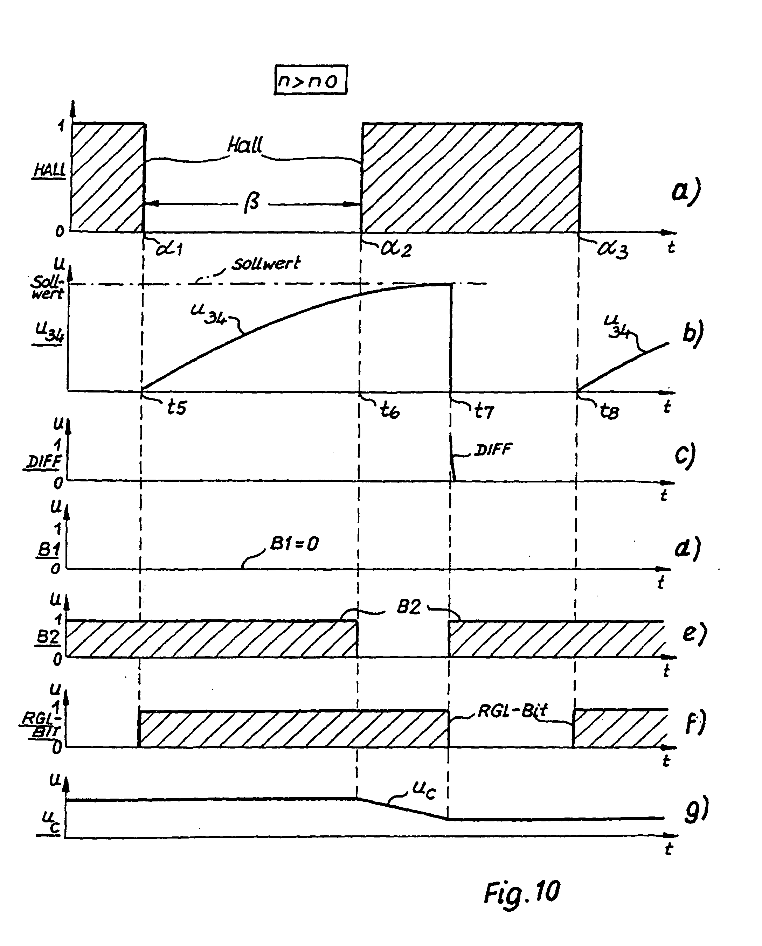

Fig. 10 zeigt, was geschieht, wenn die Drehzahl zu hoch ist.
Zum Zeitpunkt t5 beginnt im Schritt S146 die Ladung des Kondensators 34 (B0 = 1), also dann, wenn das Signal "Hall" von "1" nach "0" geht. Gemäß S146 sind B1 = 0 und B2 = 1, d.h. die Ladung des Kondensators 84 ändert sich zunächst nicht. Das Register RGL-Bit wird zum Zeitpunkt t5 zu "1".

Im Zeitpunkt t6, also beim Hallwechsel von "0" auf "1", ist DIFF = 0 und das Register RGL-Bit weiter auf "1", d.h. im Schritt S140 wird weiterhin B0 = 1 gehalten, der Kondensator 34 wird weiterhin geladen, und die Werte für B1 und B2 werden zum Zeitpunkt t6 beide auf "0" gesetzt, so daß ab t6 gemäß Spalte 102 von Fig. 4 der Kondensator 84 über die Diode 88 und den Widerstand 90 entladen wird, um die Drehzahl zu reduzieren.

Zum Zeitpunkt t7 erreicht u₃₄ den am Potentiometer 26 eingestellten Sollwert und das Signal DIFF = 1 wird erzeugt. Das Programm geht folglich zum Schritt S128, wo der Kondensator 34 entladen und die Entladung des Kondensators 84 beendet wird,
wobei das Register RGL-Bit auf "0" gesetzt wird. Zeile g) von Fig. 10 zeigt die Reduzierung der Spannung u_{C} am Kondensator 84 zwischen den Zeitpunkten t6 und t7. Diese ist zur Verdeutlichung übertrieben dargestellt, ebenso wie die Erhöhung von u_{C} in Fig. 8.

Sollte bis zum Zeitpunkt t8 (Änderung des Hallsignals von "1" nach "0") das Signal DIFF = 1 nicht auftreten, wird der Kondensator 84 zwischen t6 und t8 entladen, und der Kondensator 34 wird im Zeitpunkt t8 automatisch entladen. Danach beginnt eine neue Messung, d.h. ab diesem Zeitpunkt wird der Kondensator 34 erneut geladen. Dieser Fall tritt gewöhnlich nur auf, wenn die gewünschte Drehzahl am Port 26 auf einen niedrigen Wert verstellt wird; der Motor 50 erhält dann einen niedrigen Strom und wird durch die Last, die er antreibt, abgebremst, bis die gewünschte niedrigere Drehzahl erreicht ist.

Die beschriebene Regelanordnung ist sehr genau, und sie wird umso genauer, je mehr Signale "Hall" pro Umdrehung des Motors erzeugt werden, denn pro Periode T_{H} (Fig. 1 und 10) des Signals "Hall" wird die Drehzahl einmal korrigiert. In der Praxis läßt sich durch die Erfindung die gewünschte Drehzahl mit hoher Genauigkeit einhalten.

Zu Fig. 10 ist ergänzend darauf hinzuweisen, daß die Zeitpunkte t5, t6 und t8 jeweils einer bestimmten Winkelstellung des Motors 50 entsprechen. Z.B. kann der Zeitpunkt t5 einer vorgegebenen Winkelstellung α₁ = 0° mech. entsprechen, der Zeitpunkt t6 dem Winkel α₂ = 180° mech., und der Zeitpunkt t8 dem Winkel α₃ = 360° mech. (= 0° mech.). Die Ladung des Kondensators 34 beginnt also in diesem Fall bei der vorgegebenen Winkelstellung α₁, und die Messung erfolgt nach Ablauf eines vorgegebenen Winkelwegs β (Fig. 10a) relativ zur Winkelstellung α₁, also bei der Rotorstellung α₂. Wenn das Signal DIFF = 1 im Winkelbereich zwischen α₁ und α₂ auftritt, ist der Motor zu langsam, und wenn es im Winkelbereich zwischen α₂ und α₃ auftritt, ist der Motor zu schnell. Bei diesem Beispiel wäre also ein Meß- und Regelzyklus immer innerhalb 360° mech. beendet, also innerhalb einer Rotorumdrehung.

Derselbe Meß- und Regelzyklus kann aber während einer Rotorumdrehung auch öfters stattfinden, z.B. 10 oder 100 Mal, wodurch dann die Regelung noch genauer wird. Wichtig erscheint, daß der Zeitpunkt t5 einer bestimmten Drehstellung α₁ des Motors entspricht, ebenso der Zeitpunkt t6 einer bestimmten im Betrieb darauffolgenden Drehstellung α₂, wobei zwischen α₁ und α₂ ein vorgegebener Winkelweg β liegt. Würde β eine Größe von 360° mech. haben, so würden die Drehstellungen α₁ und α₂ räumlich, aber nicht zeitlich, übereinstimmen,und ein Regelzyklus würde dann zwei Umdrehungen dauern. (Der Tachogenerator 96 würde in diesem Fall über ein Untersetzungsgetriebe angetrieben.) Auch braucht der Winkelweg β nicht mit dem Winkelabstand α₂ bis α₃ übereinzustimmen. Z.B. könnte α₁ gleich 0° mech., α₂ gleich 10° mech. und α₃ gleich 30° mech. sein. In der Praxis verwendet man häufig ein Hallsignal, das auch für die Kommutierung verwendet wird, und in diesem Fall sind die Winkelabstände gleich groß.

Wenn die Drehzahl zu niedrig ist, stellt der Winkelabstand zwischen dem Auftreten des Signals DIFF = 1 und der Drehstellung α₂ die Größe der (negativen) Regelabweichung dar, und wenn die Drehzahl zu hoch ist, stellt der Winkelabstand zwischen der Drehstellung α₂ und dem Winkel bei Auftreten des Signals DIFF = 1 die (positive) Regelabweichung dar. Dadurch, daß während dieser Winkelabstände der Kondensator 84 entweder geladen oder entladen wird, gelingt es, einfach und mit geringem Aufwand die Drehzahl n präzise auf einem gewünschten Wert zu halten.

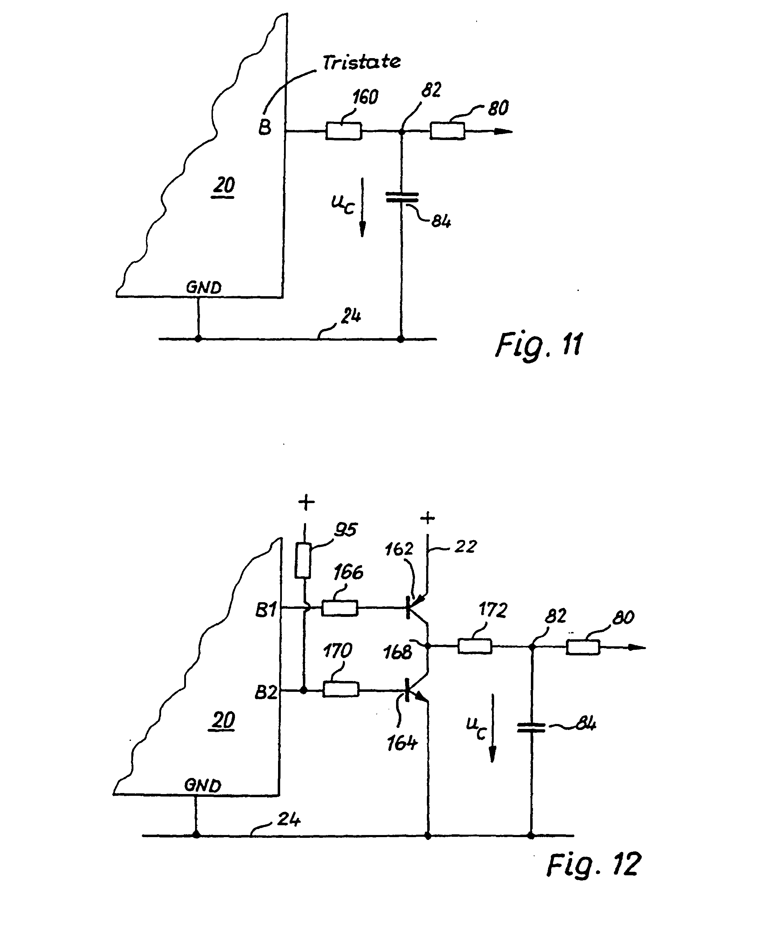

Fig. 11 zeigt eine Variante mit einem sogenannten Tristate-Port, wie er bei manchen Mikroprozessoren verfügbar ist. Dabei kann der Port B z.B. umgeschaltet werden zwischen den beiden Potentialen +5 V, 0 V und einem hochohmigen Zustand, dem sogenannten open-collector, und dementsprechend kann die Ladung des Kondensators 84, der über einen Widerstand 160 an den Port B angeschlossen ist, dadurch verändert werden, daß der Zustand des Ports B, gesteuert durch das Programm, entsprechend verändert wird. Nachteilig ist, daß die Regelparameter für "Drehzahl zu hoch" und "Drehzahl zu niedrig" durch den Widerstand 160 vorgegeben und deshalb identisch sind.

Fig. 12 zeigt die Nachbildung eines Tristate-Ports mit Hilfe eines pnp-Transistors 162 und eines npn-Transistors 164. Der Emitter des Transistors 162 ist mit der Plusleitung 22, seine Basis - über einen Widerstand 166 - mit dem Port B1, und sein Kollektor über einen Knotenpunkt 168 mit dem Kollektor des Transistors 164 verbunden. Die Basis des Transistors 164 ist über einen Widerstand 170 mit dem Port B2 verbunden, sein Emitter mit der Minusleitung 24. An den Knotenpunkt 168 ist über einen Widerstand 172 der Kondensator 84 angeschlossen; die übrige Schaltung entspricht (auch für Fig. 11) der Fig. 1, weshalb dieselben Bezugszeichen verwendet werden wie dort.

Werden in Fig. 12 die beiden Transistoren 162 und 164 gesperrt, indem die Basis des Transistors 162 auf den logischen Wert "1" und die Basis des Transistors 164 auf den logischen Wert "0" gelegt wird, so wird die Spannung u_{C} am Kondensator 84 nicht verändert.

Wird der Transistor 162 eingeschaltet, indem seine Basis auf den logischen Wert "0" gelegt wird, so wird der Kondensator 84 über den Widerstand 172 geladen, und die Spannung u_{C} erhöht sich.

Dabei muß der Transistor 164 gesperrt sein.

Wird der Transistor 162 gesperrt und der Transistor 164 leitend, weil der Port B2 durch das Signal B2=1 hochohmig gesteuert wird, so erhält der Transistor 164 über die Widerstände 95 und 170 einen Basisstrom. Der Kondensator 84 wird über den Widerstand 172 und den Transistor 164 entladen, und die Spannung u_{C} sinkt entsprechend.

Naturgemäß sind auch andere Anordnungen dieser Art möglich.

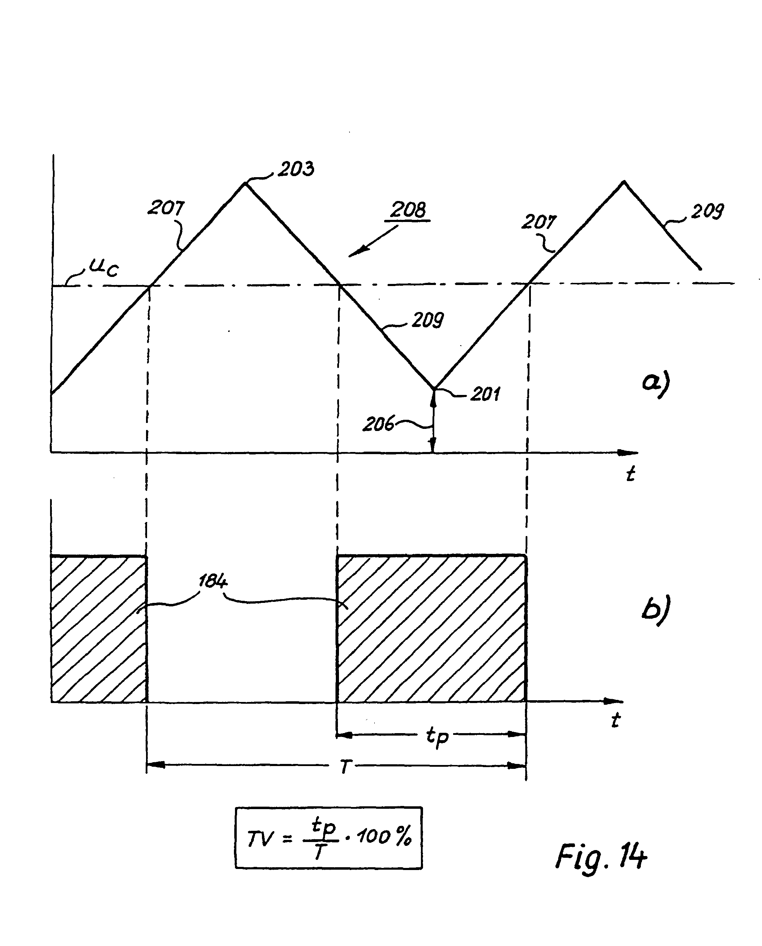

Fig. 13 zeigt den Aufbau eines PWM-Stellers 60, wie er in der Schaltung gemäß Fig. 1 mit Vorteil verwendet werden kann. Dieser enthält als wesentliche Teile einen Dreiecksoszillator 180, der z.B. mit 25 kHz schwingt, ferner einen Komparator 182, an dessen Ausgang ein impulsförmiges PWM-Signal 184 auftritt, das auch in Fig. 14b dargestellt ist und das den Strom durch den Transistor 54 (Fig. 1) steuert. Der dargestellte und anhand von Zahlenwerten erläuterte PWM-Steller 60 ist für eine Betriebsspannung von 12 V ausgelegt, die zwischen einer Plusleitung 222 und der Minusleitung 24 liegt.

Der Dreiecksoszillator 180 enthält einen Komparator 186, der ggf. zusammen mit dem Komparator 182 als Doppelkomparator ausgebildet ist (z.B. LM2901). Beide sind in der üblichen Weise zur Spannungsversorgung an die Plusleitung 222 und an die Minusleitung 24 angeschlossen. Vom Ausgang 188 des Komparators 186 führt ein Mitkopplungswiderstand 190 zu dessen Pluseingang 192, und ebenso führt ein Gegenkopplungswiderstand 194 vom Ausgang 188 zum Minuseingang 196 des Komparators 186. Ein Kondensator 198 liegt zwischen dem Minuseingang 196 und der Minusleitung 24. Der Ausgang 188 ist ferner über einen Widerstand 200 mit der Plusleitung 222 verbunden. Der Pluseingang 192 ist über zwei gleich große Widerstände 202, 204 mit der Plusleitung 222 bzw. der Minusleitung 24 verbunden.

Ein derart aufgebauter Dreiecksoszillator 180 schwingt mit einer Frequenz von z.B. 25 kHz, und die von ihm erzeugte Dreiecksspannung 208 verläuft etwa symmetrisch zur halben Spannung zwischen den Leitungen 222 und 24. Z. B. beträgt bei einer Betriebsspannung von 12 V die Spannung bei der unteren Spitze 201 (Fig. 14a) des Dreieckssignals etwa 2 V, und bei der oberen Spitze 203 etwa 9 V. Das Dreieckssignal 208 hat also einen Offset 206 zur Spannung 0 V, also zum Potential der Minusleitung 24, und dieser Offset kann z.B. etwa 2 V betragen, aber auch größer oder kleiner sein.

Das Dreieckssignal 208 am Minuseingang 196 wird dem Minuseingang 210 des Komparators 182 zugeführt. Dessen Pluseingang 212 entspricht dem Eingang 62 der Fig. 1, und diesem Eingang 212 wird über den hochohmigen Widerstand 80 (Fig. 1) die Spannung u_{C} am Kondensator 84 als erstes Stellsignal zugeführt, wie bei Fig. 1 beschrieben. Ebenso wird diesem Pluseingang 212 das Ausgangssignal des von den Teilen 70, 72, 76 gebildeten T-Filters zugeführt, welches. Signal durch die Höhe des Stromes i im Motor 50 bestimmt ist, d.h. je höher der Strom durch den Motor 50, umso mehr wird - ab einem vorgegebenen Schwellenwert - der Transistor 66 leitend und zieht das Potential am Pluseingang 212 nach unten. Dies reduziert das Tastverhältnis TV, umso mehr, je höher der Motorstrom wird.

Der Ausgang 216 des Komparators 182 ist über einen Widerstand 218 mit der Plusleitung 222 verbunden, stellt den Ausgang 63 des PWM-Stellers 60 dar, vgl. Fig. 1, und steuert den Transistor 54 (Fig. 1), so daß dieser, mit dem augenblicklichen Tastverhältnis TV, ständig ein- und ausgeschaltet wird.

Zur Erläuterung der Wirkungsweise des Dreiecksgenerators 180 wird auf Fig. 13 Bezug genommen. Dort sind drei Potentiale angegeben, nämlich P1 am Minuseingang 196 des Komparators 186, P2 an dessen Pluseingang 192, und P3 an dessen Ausgang 188.

Beim Einschalten der Anordnung wird zunächst durch den (entladenen) Kondensator 198 der Wert P1 auf dem Potential der Minusleitung 24 gehalten. P3 nimmt folglich den Wert der Plusleitung 222 an, da in diesem Fall das Potential des Pluseingangs 192 des Komparators 186 höher ist als das Potential P1 des Minuseingangs 196. Der Kondensator 198 beginnt deshalb, sich über die Widerstände 200 und 194 zu laden. Dies ist in Fig. 14 der ansteigende Teil 207 des Dreieckssignals 208, welches dem Potential P1, also der Spannung am Kondensator 198, entspricht. Der Wert P2 ergibt sich aus
a) der Parallelschaltung der Widerstände 202, 200 und 190, und
b) der Größe des unteren Spannungsteilerwiderstands 204.

Die Widerstände 202 und 204 sind bevorzugt gleich groß, z.B. je 10 kΩ, der Widerstand 190 hat z.B. 4,3 kΩ, und der Widerstand 200 z.B. 2,2 kΩ. Der Widerstand 194 hat z.B.15 kΩ. Der Widerstand 200 hat z.B. 2,2 kΩ, der Widerstand 218 33 kΩ, und der Kondensator 198 1 nF. Bei einer Betriebsspannung von 12 V zwischen den Leitungen 222 und 24 beträgt das Potential P2 in diesem Fall etwa 9 V.

Durch das Aufladen des Kondensators 198 wird schließlich P1 höher als P2, und dadurch schaltet der Ausgang 188 auf das Potential der Minusleitung 24 um, d.h. das Potential P3 macht einen Sprung in negativer Richtung. Deshalb beginnt nun der Kondensator 198, sich über den Widerstand 194 und den Komparator 186 zu entladen, und dies ist in Fig. 14a der abfallende Teil 209 des Dreieckssignals 208. P2, also der Schwellwert des Komparators 186, ändert sich hierdurch ebenfalls, und ergibt sich nun aus
a) der Parallelschaltung der Widerstände 204 und 190, und
b) dem Spannungsteilerwiderstand 200.
Dieses neue Potential P2 beträgt etwa 2 V.

Fällt durch die Entladung des Kondensators 198 P1 unter P2, so schaltet der Komparator 186 wieder auf "Ein", d.h. das Potential P3 an seinem Ausgang wird wieder hoch.

Der beschriebene Vorgang wiederholt sich periodisch, und P1 steigt deshalb wieder an bis zum Potential P2, das durch die Widerstände 200, 190 und 202 bestimmt ist. Danach springt P3 (am Ausgang 188 des Komparators 186) wieder auf das Potential der Minusleitung 24, etc. Hierdurch entsteht das Dreieckssignal 208 mit z.B. 25 kHz.

Die Ladezeit des Kondensators 198 ergibt sich durch den Wert der Serienschaltung der Widerstände 200 und 194. Seine Entladezeit ergibt sich durch den Widerstand 194. Das Potential P2 am Pluseingang 192 schwankt bei den beschriebenen Werten etwa zwischen +9 V und +2 V und liegt etwa symmetrisch zu einer mittleren Spannung von z.B. +5,5 V, die etwa der halben Spannung zwischen den Leitungen 222 und 24 entspricht. Eine kleine Unsymmetrie des Signals 208 ergibt sich durch den Widerstand 200.

Wichtig erscheint, daß ein PWM-Verhältnis von 0 % bereits bei einer Spannung u_{C} von +2 V und darunter erreicht wird, so daß im Spannungsbereich 0 bis 2 V der Motorstrom i auf Null gehalten wird. Dies ist wichtig bei einer Strombegrenzung der dargestellten Art, da auch bei einem hohen Wert des Signals am Meßwiderstand 58 (Fig. 1) also einem hohen Motorstrom i, das Signal am Widerstand 72, das dem Pluseingang 212 des Komparators 182 zugeführt wird, nicht völlig bis auf das Potential der Minusleitung 24 fällt, sondern etwas positiv bleibt. Diese kleine Restspannung liegt aber dann im Spannungsbereich von 0 bis 2 V (Offset 206 in Fig. 14a), innerhalb dessen das PWM-Verhältnis auf 0 % eingestellt wird, so daß die Strombegrenzung trotz solcher kleinen Restspannungen sicher funktioniert. Im Betrieb fällt also das Potential P1 (am Minuseingang 210 des Komparators 182) nicht unter +2 V, so daß jedes Potential am Pluseingang 212 dieses Komparators, das unter 2 V liegt, ein Tastverhältnis des PWM-Signals 184 von 0 % zur Folge hat. Im normalen Betrieb bewirkt die Strombegrenzung nur eine Reduzierung des Motorstroms, d.h. das Potential am Eingang 212 liegt dann im Bereich oberhalb 2 V, entsprechend einem Tastverhältnis TV von größer als 0 %, aber das Tastverhältnis wird durch das Einsetzen der Strombegrenzung in Richtung zu einem niedrigeren Wert verschoben.
Durch den Offsetbereich 206 wird auch vermieden, daß bei Transistoren 66 (Fig. 1) mit stärkeren Toleranzabweichungen eine fehlerhafte Strombegrenzung auftritt.

Im Betrieb erzeugt der Dreiecksoszillator 180 die in Fig. 14a dargestellte dreieckförmige Spannung 208. Je nach der Höhe des Potentials am Pluseingang 212 des Komparators 182, das in Fig. 14a mit u_{C} bezeichnet ist, erhält man am Ausgang des Komparators 182 Rechteckimpulse 184 mit einer Frequenz von z.B. 25 kHz, die umso kürzer werden, je niedriger das Potential am Pluseingang 212 wird. Die Höhe dieses Potentials bestimmt also das Tastverhältnis der Impulse 184. Wird das Potential am Eingang 212 positiver, so nimmt das Tastverhältnis und damit der Motorstrom i zu; wird dieses Signal negativer, nehmen Tastverhältnis und Motorstrom i ab.

Im Normalbetrieb wird dem Pluseingang 212 über den hochohmigen Widerstand 80 ein positives erstes Stellsignal zugeführt, und dieses bestimmt dann das Tastverhältnis des PWM-Signals 184. Nimmt jedoch der Strom durch den Motor 50 über einen bestimmten Grenzwert hinaus zu, so wird der Transistor 66 leitend, und dadurch entsteht am Pluseingang 212 ein reduziertes Potential, d.h. dieses verschiebt sich in negativer Richtung, weil ein Strom vom Eingang 62 über den Transistor 66 zur Minusleitung 24 fließt. Dadurch nimmt das Tastverhältnis TV der PWM-Impulse 184 ab, umso mehr, je höher der Motorstrom wird. Auf diese Weise erhält man eine sanfte Strombegrenzung, die praktisch in analoger Weise arbeitet und keine zusätzlichen Motorgeräusche oder zusätzlichen EMV-Störungen verursacht.

Fig. 15 zeigt die Ausgestaltung der Erfindung bei einem elektronisch kommutierten Motor 230, von dem bei 232 schematisch ein permanentmagnetischer Rotor angedeutet ist, welcher durch sein Magnetfeld einen Hall-IC 234 steuert, der in Fig. 15 auch auf der linken Seite nochmals dargestellt ist. Der Motor 230 ist als sogenannter zweiphasiger Motor mit zwei Wicklungssträngen 236, 238 dargestellt. Naturgemäß eignet sich die Erfindung für jede Art von elektronisch kommutiertem Motor, z.B. mit drei oder vier Strängen. - Die Stränge 236, 238 erhalten im Betrieb alternierend Strom, vgl. hierzu als Beispiel die DE 23 46 380 C2, die einen zweisträngigen, zweipulsigen Motor zeigt. (Zweipulsig bedeutet, daß während einer Drehung des Rotors 232 um 360° el. während der einen Hälfte der Drehung der Strang 236 und während der anderen Hälfte der Drehung der Strang 238 Strom erhält, also zwei Stromimpulse pro 360° el., wobei diese beiden Stromimpulse durch eine PWM-Drehzahlregelung in eine Vielzahl von Einzelimpulsen unterteilt sein können.)

Zur Steuerung des Stromes i₁ im Strang 236 dient ein npn-Darlingtontransistor 240 mit Freilaufdiode 242, und zur Steuerung des Stromes i₂ im Strang 238 dient ein npn.

Darlingtontransistor 244 mit Freilaufdiode 246. Die Emitter der Transistoren 240, 244 sind miteinander und über den (aus Fig. 1 bekannten) Strommeßwiderstand 58 mit der Minusleitung 24 verbunden.

In Fig. 15 werden gleiche oder gleichwirkende Teile wie in Fig. 1 mit denselben Bezugszeichen bezeichnet und gewöhnlich nicht nochmals beschrieben. Eine bevorzugte Ausführungsform des PWM-Stellers 60 ist in Fig. 13 ausführlich dargestellt.

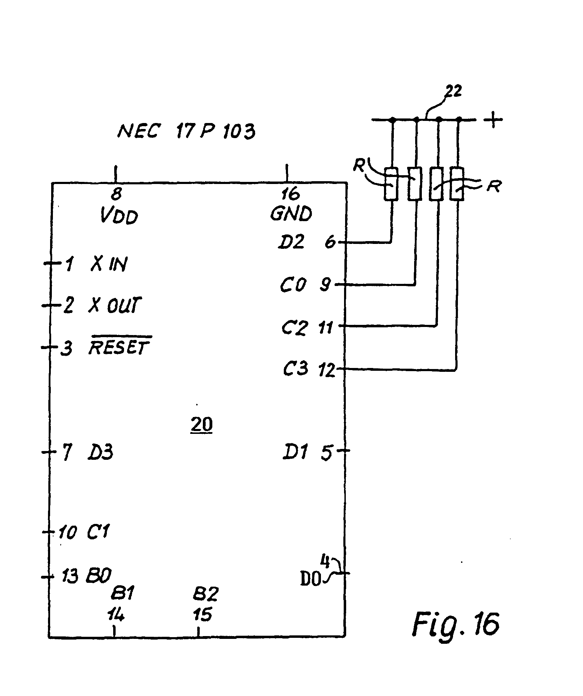

Der Transistor 240 wird von einem Port D1 (vgl. Fig. 16) des Mikroprozessors 20 über ein UND-Glied 250 gesteuert, dessen anderem Eingang das Ausgangssignal 184 vom PWM-Steller 60 zugeführt wird. Die Form dieses Ausgangssignals 184 ist in Fig. 15 schematisch dargestellt. Es handelt sich um Rechteckimpulse mit z.B. 25 kHz. Die Breite dieser Impulse wird durch die Höhe der Spannung am Eingang 62 des PWM-Stellers 60 bestimmt. Der Transistor 240 wird nur leitend gesteuert, wenn sowohl am Ausgang 63 des PWM-Stellers 60 wie am Ausgang D1 des Mikroprozessors 20 das logische Signal "1" vorhanden ist.

Ebenso wird der Transistor 244 von einem Port D0 (Fig. 16) des Mikroprozessors 20 über ein UND-Glied 252 gesteuert, dessen anderem Eingang das Ausgangssignal 184 vom PWM-Steller 60 zugeführt wird. Der Transistor 244 wird also nur leitend gesteuert, wenn sowohl am Ausgang 63 des PWM-Stellers 60 wie am Ausgang D0 des Mikroprozessors 20 das logische Signal "1" vorhanden ist.

Zwischen dem Ausgang des UND-Glieds 250 und der Basis des Transistors 240 liegt ein Widerstand 254, und analog beim Transistor 244 ein Widerstand 256.

Dem Eingang V_{DD} (Fig. 16) des Mikroprozessors 20 wird die Spannung der Plusleitung 22 (z.B. 5 V) zugeführt. Zwischen diesem Eingang und dem Eingang GND liegt ein kleiner Kondensator 260, um Störimpulse vom Mikroprozessor 20 fernzuhalten. Die nicht benutzten Ausgänge D2, C0, C2 und C3 des Mikroprozessors 20 sind über einen Widerstand R mit der Plusleitung 22 verbunden, vgl. Fig. 16.

Der Hall-IC 234 ist zur Stromversorgung an die Plusleitung 22 und an die Minusleitung 24 angeschlossen. Sein Ausgangssignal "Hall" wird dem Port D3 des Mikroprozessors 20 zugeführt. Außerdem ist sein Ausgang über einen sogenannten Pullup-Widerstand 262 mit der Plusleitung 22 verbunden.

Für den sogenannten Power-Up-Reset beim Einschalten des Motors ist ein Kondensator 264 vorgesehen, dessen einer Anschluß mit der Minusleitung 24 und dessen anderer Anschluß über einen Knotenpunkt 266 und einen Widerstand 268 mit der Plusleitung 22 verbunden ist. Der Knotenpunkt 266 ist mit dem Eingang RESET/des Mikroprozessors 20 verbunden. Da beim Einschalten des Motors 230 der Kondensator 264 entladen ist, erhält dieser Eingang beim Einschalten das logische Signal "0" und bewirkt dann einen Resetvorgang. Anschließend lädt sich im Betrieb der Kondensator 264 auf, so daß dieser Eingang dann das logische Signal "1" erhält.

An die Eingänge XIN und XOUT des Mikroprozessors 20 ist ein 8 MHz-Keramikresonator 270 als Taktgeber angeschlossen.

### Arbeitsweise von Fig. 15

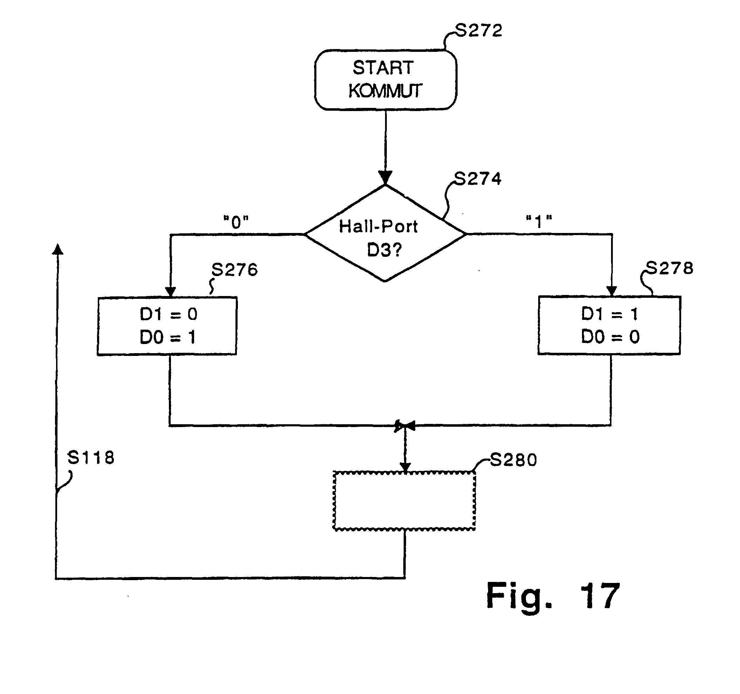

Der Hall-IC 234 liefert das Signal "Hall", das im Flußdiagramm der Fig. 7 und den Fig. 8 bis 10 ausführlich erläutert wurde. Gemäß Fig. 17, welche den Programmteil S116 der Fig. 6 und 7 zeigt, erfolgt beim Schritt S272 der Beginn der Kommutierung, also anschließend an den Vorgang der Drehzahlregelung (im Schritt S114 von Fig. 6).

Im Schritt S274 wird abgefragt, ob der Port D3 des Mikroprozessors 20 den logischen Wert "0" oder "1" hat. Beim Wert "0" verzweigt das Programm nach links zu S276, und dort wird am Port D1 das logische Signal "0" erzeugt, d.h. der Transistor 240 wird gesperrt, während am Port D0 das Signal "1" erzeugt wird, und der Transistor 244 wird leitend gesteuert und wird durch das Signal 184 vom PWM-Steller 60 etwa 25.000 Mal pro Sekunde mit dem Tastverhältnis TV des Signals 184 aus- und eingeschaltet, d.h. wenn der Motor 230 zu schnell ist, wird TV kleiner, und wenn er zu langsam ist, wird TV größer. Man bezeichnet das als PWM-Regelung, da hierbei die Breite der Impulse 184 verändert wird.

Wird in S274 festgestellt, daß das Signal am Port D3 den logischen Wert "1" hat, so erhält in 278 der Port D1 den Wert "1" und der Port D0 den Wert "0", so daß der Transistor 244 gesperrt und der Transistor 240 leitend gesteuert wird. Letzterer wird in gleicher Weise durch das PWM-Signal 184 ständig aus- und eingeschaltet, wobei das Tastverhältnis TV durch die Drehzahlregelung bestimmt wird, die mit Fig. 1 identisch ist und deshalb nicht erneut beschrieben wird.

Anschließend an die Schritte S276 oder S278 durchläuft das Programm ggf.einen Schritt S280, wo weitere Vorgänge im Motor 230 gesteuert werden können, und geht dann über die Schleife S118 (vgl. Fig. 6 und 7) zurück zu S122.

Durch die Einbeziehung der Kommutierung in die Schleife S118 verlängert sich die Zeit für einen Schleifendurchlauf etwas. Sie liegt dann z.B. zwischen 20 und 30 µs. Da die Schleife S118 also etwa alle 20 µs durchlaufen wird, wird eine Änderung des Signals Hall spätestens nach dieser Zeit bemerkt und führt dann zu einer Umschaltung der Kommutierung.

Die Anschlüsse des Mikroprozessors 20 und deren Bezeichnungen sind in Fig. 16 dargestellt. Ein Vorteil der Erfindung ist, daß mit einem einfachen Mikroprozessor 20 mit einer Datenbreite von nur vier Bit eine sehr genaue Drehzahlregelung, falls gewünscht verbunden mit einer Strombegrenzung, möglich ist. Dabei ist die Zahl der Bauelemente so klein, daß sie direkt im Motor 230 untergebracht werden können, z.B. im Inneren eines Lüfters, für dessen Antrieb ein erfindungsgemäßer Motor gut geeignet ist.

Fig. 18 zeigt die Anwendung der Erfindung für die Drehzahlregelung einer Brennkraftmaschine 290. Die Erfindung eignet sich besonders für einen Dieselmotor, da bei diesem die Drehzahl nach oben hin begrenzt werden muß, und da am Punkt 62 ein Zusatzsignal ZS eingeführt werden kann, z.B., um bei starker Beschleunigung den Motor 290 unterhalb der sogenannten Rauchgrenze zu fahren, d.h. daß kein Dieselruß im Abgas erscheint.

Das Signal am Punkt 62 wird einem Stellantrieb 292 zugeführt, z.B., wie dargestellt, einem Stellantrieb für die Drosselklappe 294 des Motors 290, sofern dies ein Ottomotor ist, oder dem Stellantrieb für eine Diesel-Einspritzpumpe. Am Motor 290, z.B. an dessen Schwungrad, ist in der üblichen Weise ein Drehzahlsensor 296 vorgesehen, der ein Drehzahl-Istwertsignal 298 für den Eingang C1 des Mikroprozessors 20 liefert. Derartige Sensoren 296 für Brennkraftmaschinen sind in großer Vielfalt bekannt. Das Signal 298 entspricht den Signalen, die in den vorhergehenden Diagrammen mit "Hall" bezeichnet sind.

Die Arbeitsweise entspricht den vorhergehenden Beispielen, d.h. wenn der Motor 290 zu langsam ist, steigt die Spannung am Kondensator 84, und der Steller 292 verstellt die Kraftstoffzufuhr zum Motor 290 so, daß dieser schneller wird. Ist umgekehrt der Motor 290 zu schnell, so wird der Kondensator 84 etwas entladen, und der Steller 292 reduziert die Kraftstoffzufuhr, so daß der Motor 290 langsamer wird.

Das Signal am Punkt 62 kann auch direkt einer elektronisch gesteuerten Kraftstoffeinspritzung zugeführt werden und dort die Zeitdauer beeinflußen, mit der Kraftstoff in die Zylinder eingespritzt wird.

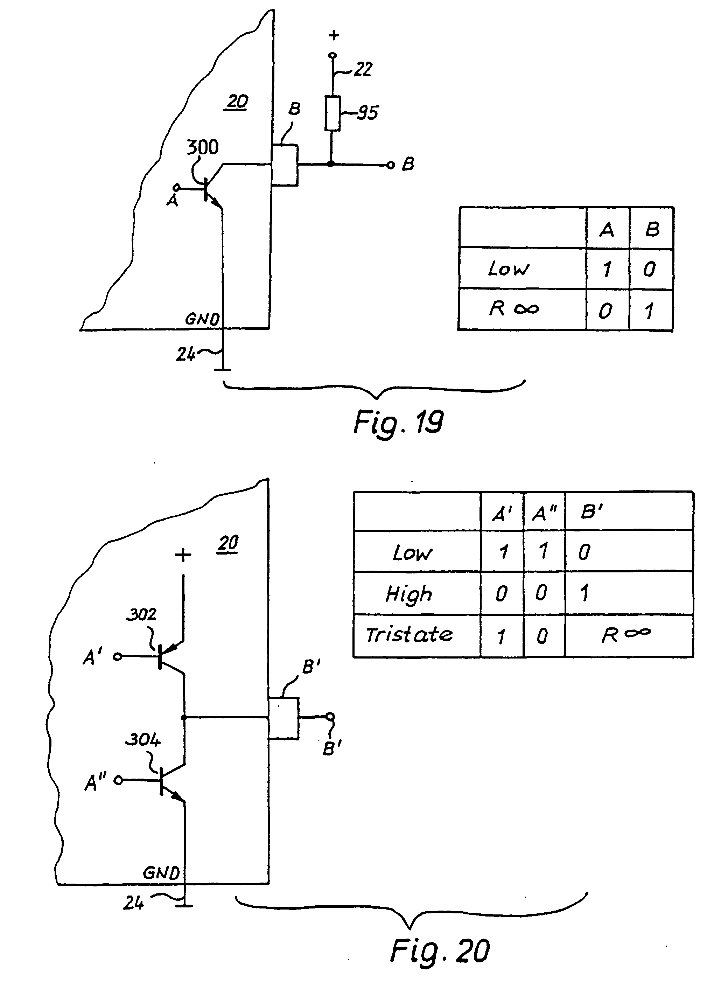

Fig. 19 zeigt eine Darstellung analog Fig. 12, zur Erläuterung der Vorgänge im Mikroprozessor 20, z.B. beim Typ NEC17P103. Der Port B ist hier an den Kollektor eines internen npn-Transistors 300 angeschlossen, dessen Emitter mit GND, also der Minusleitung 24, verbunden ist. Seine Basis wird von einem digitalen Signal A gesteuert. Wie die Tabelle rechts in Fig. 19 zeigt, ist für A = 1 der Transistor 300 leitend, und der Ausgang B hat deshalb den logischen Wert "0". Ein Strom von der Plusleitung 22 über den Widerstand 95 fließt deshalb über den Transistor 300 zur Minusleitung 24. Ist A = 0, so wird der Transistor 300 nichtleitend, also hochohmig, was durch das Symbol R∞ symbolisiert ist. In diesem Fall erhält der Port B über den Pullup-Widerstand 95 den Wert "1", also z.B. + 5 V.

Fig. 20 zeigt die interne Ausgestaltung des Mikroprozessors 20 im Fall von Fig. 11, also in der sogenannten Tristate-Ausführung, bei der der Port B' drei verschiedene Zustände annehmen kann.

Im Mikroprozessor 20 (z.B. vom Typ Pi16C57) sind dem Port B' ein pnp-Transistor 302 und ein npn-Transistor 304 zugeordnet, deren Kollektoren miteinander und mit dem Port B' verbunden sind. Der Emitter des Transistors 302 ist mit einer positiven Spannung im Mikroprozessor 20 verbunden; seiner Basis wird ein Signal A' zugeführt. Der Emitter des Transistors 304 ist mit der Minusleitung 24 verbunden. Seiner Basis wird ein Signal A" zugeführt.

Die Tabelle rechts in Fig. 20 zeigt, daß für A' = A" = 1 der Port B' den logischen wert "0" annimmt, also Low, da in diesem Fall der Transistor 302 sperrt und der Transistor 304 leitet. Ebenso zeigt diese Tabelle, daß für A' = A" = 0 der Port B' den logischen Wert "1" annimmt, also High, da in diesem Fall der Transistor 302 leitend wird und der Transistor 304 sperrt. Schließlich zeigt die Tabelle, daß für A' = 1 und A" = 0 der Port B' hochohmig wird, was durch das Symbol R∞ dargestellt ist und auch als "Tristate" bezeichnet wird, also als dritter Zustand dieses Ports.

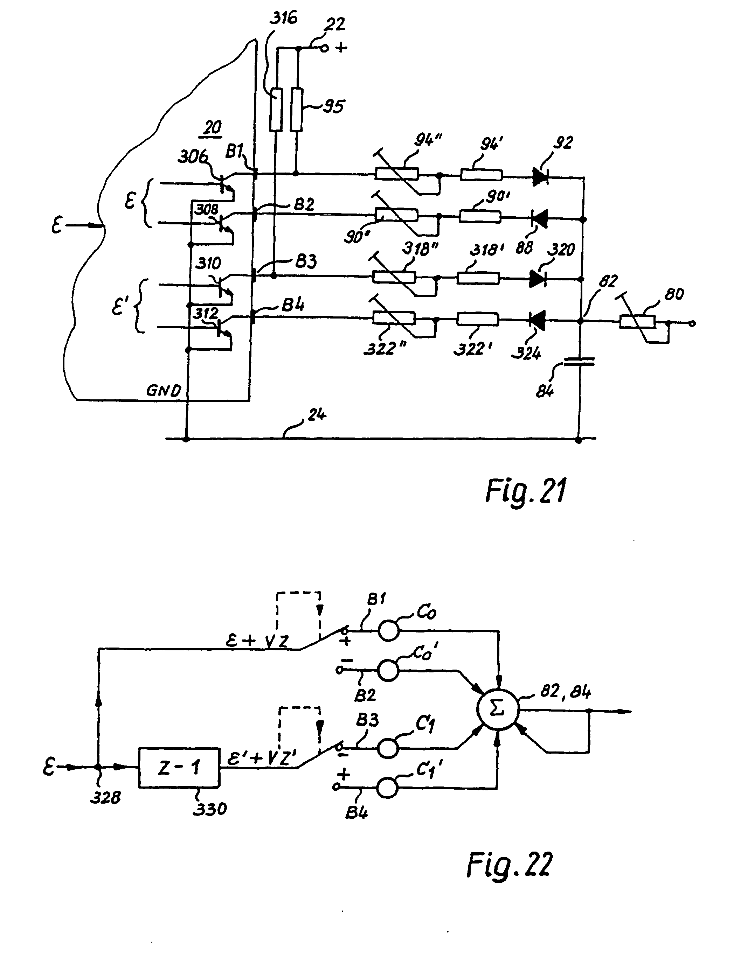

Fig. 21 zeigt einen Mikroprozessor 20 mit einer größeren Zahl von Ports B1, B2, B3, B4, die analog Fig. 19 durch interne Transistoren 306 (Port B1), 308 (Port B2), 310 (Port B3) und 312 (Port B4) gesteuert sind. Die Erläuterungen zu Fig. 19 gelten hier in gleicher weise und werden deshalb nicht wiederholt. Nur zur Klarstellung wird darauf hingewiesen, daß der Mikroprozessor 17P103 hier weniger geeignet ist, da er nur drei Ports B1, B2 und B3 hat; ein geeigneter Typ ist beispielsweise der Mikroprozessor Pi16C57. Alternativ könnte man aber auch Ausgänge eines anderen Ports, falls frei, heranziehen, z.B. einen oder zwei Ausgänge von Port C.

Den Transistoren 306, 308 wird im Betrieb die zuletzt gemessene Regelabweichung ε in digitalisierter Form zugeführt, und den Transistoren 310, 312 die beim vorhergehenden Meßzyklus gemessene Regelabweichung ε'.

Die Beschaltung der Ports B1 und B2 stimmt mit Fig. 3 überein, mit dem Unterschied, daß statt der dort dargestellten Festwiderstände 90, 94 in Fig. 21 Festwiderstände 90', 94' in Reihe mit variablen Widerständen 90", 94" vorgesehen sind, um die entsprechenden Regelparameter je nach Anwendungsfall einstellen zu können, wie bereits bei Fig. 1 und 3 erläutert.

Beispielhafte Werte sind:
Widerstand 95 3,3 kΩ (im folgenden auch abgekürzt als "k"). Widerstände 90' und 94' 10 kΩ
Potentiometer 90" und 94" je 250 kΩ,
wobei die Widerstände 94' + 94" z.B. auf 50 kΩ und die Widerstände 90' + 90" z.B. auf 70 kΩ eingestellt werden.

Der Port B3 ist über einen Widerstand 316 (z.B. 3,3 kΩ) mit der Plusleitung 22 und über die Serienschaltung eines Potentiometers 318" und eines Festwiderstands 318' mit der Anode einer Diode 320 verbunden, deren Katode mit dem Punkt 82 (vgl. Fig. 1, Fig. 3 oder Fig. 15) verbunden ist.

Ebenso ist der Port B4 über ein Potentiometer 322" und einen Festwiderstand 322' mit der Katode einer Diode 324 verbunden, deren Anode mit dem Punkt 82 verbunden ist.

Der Widerstand 316 kann den Wert 3,3 kΩ, die Festwiderstände 318' und 322' den Wert 10 kΩ, und die Potentiometer 318" und 322" den Wert 250 kΩ haben. Die Widerstände 318' + 318" haben z.B. den Wert 80 kΩ, und die Widerstände 322' + 322" den Wert 60 kΩ. Das Potentiometer 80 kann z.B. den Wert 100 kΩ haben, und der Kondensator 84 den Wert 3,3 µF.

Fig. 22 zeigt symbolisch die Arbeitsweise des digital-analogen Reglers. Dieser erhält an seinem Eingang 328 die Regelabweichung ε und deren Vorzeichen (sign) VZ.

Der Punkt 82, 84 ist der Summenpunkt, wo im analogen Speicherglied, also dem Kondensator 84, je nach dem Wert der Regelabweichung die Ladung erhöht oder reduziert wird, also eine Summenbildung stattfindet. Der Rückführungspfeil (von rechts) symbolisiert die Speichereigenschaft des Summenpunkts.

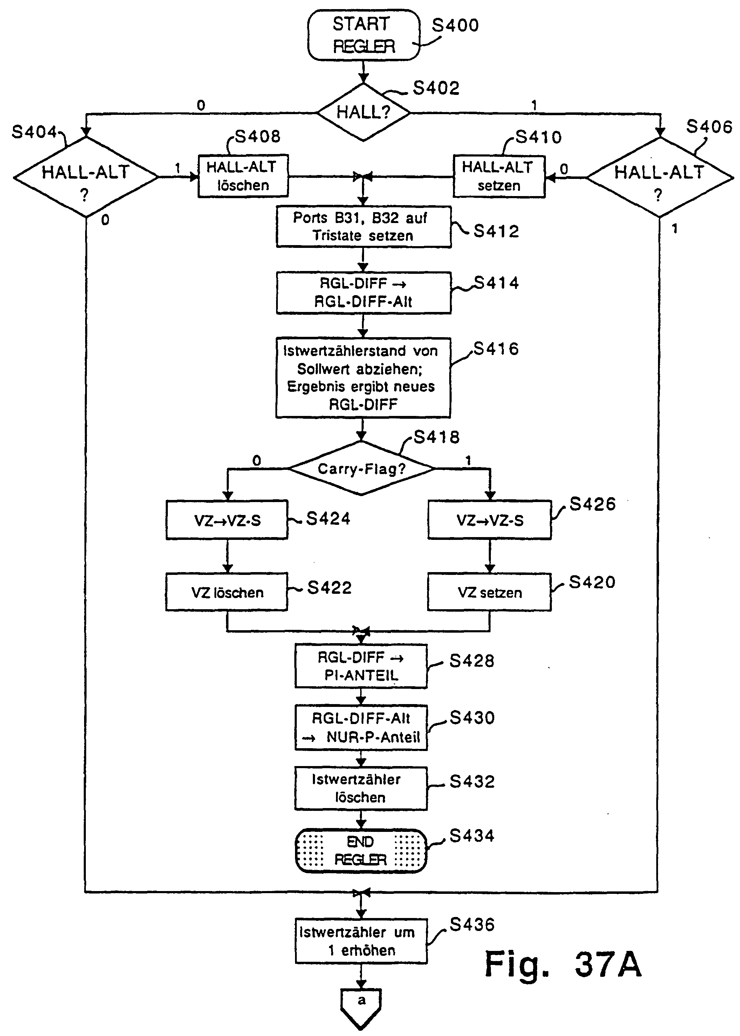

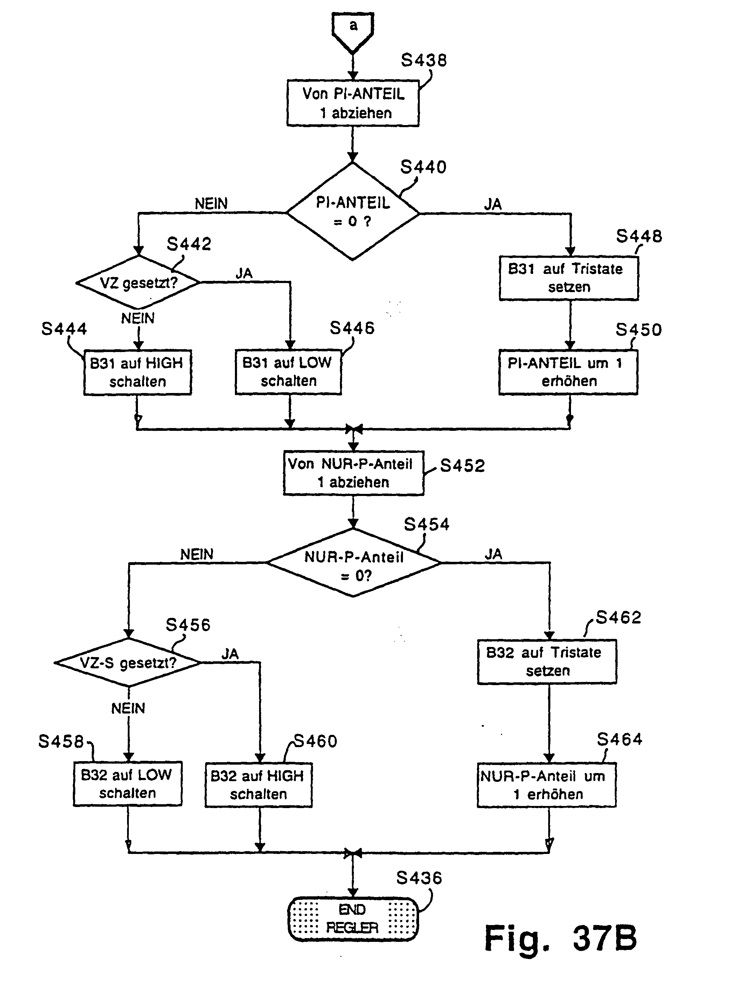

Verwendet wird einmal der aktuellste Wert ε (nachfolgend auch "e") der Regelabweichung und des Vorzeichens VZ. Diese Werte können entweder von außen zugeführt oder im Mikroprozessor 20 errechnet werden, wie das vorstehend beschrieben wurde. Ferner verwendet man einen Wert für ε und VZ aus einem vorhergehenden Meßzyklus, z.B. den direkt vorhergehenden Wert ε' und dessen Vorzeichen VZ'. Diese Werte, die bei der vorhergehenden Drehzahl n' gemessen wurden, werden in einem Speicher 330 zwischengespeichert und fortlaufend aktualisiert. Wie dies zweckmäßig gemacht wird, wird nachfolgend in Fig. 37 dargestellt und erläutert.

Das Vorzeichen VZ von ε entscheidet, ob die Regelabweichung ε positiv mit dem Regelparameter C0 berücksichtigt wird, oder negativ mit dem Regelparameter C0'. Eine positive Berücksichtigung (VZ = +) bedeutet, daß die Drehzahl n zu niedrig ist, und daß in Fig. 21 ein Ladestrom über die Widerstände 95, 94", 94' zum Kondensator 84 fließt. Diese Widerstände bestimmen also den Regelparameter C0. Ein negatives Vorzeichen (VZ = -) bedeutet, daß die Drehzahl n zu hoch ist, und daß in Fig. 21 ein Entladestrom über die Widerstände 90', 90" vom Kondensator 84 zur Minusleitung 24 fließt. Die Widerstände 90', 90" bestimmen also den Regelparameter C0'.

Das Vorzeichen VZ' von ε' entscheidet darüber, ob dieser "antike" Wert der Regelabweichung positiv mit dem Regelparameter C1' berücksichtigt wird, oder negativ mit dem Regelparameter C1. Wenn das Vorzeichen VZ' des "antiken" Werts ε' negativ ist, also VZ' = -, so bedeutet dies, daß zum Zeitpunkt seiner Messung die damalige Drehzahl n' zu hoch war. In diesem Fall fließt gemäß Fig. 21 ein Ladestrom über die Widerstände 318', 318" zum Kondensator 84. Diese beiden Widerstände bestimmen also den Regelparameter C1.

Wenn das Vorzeichen VZ' des antiken Werts ε' positiv ist, also VZ' = +, so bedeutet dies, daß zum Zeitpunkt seiner Messung die Drehzahl n' zu niedrig war. In diesem Fall fließt gemäß Fig. 21 ein Entladestrom über die Widerstände 322', 322" vom Kondensator 84 zur Minusleitung 24. Die Widerstände 322', 322" bestimmen also den Regelparameter C1'.

Man erkennt nun auch den großen Vorteil eines solchen Anordnung, nämlich die Möglichkeit, durch einfache Justierung der Potentiometer 94", 90", 318" und 322" die Regelparameter an den jeweiligen Anwendungszweck anpassen zu können, ohne daß dafür das Programm im Mikroprozessor 20 verändert werden muß, d.h. man kann mit einem in spezifischer Weise programmierten Mikroprozessor 20 eine Vielzahl von Anwendungsfällen abdecken. Dabei erhält man, obwohl analoge Bauteile verwendet werden, die Genauigkeit und Schnelligkeit einer digitalen Regelung.

Die Widerstände 94', 94" bestimmen den Regelparameter für P+I bei zu niedriger Drehzahl, und die Widerstände 90' und 90" bestimmen ihn bei zu hoher Drehzahl. Ebenso bestimmen die Widerstände 318' und 318" den Parameter für P bei zu hoher Drehzahl, und die Widerstände 322', 322" bestimmen ihn bei zu niedriger Drehzahl.

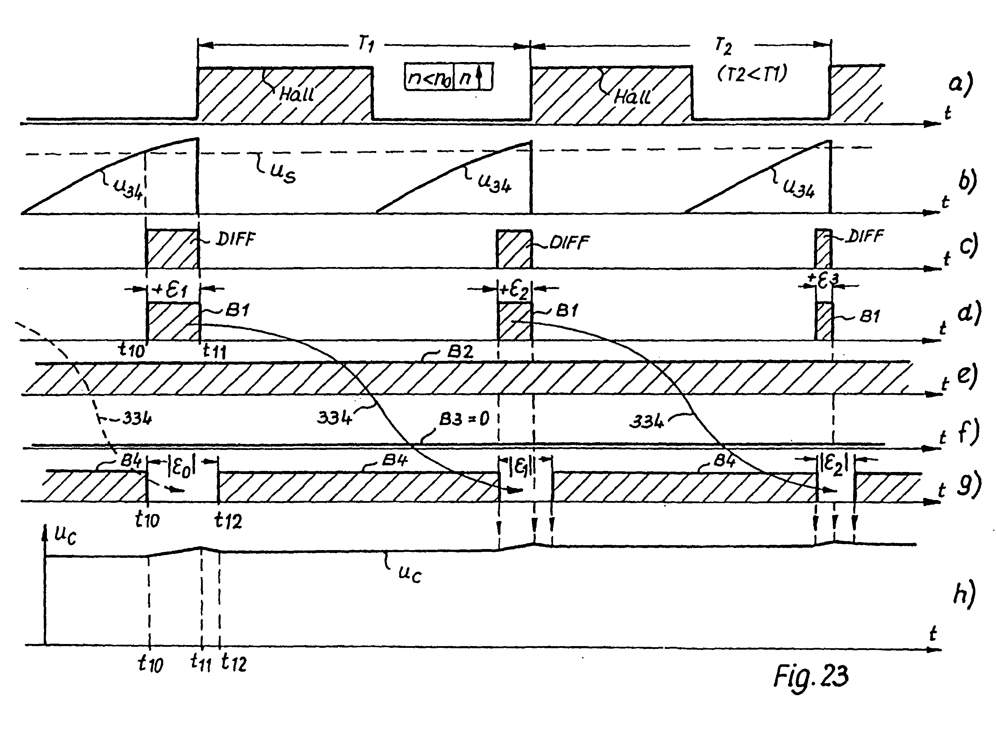

Zur Illustration zeigt Fig. 23 einen Ablauf für den Fall, daß die Drehzahl n zu niedrig ist, aber ansteigt. Man erkennt dies daran, daß in Zeile a) die Periodendauern T_{H} des Signals Hall abnehmen, d.h. T₂ ist kleiner als T₁.

Dadurch, daß die Drehzahl n zu niedrig ist,ergeben sich in Zeile c) Signale DIFF, welche einer Regelabweichung ε mit positivem Vorzeichen, also VZ = +, entsprechen, und die Zeitdauer dieser Signale DIFF nimmt ab, weil die Drehzahl zunimmt. Man erhält also (links außerhalb der Zeichnung) das Signal +ε₀, und anschließend die Signale +ε1, +ε2, +ε3 etc.

Diese Signale steuern direkt den Port B1 und machen ihn hochohmig, solange diese Signale vorhanden sind, so daß über die Widerstände 95, 94", 94' ein Ladestrom zum Kondensator 84 fließt, solange B1 = 1 ist.

Gleichzeitig mit dem Beginn von B1 = 1, also z.B. zum Zeitpunkt t10 (Fig. 23h) wird das - zuvor hohe - Signal B4 niedrig gemacht, und zwar immer während der Zeitdauer von ε', sofern dessen Vorzeichen positiv war.

Das hohe Signal B1 dauert von t10 bis t11, also während der Zeitspanne ε1, aber da die Drehzahl zunimmt, ist der vorhergehende Wert ε0 länger und dauert bis zum Zeitpunkt t12 an. Während des Zeitraums t10 bis t11 wird deshalb der Kondensator 84 über die Widerstände 95, 94" und 94' geladen und über die Widerstände 322', 322" entladen, so daß gemäß Fig. 23h in diesem Zeitraum die Spannung u_{C} am Kondensator 84 ansteigt, da der Einfluß von B1 den von B4 überwiegt.

Während des Zeitraums t11 bis t12 ist B1 = 0, und B4 ist weiterhin gleich 0, so daß jetzt nur noch ein Entladestrom vom Kondensator 84 über die Widerstände 322' und 322" zur Minusleitung 24 fließt, wodurch die Spannung u_{C} während dieses Zeitraums wieder etwas absinkt. Insgesamt steigt, wie in Fig. 23 dargestellt, die Spannung u_{C} zwischen den Zeitpunkten t10 und t12 etwas an, d.h. die (zu niedrige) Drehzahl n wird durch den Regler erhöht.

Zur Erläuterung von Fig. 23, Zeilen a) bis e) wird auf die Ausführungen zu den entsprechenden Zeilen von Fig. 8 hingewiesen, weshalb das hier nicht wiederholt wird.

Die Steuerung des Ports B4 (bei zu niedriger Drehzahl ist B3 = 0) ergibt sich aus Fig. 23, d.h. bei einem Regelzyklus wird B4 jeweils durch den zeitlich vorhergehenden Wert von E gesteuert, also durch ε', wie durch die Pfeile 334 symbolisiert.

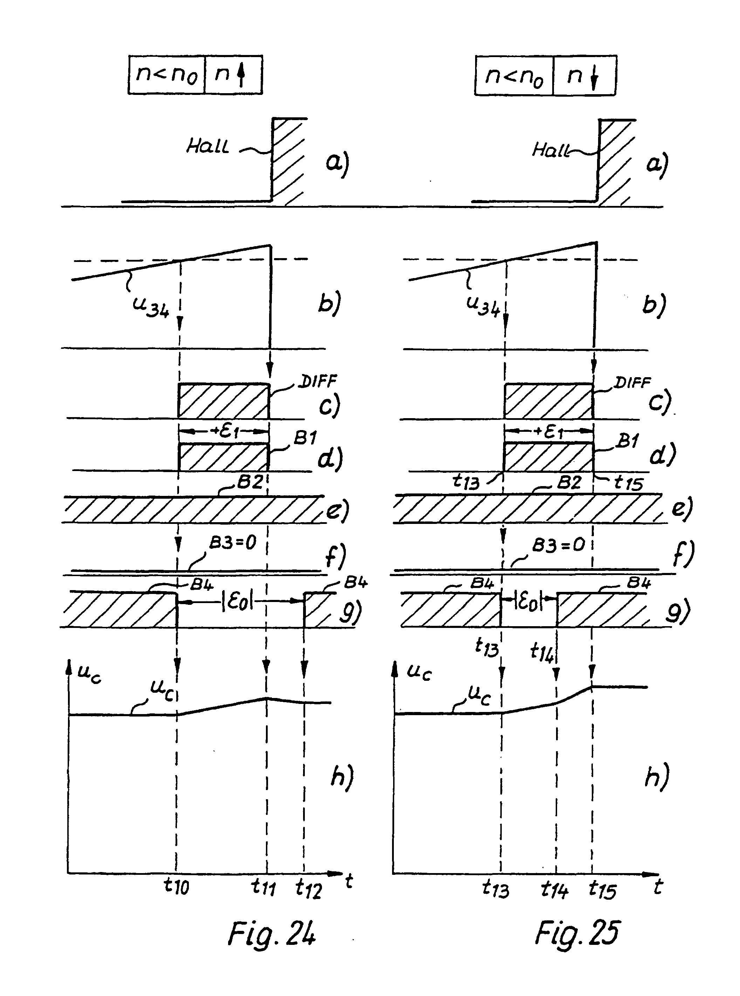

Die Fig. 24 und 25 zeigen nochmals die Abläufe bei zu niedriger Drehzahl. Bei Fig. 24 steigt die Drehzahl n, d.h. dies entspricht dem Fall der Fig. 23, und bei Fig. 25 fällt sie, z.B. durch eine zusätzliche Belastung des Motors 50 (Fig. 1) oder des Motors 230 (Fig. 15).

Fig. 24 zeigt nochmals in vergrößertem Maßstab, wie die Spannung u_{C} zwischen den Zeitpunkten t10 und t11 ansteigt und anschließend zwischen t11 und t12 wieder etwas abfällt.

Fig. 25 zeigt den Fall der sinkenden Drehzahl, d.h. in diesem Fall ist ε0 kürzer als ε1, und ε1 ist kürzer als ε2, da ja die Periodendauer T_{H} (Fig. 23) des Signals Hall zunimmt. In diesem

Fall dauert also ε1 von t13 bis t15, aber ε0 dauert nur von t13 bis t14. Deshalb wirken nur während des Zeitraums t13 bis t14 beide Signale, d.h. nur von t13 bis t14 sind B1 = 1 und B4 = 0, so daß während dieser Zeitspanne über die Widerstände 95, 94", 94' ein Ladestrom zum Kondensator 84 fließt, und über die Widerstände 322', 322" ein Entladestrom zur Minusleitung 24. Dabei steigt gemäß Fig. 25h in diesem Zeitraum die Spannung u_{C} mit einer geringen Steigung an.

Ab dem Zeitpunkt t14 ist B4 = 1, d.h. der Entladestrom über die Widerstände 322', 322" hört auf, und es fließt von t14 bis t15 nur noch der Ladestrom über die Widerstände 95, 94", 94' zum Kondensator 84, so daß die Spannung u_{C} jetzt mit einer stärkeren Steigung ansteigt. In diesem Fall steigt also die Spannung u_{C} stärker an, wie ein Vergleich von Fig. 24h mit Fig. 25h zeigt, d.h. der P-Anteil wirkt hier stärker.

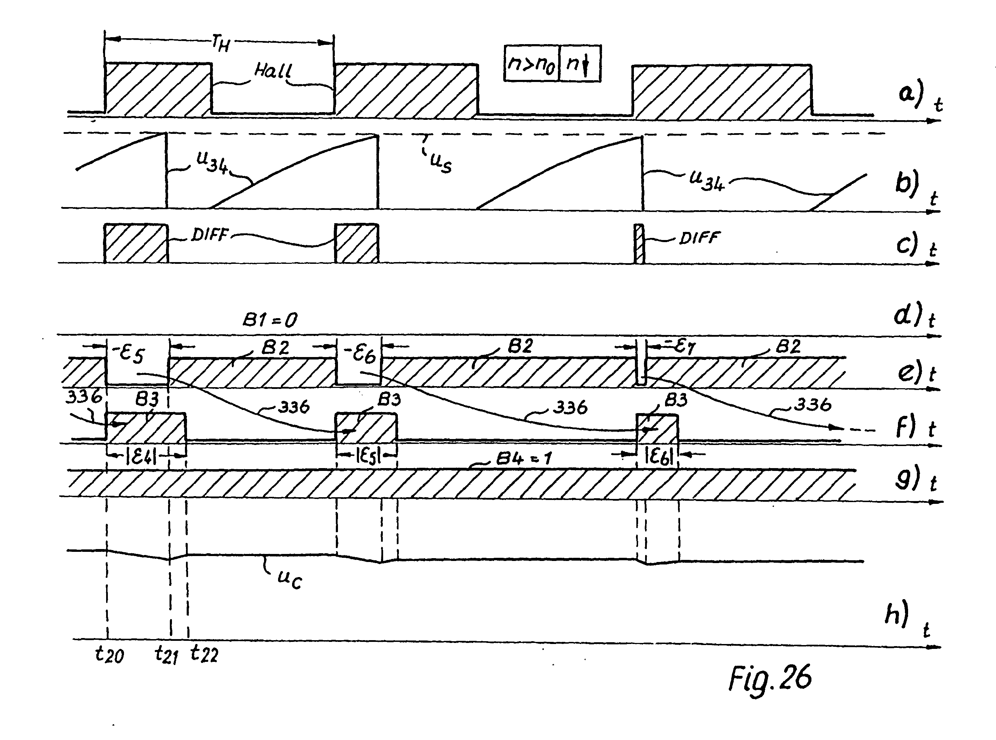

Fig. 26 zeigt einen Regelvorgang für den Fall, daß die Drehzahl n zu hoch ist, aber fällt. Man erkennt dies daran, daß die Periodendauer T_{H} der Signale Hall größer wird. Dadurch, daß die Drehzahl n zu hoch ist, ergeben sich in der Zeile c) Signale DIFF, welche einer Regelabweichung ε mit negativem Vorzeichen, also VZ = -, entsprechen, und die Zeitdauer dieser Signale DIFF nimmt ab, weil sich die Drehzahl n der gewünschten Drehzahl n₀ nähert. Man erhält also (links außerhalb der Zeichnung) das Signal -ε4, und anschließend die Signale -ε5, -ε6 und -ε7 etc.

Diese Signale steuern in der bei Fig. 10 beschriebenen Weise den Port B2 und machen diesen niederohmig, solange diese Signale DIFF vorhanden sind, so daß über die Widerstände 90', 90" ein Entladestrom vom Kondensator 84 zur Minusleitung 24 fließt, solange B2 = 0 ist.

Gleichzeitig mit dem Beginn von DIFF, also z.B. zum Zeitpunkt t20 (Fig. 26h) wird das zuvor niedrige Signal B3 hoch gemacht, und zwar immer während der Zeitdauer von ε', sofern dessen Vorzeichen VZ' negativ ist.

Das niedrige Signal B2 dauert von t20 bis t21, also während der Zeitspanne ε5, aber da die Drehzahl abnimmt, ist der vorhergehende Wert ε4 länger und dauert bis zum Zeitpunkt t22 an.

Während des Zeitraums t20 bis t21 wird deshalb der Kondensator 84 über die Widerstände 316, 318" und 318' geladen und über die Widerstände 90' und 90" entladen, so daß in diesem Zeitraum die Spannung u_{C} am Kondensator 84 fällt, da der Einfluß von B2 den von B3 überwiegt (durch entsprechende Wahl der genannten Widerstände, welche die betreffenden Regelparameter festlegen. Der genaue Wert dieser Widerstände wird gewöhnlich durch Versuche festgelegt und hängt auch von der Art des zu regelnden Motors ab).

Während des Zeitraums von t21 bis t22 ist B2 = 1, so daß die Diode 88 sperrt, und B3 hat weiterhin den Wert 1, so daß jetzt nur noch ein Ladestrom über die Widerstände 316, 318", 318' zum Kondensator 84 fließt, wodurch die Spannung u_{C}, wie dargestellt, wieder etwas ansteigt (P-Einfluß). Insgesamt fällt, wie in Fig. 26 dargestellt, die Spannung u_{C} zwischen den Zeitpunkten t20 und t22 etwas ab, d.h. der Strom zum Motor 50 wird reduziert (durch Änderung des Tastverhältnisses TV des PWM-Stellers 60), so daß die Drehzahl n sinkt und sich dem gewünschten Sollwert n₀ nähert.

Zur Erläuterung von Fig. 26, Zeilen a) bis e) wird auf die Erläuterung zu den entsprechenden Zeilen von Fig. 10 hingewiesen, weshalb das nicht wiederholt wird.

Die Steuerung des Ports B3 (bei zu hoher Drehzahl ist ständig B4 = 1) ergibt sich aus Fig. 26, d.h. bei einem Regelzyklus wird B3 durch den vorhergehenden Wert von ε gesteuert, wie durch die Pfeile 336 symbolisiert.

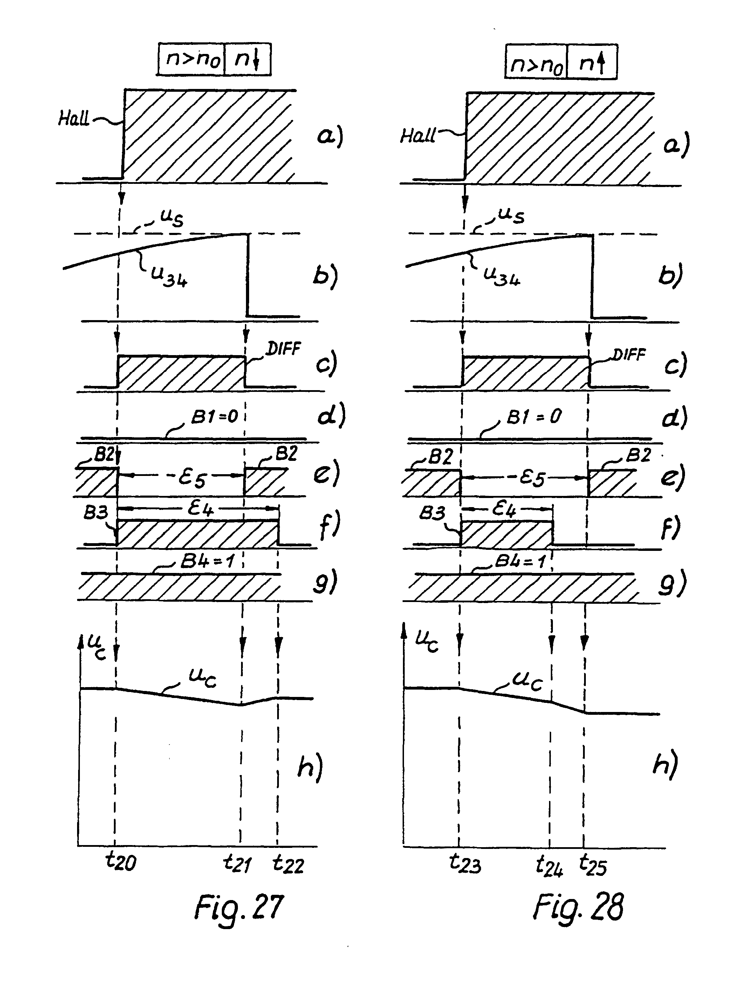

Die Fig. 27 und 28 zeigen nochmals die Abläufe bei zu hoher Drehzahl. Bei Fig. 27 fällt diese, d.h. dies entspricht der Darstellung der Fig. 26, und bei Fig. 28 steigt die (zu hohe) Drehzahl weiter an, z.B., weil der Motor 50 von seiner Last angetrieben wird.

Fig. 27 zeigt nochmals in vergrößertem Maßstab, wie die Spannung u_{C} zwischen den Zeitpunkten t20 und t21 fällt und anschließend zwischen t21 und t22 wieder etwas steigt, wie bereits beschrieben.

Fig. 28 zeigt den Fall der steigenden Drehzahl, d.h. hier ist ε4 kürzer als ε5, ε5 ist kürzer als ε6, etc., da die Periodendauer T_{H} (Fig. 23) des Signals Hall abnimmt. Hier dauert also ε5 von t23 bis t25, aber ε4 dauert nur von t23 bis t24. Deshalb wirken nur während des Zeitraums t23 bis t24 beide Signale B2 = 0 und B3 = 1, so daß während dieser Zeitspanne über die Widerstände 316, 318", 318' ein Ladestrom zum Kondensator 84 fließt, und über die Widerstände 90', 90" ein Entladestrom zur Minusleitung 24. Deshalb fällt in diesem Zeitraum gemäß Fig. 28h die Spannung u_{C} mit geringer Steigung.

Ab dem Zeitpunkt t24 ist B3 = 0, d.h. die Diode 320 sperrt, und der Ladestrom von B3 zum Kondensator 84 hört auf. Deshalb fließt von t24 bis t25 nur noch der Entladestrom vom Kondensator 84 über die Widerstände 90', 90" nach Masse, so daß die Spannung u_{C} jetzt mit einer stärkeren Steigung abfällt, wie ein Vergleich von Fig. 27h mit Fig. 28h zeigt.

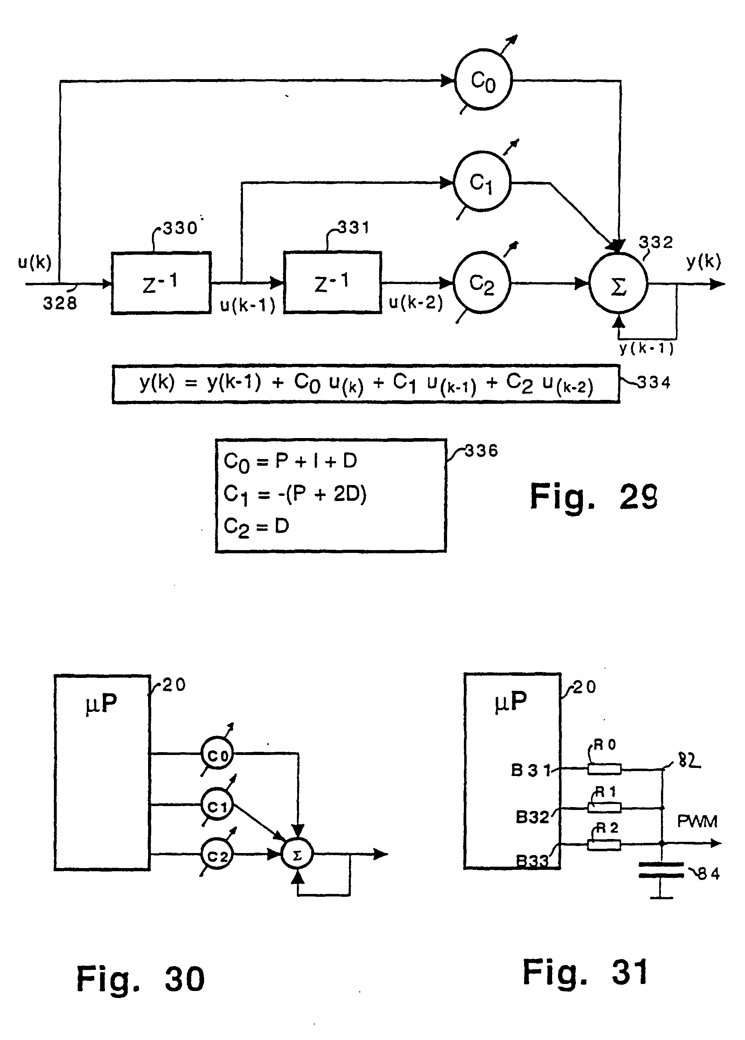

Das Prinzip eines solchen digital-analogen Reglers läßt sich auch erweitern auf einen PID-Regler. Der prinzipielle Aufbau eines solchen Reglers ist dargestellt in Fig. 29. Diese zeigt, daß wenn man im Speicher 330 fortlaufend den Wert ε' für die Regelabweichung bei der vorhergehenden Messung speichert, und im Speicher 331 fortlaufend die Regelabweichung ε" für die vorvorhergehende Messung, zusätzlich eine D-Regelung mit dem Regelparameter C2 möglich ist. (Zusammen mit den jeweiligen Regelabweichungen wird in den Speichern 330 und 331 auch das Vorzeichen gespeichert.)

Fig. 29 zeigt bei 334 die Differenzengleichung, die solch einem digitalen Regler zugrundeliegt und bei 336 den Einfluß der Regelparameter C0, C1 und C2. Bei einem rein digitalen Regler handelt es sich um Parameter, die im digitalen Programm festgelegt sind und die daher nur schwer zu ändern sind, besonders bei einem Mikroprozessor, bei dem das Programm im ROM gespeichert ist. - In Fig. 29 ist der Summenpunkt mit 332 bezeichnet.

Fig. 30 zeigt, daß im vorliegenden Fall die Regelparameter aus dem Mikroprozessor 20 nach außen verlegt sind, also in den analogen Teil des Reglers, und Fig. 31 zeigt, wie das bei einem Mikroprozessor mit drei Tristate-Reglerausgängen B31, B32, B33 mit Hilfe von drei Widerständen R0, R1 und R2 geschieht, welche die Regelparameter festlegen. Dabei entspricht prinzipiell C0 dem Widerstand R0, C1 dem Widerstand R1, und C2 dem Widerstand R2. Als Summenpunkt dient der Kondensator 84. Ein großer Widerstandswert bedeutet eine kleine Regelverstärkung, und ein kleiner Widerstandswert folglich eine große Regelverstärkung, wie bereits weiter oben an Beispielen in großer Ausführlichkeit erläutert. Auf diese Weise lassen sich durch Wahl der Widerstandswerte verschiedene Reglertypen festlegen.

### P-Regler

Hier gilt C0 = C1, und C2 = 0, d.h. in diesem Fall sind die Widerstände R0 und R1 gleich groß, z.B. jeweils 40 kΩ, und der Widerstand R2 hat den Wert ∞.

### I-Regler

Hier gilt C0 = I, d.h. man verwendet nur den Widerstand R0 von z.B. 100 kΩ. Dies ist der Fall, der beim ersten Ausführungsbeispiel nach den Fig. 1 bis 17 beschrieben wurde, das einen reinen I-Regler darstellt. Die anderen Parameter sind C1 = C2 = 0, d.h. die Widerstände R1 und R2 haben jeweils den Wert ∞.

### PI-Regler

Hier ist C2 = 0, d.h. der Widerstand R2 hat den Wert ∞, und C0 ist größer als C1, d.h. der Widerstand R1 ist größer (z.B. 120 kΩ) als der Widerstand R0 (z.B. 100 kΩ). Dieser Fall wurde vorstehend anhand der Fig. 21 bis 28 beschrieben.

### PD-Regler

Hier gilt C0 = P + D, und daraus ergibt sich ein Widerstand R0 von z.B. 100 kΩ. Für C1 gilt C1 = (-P + 2D), und daraus ergibt sich ein R1 von z.B. 85 kΩ. Weiter gilt C2 = D-Anteil, und damit ein R2 von z.B. 120 kΩ.

### ID-Regler

Hier gilt C0 = I + D, und daher z.B. R0 = 50 kΩ. Für C1 gilt C1 = 2 x C2, und daraus R1 = 50 kΩ. C2 = D-Anteil, und daher R2 = 100 kΩ.

### PID-Regler

Hier gelten die Gleichungen, die in Fig. 29 bei 336 angegeben sind, und daraus ergibt sich z.B. R0 = 50 kΩ, R1 = 50 kΩ, und R2 = 150 kΩ.

Die angegebenen Widerstandswerte dienen nur dazu, das Verhältnis dieser Widerstände, sowie Größenordnungen, zu veranschaulichen; diese Werte sind für einen Mikroprozessor mit Tristate-Ausgängen angegeben. Es sind beispielhafte Erfahrungswerte für die dargestellten Ausführungsbeispiele.

Nachfolgend wird ein Ausführungsbeispiel für eine erfindungsgemäße Regelanordnung bei einem Mikroprozessor mit Tristate-Ausgängen angegeben, und zwar für einen PI-Regler. Hierfür werden auch die Flußdiagramme angegeben, um Aufbau und Funktion an einem praktischen Beispiel zu illustrieren.

Wie oben angegeben, ist hier C2 = 0, d.h. der vorvorhergehende Wert ε" für die Regelabweichung muß nicht gespeichert werden, und der Speicher 331 (Fig. 29) entfällt folglich, ebenso der Widerstand R2 in Fig. 31, so daß nur die Tristate-Ausgänge B0 und B1 sowie die Widerstände R0 (z.B. 100 kΩ) und R1 (z.B. 120 k) vorhanden sind. Ein Ausgang des Mikroprozessors 20 ist in Fig. 31 und im Flußdiagramm mit B31 bezeichnet, und ein zweiter Ausgang (Fig. 31) mit B32, um den besonderen, ternären Charakter dieser beiden Reglerausgänge, sowie den Unterschied zu den vorhergehenden Ausführungsbeispielen, hervorzuheben.

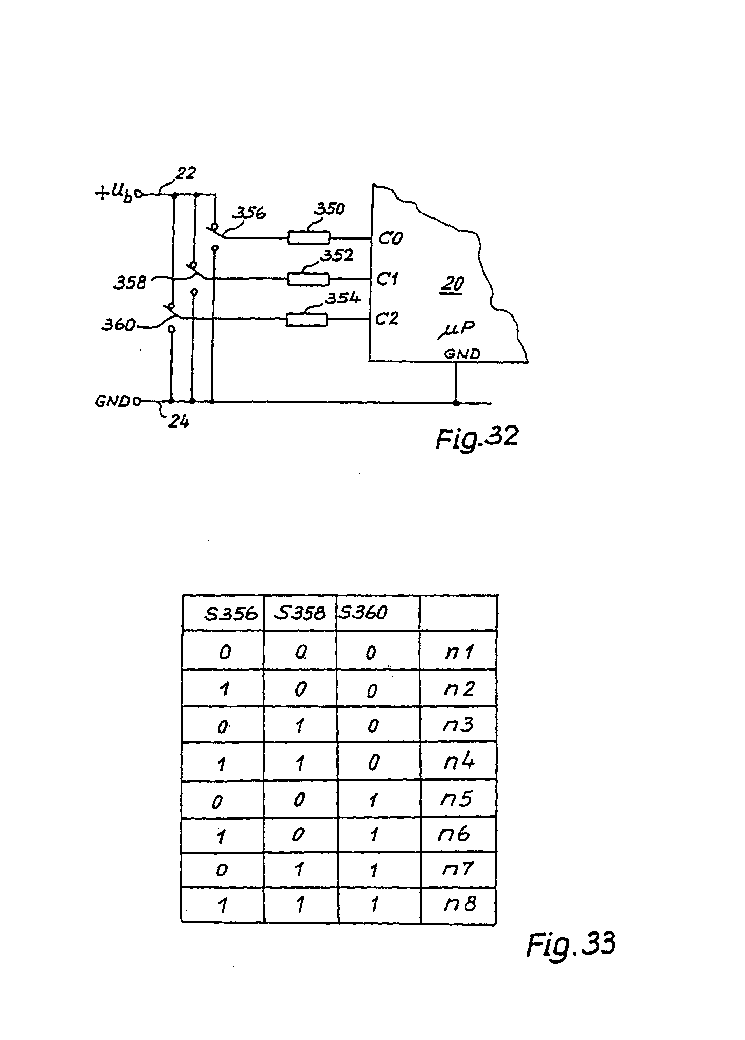

Fig. 32 zeigt, wie bei diesem Ausführungsbeispiel die Drehzahl in Form eines digitalen Werts an den Eingängen C0, C1 und C2 des Mikroprozessors 20 vorgegeben werden kann. Hierzu dienen bei dieser beispielhaften Darstellung die Widerstände 350, 352, 354 und drei Umschalter 356, 358, 360, mittels derer die Eingänge C0, C1 und C2 wahlweise auf das Potential der Plusleitung 22, also "1", oder auf das Potential der Minusleitung 24, also auf "0" gelegt werden können. Die Umschalter sind als mechanische Schalter dargestellt, könnten aber ebenso gut kontaktlos ausgeführt sein, um entsprechende Signale an die Eingänge C0, C1 und C2 zu liefern.

Fig. 33 zeigt, daß z.B. die (untere) Schalterstellung "0" aller drei Schalter einer Drehzahl n₁ entspricht, und so bis zu den (oberen) Schalterstellungen 111, die der Drehzahl n₈ entsprechen. Auf diese Weise können bei diesem Ausführungsbeispiel acht Drehzahlen digital codiert werden. Werden mehr Schalter und mehr Eingänge verwendet, so kann eine höhere Anzahl von Drehzahlen digital vorgegeben werden. Die Schalter 356 etc. können übliche DIP-Schalter sein, wie in Computern üblich, oder z.B. Transistoren, oder es werden an den Eingängen C0, C1 und C2 entsprechende logische Signale durch eine digitale Steuerung vorgegeben..

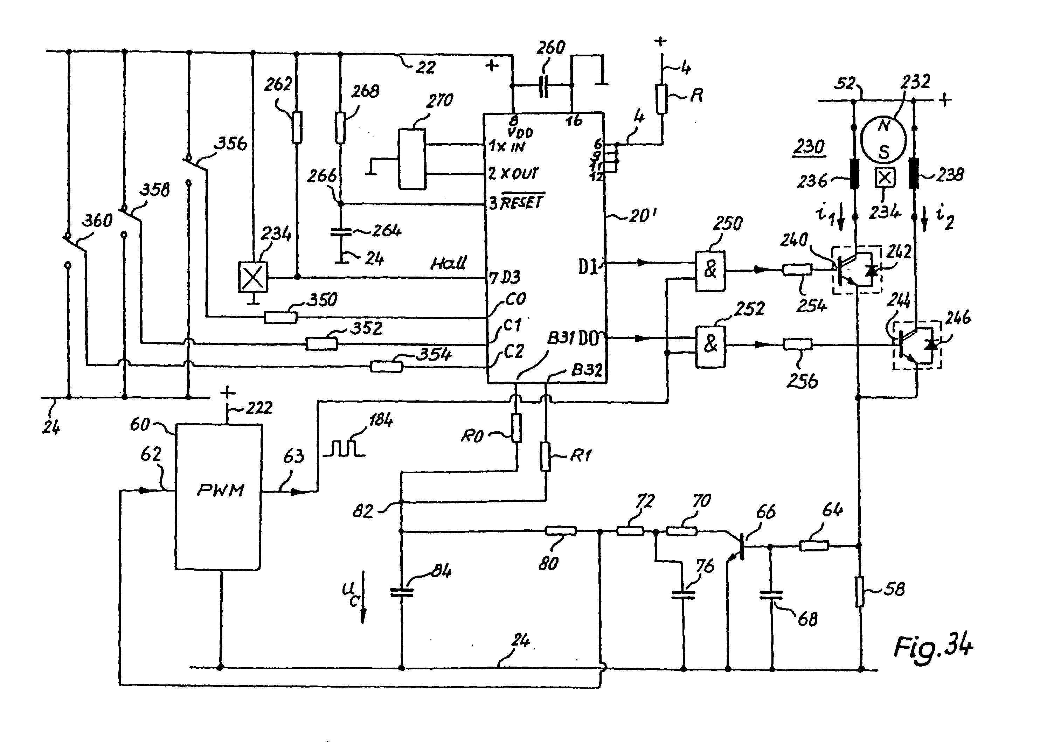

Fig. 34 zeigt die zugehörige Schaltung zur Regelung und Kommutierung eines zweisträngigen Motors 230. (Naturgemäß könnte ein beliebiger anderer Motor verwendet werden, doch ist die Erläuterung bei einem zweisträngigen Motor besonders einfach.) Diese Schaltung stimmt in weiten Teilen mit Fig. 15 überein, und deshalb werden gleiche oder gleichwirkende Teile gewöhnlich nicht nochmals beschrieben, sondern hierzu wird auf die Beschreibung zu Fig. 15 verwiesen.

Das gilt z.B. für den PWM-Steller 60 (vgl. Fig. 13 und 14), für die Strombegrenzung (Widerstand 58 und nachfolgende Teile), und für die Ansteuerung der Kommutierung des Motors 230 über die Ausgänge D0 und D1 des Mikroprozessors 20'. Dieser hat zwei Tristate-Ausgänge B31 und B32. Der Ausgang B31 ist über den Widerstand R0 (vgl. Fig. 31) mit dem Knotenpunkt 82 verbunden, und der Ausgang B32 über den Widerstand R1. Wie angegeben, kann R0 den Wert 100 kΩ und R1 den Wert 120 kΩ haben, wobei sich die Werte auf einen Kondensator 84 von z.B. 3,3 µF beziehen, an dem im Betrieb die Spannung u_{C} entsteht, welche das Tastverhältnis des PWM-Stellers 60 steuert, wenn die Strombegrenzung für den Motor 230 nicht aktiv ist. (Bei aktiver Strombegrenzung steuert diese das Tastverhältnis, wie bereits ausführlich erläutert.)

Wie bei Fig. 32 und 33 beschrieben, wird die Drehzahl digital über die Schalter 356, 358 und 360 vorgegeben, d.h. im Mikroprozessor 20' wird jeder der Signalkombinationen an den Eingängen C0, C1 und C2 ein bestimmter numerischer Wert für eine Drehzahl zugeordnet, gewöhnlich in Form einer halben Periodendauer T/2, z.B. bei 50 U/s und einem zweipoligen Motor einer halben Periodendauer von 10 ms, die dann mit der halben Periodendauer T/2 (vgl. Fig. 26A) des Signals Hall verglichen wird, welche ein Maß für den tatsächlichen Wert der Drehzahl n ist. Wie in Fig. 33 angegeben, können hier numerische Werte für acht verschiedene Drehzahlen vorgegeben werden. Dies ist also eine Variante zu den vorhergehenden Ausführungsbeispielen, bei denen die Differenz zwischen Soll-Drehzahl und Ist-Drehzahl mittels einer analogen Schaltung ermittelt wurde. Alternativ könnte selbstverständlich jeder beliebige Wert für T/2 im Mikroprozessor 20' verwendet werden, so daß jede gewünschte Drehzahl regelbar ist. Für diesen Wert muß dann ein entsprechender Speicher vorgesehen werden.

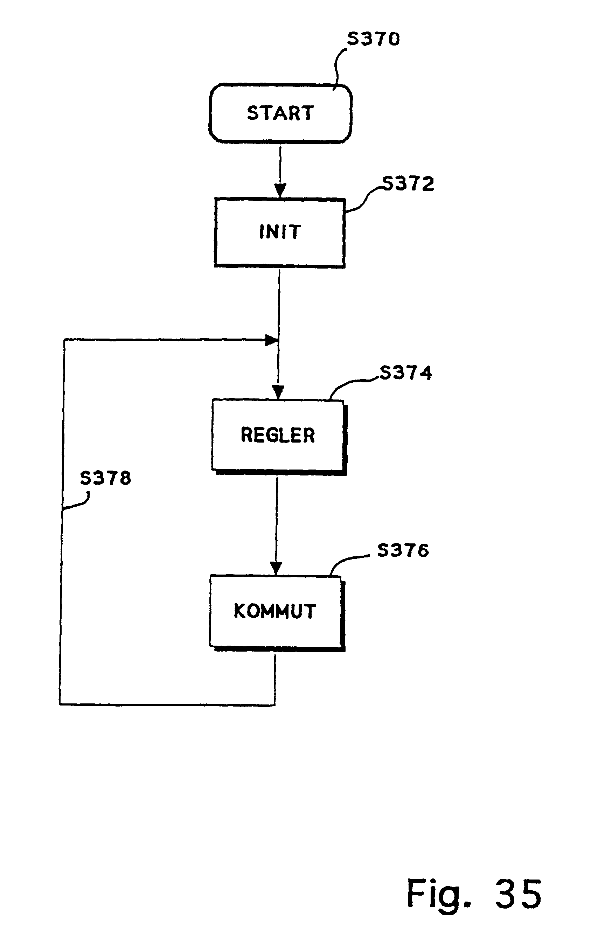

Fig. 35 zeigt den grundlegenden Aufbau des Programms. Im Schritt S370 erfolgt der Start des Programms. Im Schritt S372 erfolgt eine Initialisierung. Der Schritt S374 beinhaltet den Regler, der aus vielen Programmschritten besteht und anhand der nachfolgenden Fig. 37A und 37B erläutert wird. Im Schritt S376 erfolgt ggf.(bei einem elektronisch kommutierten Motor) die Kommutierung. Die Schritte S374 und S376 sind Teil einer Schleife S378, die im Betrieb fortlaufend durchlaufen wird. Bei einem Kollektormotor entfällt S376.

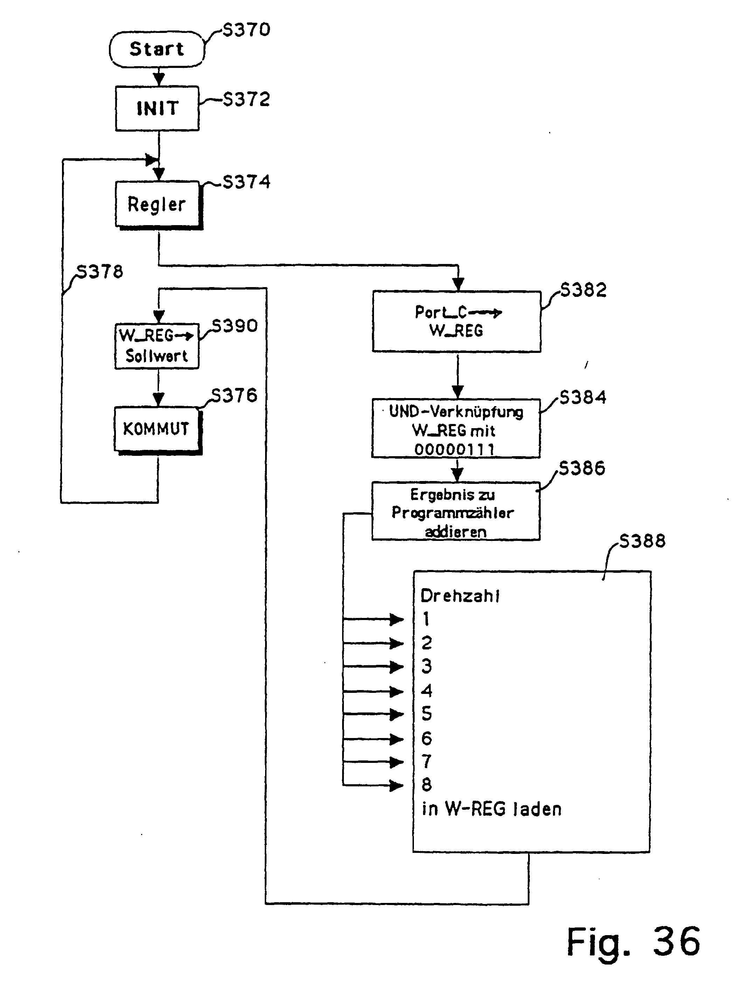

Fig. 36 zeigt die Einstellung des Drehzahl-Sollwerts. Hierbei wird im Schritt S382 das digitale Signal an den Eingangsports C0, C1, C2 in das Arbeitsregister W-REG geladen, und im Schritt S384 wird diese Information mit der Konstanten 00000111 durch eine UND-Verknüpfung verknüpft. Damit sind nur noch die letzten drei Bits relevant, d.h., daß diese Zahl im Schritt S386 zum Programmzähler hinzuaddiert wird und nur aus den letzten drei Bits entsteht. Der Programmzähler (im Mikroprozessor 20') springt also im Schritt S388 in eine der nächsten acht Adressen und übernimmt den dort gespeicherten Sollwert für die Drehzahl n₀ ins Arbeitsregister W-REG. Im Schritt S390 wird diese Information im Hauptprogramm als Sollwert übernommen. Es schließt sich dann bei einem elektronisch kommutierten Motor der Schritt S376, also die Kommutierung, an, und der Regler durchläuft die Schleife S378 fortlaufend.

Da sich durch das fortlaufende Durchlaufen dieser Schleife S378 eine relativ lange Schleifen-Durchlaufzeit ergibt, ist es auch denkbar, den rechten Teil des Flußdiagramms der Fig. 36 nur dann - in Form eines Unterprogramms - aufzurufen, wenn sich das Hallsignal ändert. Dann ergibt sich eine kürzere Schleifen-Durchlaufzeit für den Normalfall, mit Ausnahme derjenigen Schleifen, bei denen sich das Hallsignal ändert. Wie nachstehend erläutert wird, dient die Dauer eines Schleifendurchlaufs zur Zeitmessung, und dabei spielt es keine Rolle, wenn gelegentlich eine der Schleifen eine etwas längere Zeitdauer hat, solange nur die große Majorität der Schleifen eine genau festgelegte Zeitdauer hat..

Fig. 37A und 37B zeigen den Ablauf des Programmabschnitts S374 der Fig. 35 und 36, also den digitalen Teil der Drehzahlregelung.

Die Drehzahlregelung beginnt im Schritt S400. Sie ist Teil der Schleife S378 (Fig. 35 und 36), die im Betrieb ständig durchlaufen wird und für einen Durchlauf z.B. 30 µs benötigt. Bei 3000 U/min und einem zweipoligen Motor beträgt der Abstand T/2 zwischen zwei Kommutierungszeitpunkten 10 ms = 10.000 µs, d.h. zwischen zwei Kommutierungszeitpunkten wird die Schleife S378 über 300 Mal durchlaufen.

Diese Zahl der Durchläufe wird gezählt und stellt den Istwert der Drehzahl dar, nämlich eine Ist-Zeitdauer, die mit der digital vorgegebenen Soll-Zeitdauer verglichen wird, deren Einstellung bei Fig. 36 beschrieben wurde.

Bei jedem Durchlauf wird in den Schritten S402, 404 und 406 geprüft, ob sich das Signal Hall geändert hat. Ist z.B. in den Schritten S402 und 404 Hall = 0 und Hall-Alt ebenfalls gleich 0, so hat sich das Hallsignal nicht geändert. Ist aber Hall = 0 und Hall-Alt = 1, so hat sich das Signal geändert, und deshalb wird dann im Schritt S408 Hall-Alt gelöscht, also auf "0" gesetzt, d.h. der neue Hallwert wird im Register Hall-Alt gespeichert.

Sind in den Schritten S402 und 406 Hall = 1 und Hall-Alt = 1, so hat sich das Hallsignal ebenfalls nicht geändert. Ist aber Hall = 1 und Hall-Alt = 0, so hat sich das Hallsignal geändert, und deshalb wird im Schritt S410 das Register Hall-Alt auf "1" gesetzt. Auf diese Weise kann beim darauffolgenden erneuten Wechsel des Hallsignals wiederum der Wechsel sicher erkannt werden.

Bei jedem Hallwechsel geht das Programm also zum Schritt S412, und dort werden beide Ports B31 und B32 auf Tristate gesetzt, also auf hochohmig, vgl. Fig. 20 und die zugehörige Beschreibung, wo dieser Zustand erläutert ist. Da beide Ports B31 und B32 in diesem Fall hochohmig sind, kann in Fig. 34 über die Widerstände R0 und R1 kein Strom fließen, d.h. an der Ladung des Kondensators 84, und damit am Strom im Motor, ändert sich nichts. Man kann das auch als Neutralstellung des Reglers bezeichnen. Diese Umschaltung auf Tristate erfolgt unabhängig davon, ob die Ports B31 und B32 noch aktiv oder bereits auf Tristate umgeschaltet waren.

In S414 wird die im vorhergehenden Durchlauf durch die Schleife S378 ermittelte Regeldifferenz, also der Wert RGL-DIFF, der vor der Änderung des Hallsignals erreicht wurde, als Altwert in das Register RGL-DIFF-Alt geschoben. Dieses Signal hat die Funktion des beim vorhergehenden Beispiel beschriebenen Signals ε', ist also der Altwert der Regelabweichung.

In S416 wird aus dem Sollwert (der, z.B. über die Schalter 356, 358, 360, digital vorgegeben wurde und deshalb als numerischer Wert vorliegt) und dem Istwert-Zählerstand (wird nachfolgend erläutert) die Regeldifferenz RGL-DIFF ermittelt. Diese hat, wie bereits beschrieben, ein positives Vorzeichen +VZ, wenn die Drehzahl n zu niedrig ist, und ein Minusvorzeichen -VZ, wenn n zu hoch ist. Das Vorzeichen wird in S418 aus dem Carry-Flag für das Signal RGL-DIFF ermittelt.

Ist in S418 das Carry-Flag gesetzt, also gleich "1", was anzeigt, daß ein Übertrag stattgefunden hat, so wird im Schritt S420 VZ ebenfalls gesetzt. Dies bedeutet, daß das Signal RGL-DIFF negativ ist. Ist das Ergebnis im Schritt S418 Null, so wird das Register VZ im Schritt S422 gelöscht (VZ=0), und dies bedeutet, daß RGL-DIFF positiv ist.

Vor den Schritten S420 und S422 muß das alte Signal VZ (von der vorhergehenden Drehzahlmessung) in ein Register VZ-S geschoben werden, und dies geschieht in den Schritten S424 und S426. Damit ist dann das Vorzeichen der alten Regeldifferenz RGL-DIFF-Alt (vgl. Schritt S414) ebenfalls gespeichert. Dieses Vorzeichen wird nachfolgend für die Steuerung des Tristate-Ports B32 benötigt, vgl. den Schritt S456.

In S428 wird die neue Regeldifferenz RGL-DIFF, die in S416 erreicht wurde, in die Variable "PI-ANTEIL" umgeladen. Sie entspricht dem Wert ε beim vorhergehenden Ausführungsbeispiel.

Ebenso wird in S430 die Alt-Regeldifferenz (Schritt S414) RGL-DIFF-Alt in die Variable NUR-P-Anteil umgeladen. Sie entspricht im vorhergehenden Ausführungsbeispiel dem Altwert ε'.

Im Schritt S432 wird der Istwertzähler gelöscht, da sein Resultat im Schritt S416 ausgewertet worden ist, und es beginnt also beim nächsten Durchlauf durch die Schleife S378 eine neue Messung in diesem Zähler.

Im Schritt S434 ist dann für diesen Fall (Wechsel des Hallsignals) der Durchlauf des Regelvorgangs beendet, und gemäß Fig. 35 schließt sich jetzt S376, also die Prüfung und Steuerung der Kommutierung an, bevor die Schleife S378 erneut durchlaufen wird. S376 ist nur erforderlich, falls ein elektronisch kommutierter Motor verwendet wird. Bei einem Kollektormotor, wie in Fig. 1, entfällt dieser Schritt.

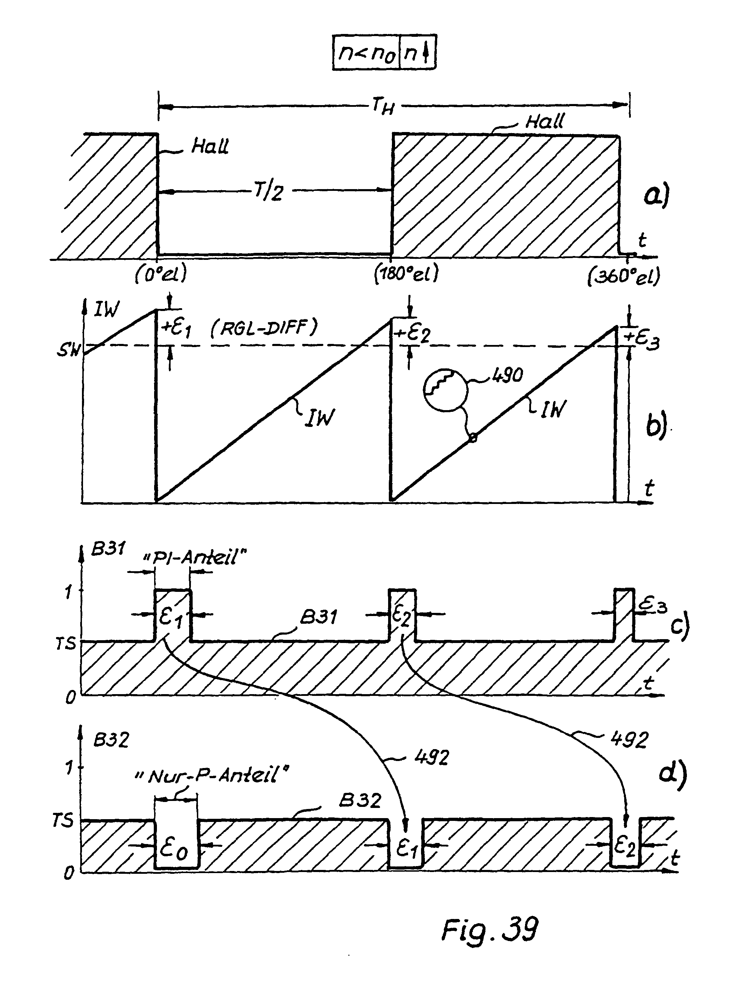

Ein neuer Durchlauf durch den Reglerteil beginnt beim Schritt S400. Wird in diesem Fall in den Schritten S402, 404, 406 kein Wechsel des Hallsignals erkannt, so gelangt das Programm zum Schritt S436, wo der Istwertzähler (im Mikroprozessor 20') bei jedem Durchlaufen der Schleife S378 um 1 erhöht wird, d.h. der Inhalt dieses Zählers entspricht bei einem Wechsel des Hallsignals der Zeit T/2 für die halbe Periodendauer der tatsächlichen Drehzahl. Im Schritt S436 wird also - durch Zählen der Zahl der Schleifen S378 (die eine konstante Zeitdauer haben) - der Istwert des Wertes T/2 (vgl. Fig. 39) ermittelt.

Im Schritt S438 wird von der Variablen PI-Anteil (vgl. S428), also vom aktuellsten Wert der Regeldifferenz, der Wert 1 abgezogen. Im Schritt S440 wird abgefragt, ob durch den Schritt S438 die Variable PI-Anteil zu 0 geworden ist. Ist dies nicht der Fall, geht das Programm über den Schritt S442, wo das Vorzeichen VZ abgefragt wird, entweder zum Schritt S444, wo der Port B31 auf HIGH geschaltet, also der Kondensator 84 über den Widerstand R0 geladen wird (Drehzahl zu niedrig), oder zum Schritt S446, wo der Port B31 auf LOW geschaltet, also der Kondensator 84 über den Widerstand R0 entladen wird (Drehzahl zu hoch). Solange also die Variable PI-ANTEIL nicht zu 0 geworden ist, wird der Kondensator 84 über den Widerstand R0 entweder geladen oder entladen, abhängig vom Signal VZ (vgl. Schritte S420, 422). Dies geschieht hier - im Unterschied zu den vorhergehenden Ausführungsbeispielen - immer im Anschluß an einen Wechsel des Hallsignals, d.h. während bei den vorhergehenden Ausführungsbeispielen pro Rotordrehung von 360° el. nur ein einziger Regelvorgang stattfindet, wird bei diesem Beispiel pro Rotordrehung von 360° el. zweimal geregelt, und der Regler ist folglich schneller und genauer.

Bildlich gesprochen kann man sagen, daß die in S416 ermittelte Regeldifferenz RGL-DIFF nach jedem Wechsel des Hallsignals direkt am Port B31 "gespiegelt" wird, und das bedeutet, daß auf eine gemessene Änderung der Drehzahl sofort und effektiv reagiert wird. Dies ist eine Folge davon, daß für die Messung von RGL-DIFF bei diesem Beispiel nur 180° el. benötigt werden, und nicht 360° el. wie bei den vorhergehenden Beispielen.

Wird in S440 die Variable PI-ANTEIL zu 0, bevor sich das Hallsignal ändert, so wird in S448 der Port B31 auf Tristate gesetzt, also hochohmig gemacht, so daß die Ladung des Kondensators 84 ab diesem Zeitpunkt vom Port B31 nicht mehr beeinflußt wird. Dies gilt z.B. auch dann, wenn der Motor 230 exakt mit der gewünschten Drehzahl läuft, da dann die im Schritt S416 erfaßte Variable PI-ANTEIL = 0 ist, d.h. in diesem Fall wird die Ladung des Kondensators 84 überhaupt nicht verändert.

Nach Durchlaufen von S448 bleibt also der Port B31 mindestens bis zum nächsten Wechsel des Hallsignals hochohmig. Im Schritt S450 wird die Variable PI-ANTEIL wieder auf 1 gesetzt, damit sie beim nächsten Durchlauf der Schleife S378 in S438 wieder zu 0 gemacht wird (und nicht den Wert 255 annimmt, was in diesem Fall der auf 0 folgende nächste Wert wäre).

In S452 wird von der Variablen NUR-P-Anteil (vgl. S430), also vom Altwert (ε') der Regeldifferenz, ebenfalls bei jedem Durchlauf der Schleife S378 der Wert 1 abgezogen. Falls danach dieser Wert positiv ist, was in S454 geprüft wird, wird in S456 das Vorzeichen der Variablen NUR-P-Anteil geprüft. Ist in S456 die Antwort NEIN, so wird in S458 der Port B32 auf LOW geschaltet (vgl. den Unterschied zu S444, wo der Port B31 im analogen Fall auf HIGH geschaltet wird, d.h. in S458 wird das Vorzeichen VZ' von ε' invertiert ausgewertet, wie bei den Fig. 22 ff. ausführlich erläutert. Die Invertierung erfolgt durch die Software, wie hier beschrieben.)

Ist die Antwort im Schritt S456 JA, so wird in S460 der Port B32 auf HIGH geschaltet, ebenfalls im Gegensatz zum analogen Schritt S446. Wie anhand der Fig. 23 bis 28 bereits ausführlich erläutert, hat diese Steuerung der Ports B31 und B32 die Folge, daß sich ein PI-Verhalten des Reglers ergibt.

Wenn die Variable NUR-P-Anteil im Schritt S454 den Wert 0 hat, wird in S462 der Port B32 hochohmig gemacht, also in seine Neutralstellung geschaltet, so daß er keinen Einfluß mehr auf die Ladung des Kondensators 84 hat, und anschließend wird, analog zu S450 und aus den gleichen Gründen, im Schritt S464 die Variable NUR-P-Anteil wieder um den Wert 1 erhöht.

Im Anschluß an die Schritte S458, S460 oder S464 endet der Regelabschnitt, und das Programm geht zum Schritt S436 und dann weiter zur Steuerung der Kommutierung und durchläuft anschließend erneut die Schleife S378.

Auch die Variable NUR-P-Anteil wird direkt im Anschluß an einen Wechsel des Hallsignals am Port B32 "gespiegelt".

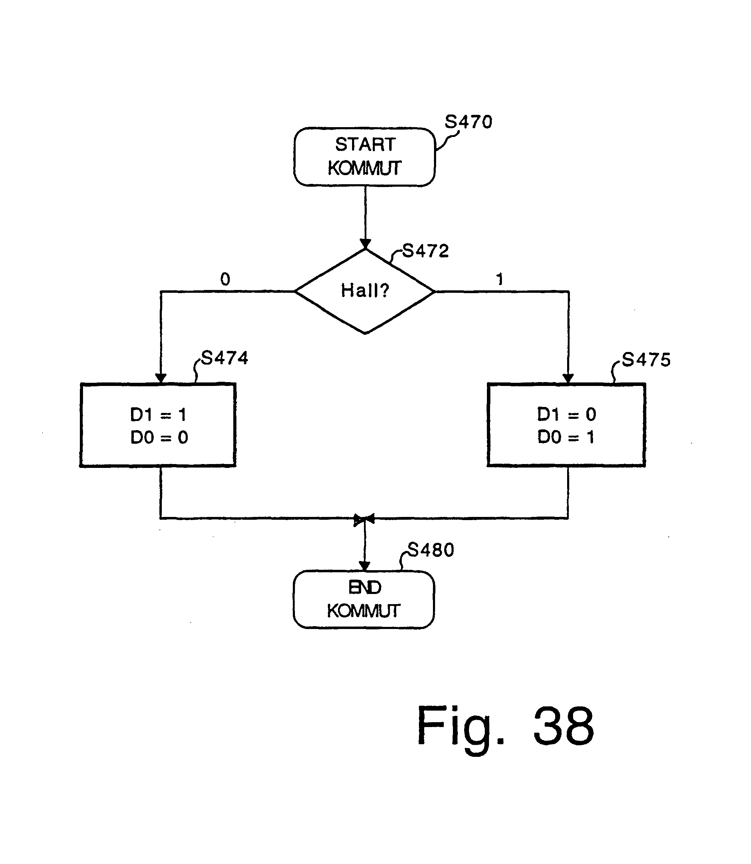

Das Kommutierungsprogramm (Fig. 38) startet im Schritt S470. Im Schritt 472 wird das Hallsignal abgefragt. Falls Hall = 0 ist, wird im Schritt S474 der Ausgang D1 des Mikroprozessors 20' (Fig. 34) zu 1 und der Ausgang D0 zu 0 gemacht, d.h. der Wicklungsstrang 236 erhält einen Strom i₁, und zwar in Form von kurzen Impulsen mit einer Frequenz von z.B. 25 kHz, deren Tastverhältnis durch den PWM-Steller 60 bestimmt wird.

Ist im Schritt S472 Hall = 1, so wird im Schritt S475 D1 = 0 und D0 = 1, d.h. der Strang 238 erhält einen Strom i₂, ebenfalls in Form der beschriebenen Impulse. Die Signale D0 und D1 bleiben jeweils solange gespeichert, bis sie durch das Programm umgeschaltet werden. Dies gilt auch für die vorhergehenden Beispiele. Im Schritt S480 endet das Kommutierungsprogramm und geht dann weiter zur Schleife S378, vgl. die Fig. 35 und 36.

Fig. 39 zeigt den Fall, daß die Drehzahl n zu niedrig ist, aber durch den Regelvorgang ansteigt. Bei a) ist das Signal Hall während einer Rotordrehung von 360° el. in zeitlichem Maßstab dargestellt. Bei b) ist der Zählerstand des Istwertzählers (im Mikroprozessor 20') dargestellt, welcher numerisch die Zahl der Schleifen S378 zwischen 0° el. und 180° el., und zwischen 180° el. und 360° el., zählt. SW ist der numerische Sollwert für die Drehzahl, IW der Zählerstand des Istwertzählers. Bei 490 ist in Form einer Vergrößerung gezeigt, daß die Kurve IW die Form kleiner Treppen hat, da jeweils im Schritt S436 eine Erhöhung des Werts IW um 1 stattfindet.

Bei 0° el., 180° el., 360° el. etc. wird der Wert RGL-DIFF gemessen (Schritt S416), und man erhält dafür Werte ε1, ε2, ε3, etc., die als positiv angenommen sind, da die Drehzahl zu niedrig ist.

Der Port B31 (Fig. 39c) ist bis zur Rotorstellung 0° el. auf Tristate (Fig. 39: TS), und geht dann bei 0° el. während der Zeit ε₁ auf "1", was durch die Schritte S438, 442 und 444 bewirkt wird. Nach Ablauf von ε₁ (= PI-ANTEIL) wird der Port im Schritt S448 wieder auf TS geschaltet.

Der Port B32 (Fig. 39d) ist bis zur Rotorstellung 0° el. ebenfalls auf TS und geht dann für die Zeitdauer RGL-DIFF-Alt (Schritt S430) auf "0". Diese Zeitdauer ist hier mit ε₀ bezeichnet. Nach Ablauf von ε₀ wird der Port B32 durch den

Schritt S462 wieder auf TS gesetzt.

Wie durch die Pfeile 492 angedeutet, wird immer der "alte" Wert von ε bei einem darauffolgenden Regelzyklus mit umgekehrtem Vorzeichen für die Steuerung des Ports B32 verwendet. Dies ist die Folge des Schritts S430.

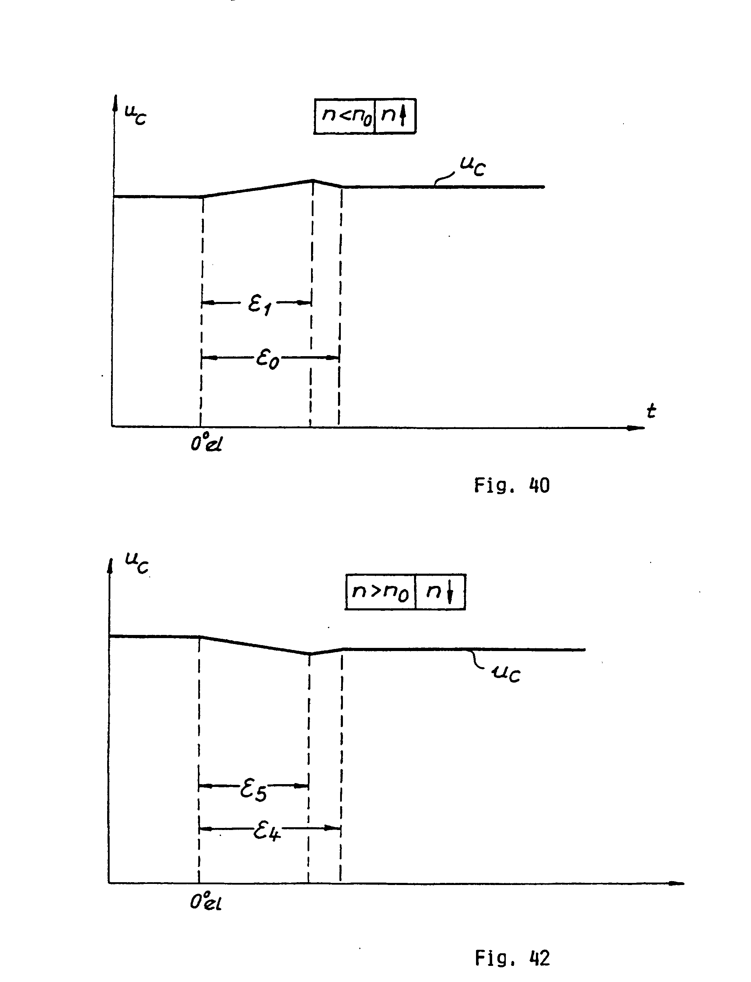

Fig. 40 zeigt - in übertriebener Weise - den entsprechenden Verlauf der Spannung u_{C} am Kondensator 84. Solange B31 auf "1" und gleichzeitig B32 auf "0" ist, also während der Zeitdauer ε₁, erhöht sich die Spannung u_{C}. Nach dem Ablauf von ε₁ ist B31 auf TS, und nur noch B32 ist auf "0", so daß sich bis zum Ablauf von ε₀ die Spannung u_{C} wieder etwas erniedrigt. Dieser Ablauf entspricht exakt Fig. 24h, wie man ohne weiteres erkennt. Der Unterschied liegt darin, daß bei Fig. 24 während einer Rotordrehung von 360° el. nur ein einziger Regelvorgang stattfindet, bei Fig. 39 aber zwei Regelvorgänge, so daß dieser Regler schneller und exakter arbeitet. Das Arbeitsprinzip ist jedoch dasselbe.

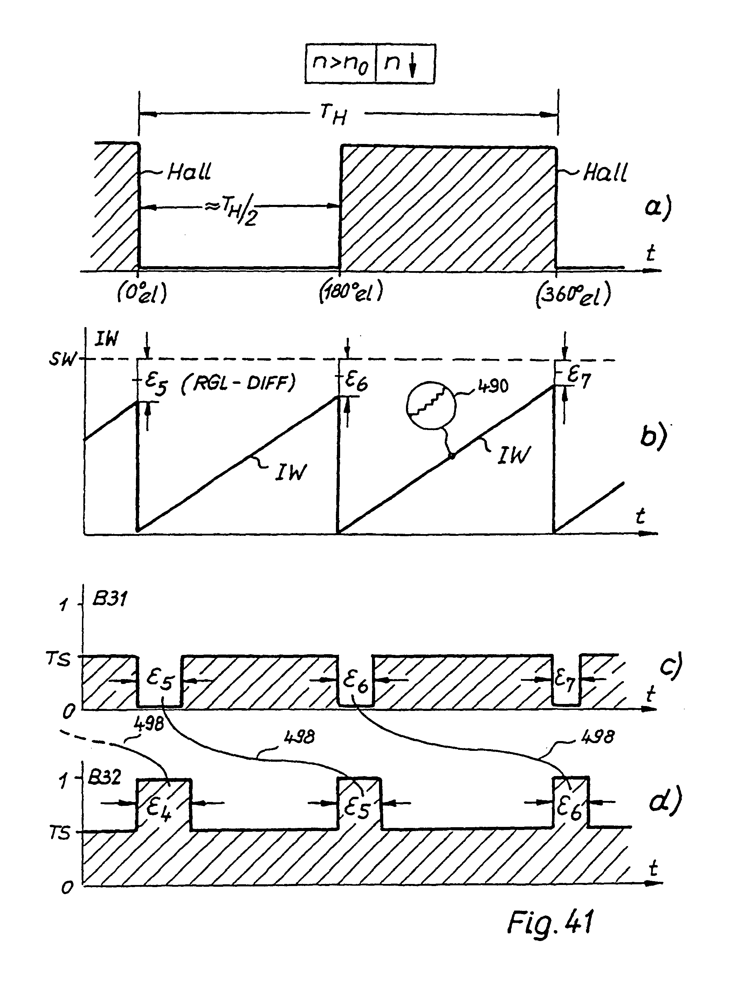

Fig. 41 zeigt den Fall, daß die Drehzahl n zu hoch ist, aber durch den Regelvorgang fällt. Fig. 41a entspricht im wesentlichen Fig. 39a, d.h. die Darstellung erfolgt zeitabhängig und nicht winkelabhängig, weshalb die Winkel in Klammern geschrieben sind.

In Fig. 41b ist wieder der Zählerstand IW des Istwertzählers (im Mikroprozessor 20') dargestellt, der gemäß der Vergrößerung 490 Treppenform hat. Bei der Rotorstellung 0° el. ergibt sich ein Wert RGL-DIFF, der dort als negativ angenommen wird und mit -ε₅ bezeichnet ist, ebenso bei 180° el. -ε₆, bei 360° el. -ε₇, etc.

Durch den Regelvorgang nehmen diese Werte ab, was stark übertrieben dargestellt ist, da man sonst das Prinzip schlecht verstehen würde.

Beginnend ab 0° el. wird der Port B31 auf LOW geschaltet, und zwar während der Zeitdauer von ε₅. Dies geschieht durch die Schritte S440, 442 und 446. Nach Ablauf von ε₅ wird er - im

Schritt S448 - wieder auf TS geschaltet.

Ebenfalls beginnend ab 0° el. wird der Port B32 (Fig. 41d) auf "1" geschaltet, und zwar während der Dauer von RGL-DIFF-Alt (Schritt S430), die hier mit ε₄ bezeichnet ist. Dies geschieht in den Schritten S452, 456 und 460. Nach Ablauf von ε₄ wird B32 im Schritt S462 wieder auf TS geschaltet.

Die Pfeile 498 zeigen, daß für den Port B32 immer der vorhergehende ε-Wert mit umgekehrtem Vorzeichen verwendet wird, was im Schritt S430 bewirkt wird.

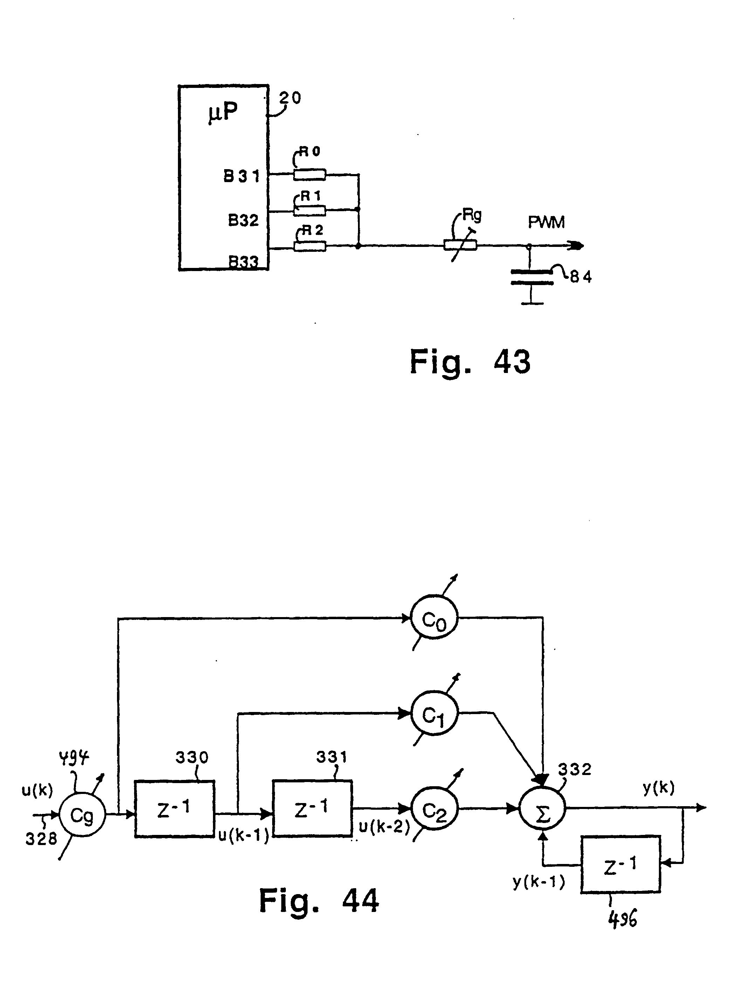

Fig. 42 zeigt den Verlauf der Spannung u_{C}, beginnend ab 0° el., und - gegenüber Fig. 41 - in einer vergrößerten Zeitskala. Während der Zeitdauer von ε₅ sind B31=0 und B32=1, so daß diese Spannung sinkt. Nach Ablauf von ε₅ wird B31=TS, und nur noch B32 bleibt HIGH ("1") bis zum Ablauf von ε₄, und während dieser Restzeit steigt u_{C} wieder etwas an. Dies entspricht der Darstellung von Fig. 27.

Sofern in Fig. 34 der Widerstand R1 den Wert ∞ hat, arbeitet der Regler ebenfalls, aber etwas weniger perfekt. In vielen Fällen genügt eine solche Einfachausführung, bei der dann auch die entsprechenden Programmschritte S454 bis S464 entfallen (oder übersprungen werden) können.

Wie die Zahl von dargestellten und beschriebenen Beispielen zeigt, ist das beschriebene Regelprinzip sehr variationsfähig, und es sind vielfache weitere Abwandlungen und Modifikationen möglich. Sofern z.B. eine Temperatur geregelt werden soll, ist es notwendig, eine repetitive Abtastung der Temperaturwerte vorzunehmen, z.B. einmal jede Millisekunde, und anschließend zu regeln. Bei einem Motor wäre dies - zur Regelung der Drehzahl - ebenfalls möglich, doch ist es für die Regelung der Drehzahl im allgemeinen wesentlich vorteilhafter, wenn der augenblickliche Drehzahlwert dann bestimmt wird, wenn bei einer vorgegebenen Drehstellung des Motors eine entsprechendes Signal erzeugt wird, z.B. ein Hallsignal, wie vorstehend beschrieben, da dann die Bestimmung der Regelabweichung und ihres Vorzeichens besonders einfach werden.

In manchen Fällen kann es vorteilhaft sein, die Regelparameter (P, I, D) gemeinsam zu verändern. Wenn z.B. ein solcher Drehzahlregler für einen anderen Motortyp angepaßt werden soll, ändern sich zwar die Werte der Regelparameter, aber gewöhnlich nicht ihr Verhältnis zueinander, da dieses bei den meisten Elektromotoren sehr ähnlich ist.

Fig. 43 zeigt, wie eine solche Änderung mittels eines gemeinsamen Widerstands Rg (z.B. Potentiometer 0...45 kΩ) leicht vorgenommen werden kann. In einem solchen Fall braucht man die Widerstände R0, R1 und R2 nicht zu ändern, sondern nur das Potentiometer Rg neu einzustellen, um den Regler an einen anderen Motor anzupassen.

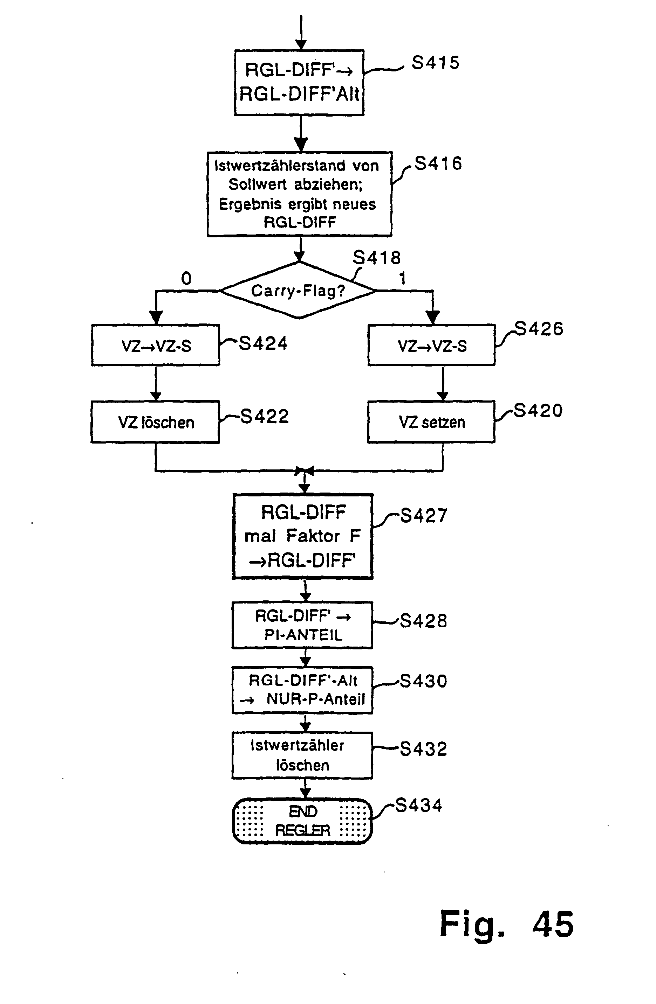

Fig. 44 zeigt das gleiche Prinzip am Eingang eines Reglers, wo im Verstärker 494 die Gesamtverstärkung Cg verändert werden kann. Fig. 44 zeigt auch, wie bei 496 der Anteil y₍ₖ₋₁₎ für den Summenpunkt 332 erzeugt wird.

Fig. 45 zeigt an einem Ausschnitt aus Fig. 37 und als Variante zu dieser, wie man durch eine Ergänzung des Flußdiagramms einen Verstärkungsfaktor F (entspricht Cg in Fig. 44) realisieren kann. Hierzu wird die Größe RGL-DIFF, die im Schritt S416 ermittelt wurde, im Schritt S427 mit dem Faktor F multipliziert, z.B. verdoppelt, so daß man die Größe RGL-DIFF' erhält, und diese wird dann im Schritt S428 als PI-ANTEIL ε verwendet. Ebenso wird im Schritt S415 diese Größe als RGL-DIFF'-Alt gespeichert, und diese Größe wird im Schritt S430 als P-Anteil verwendet, also als ε'. Auf diese Weise erhält man z.B. eine größere Regelverstärkung, und man kann dann anschließend gemäß Fig. 43 mit dem Potentiometer Rg eine Feinjustierung vornehmen, ohne daß man dazu das Programm ändern muß.

Die in Fig. 43 dargestellte Modifikation ist in der gleichen Weise auch bei den Fig. 1, 3, 11, 12, 18, 21 und 34 möglich.

Eine Modifikation analog Fig. 45 ist bei Fig. 1 bis 28 nicht möglich, da dort der Vorgang der Veränderung der Ladung des Kondensators 84 gleichzeitig mit der Erfassung der Regelabweichung DIFF abläuft. Dagegen wird bei dem Ausführungsbeispiel nach den Fig. 32 bis 42 zuerst die Regelabweichung RGL-DIFF ermittelt (Schritt S416), bevor anschließend (Schritte S438 bis S464) die Ladung des Kondensators 84 verändert wird, und deshalb kann hier der Wert (RGL-DIFF*Faktor F; S427) für die Veränderung der Ladung des Kondensators 84 verwendet werden. Der Faktor F kann ggf. von außen in den Motor eingegeben werden, um dessen Regelcharakteristik zu ändern.

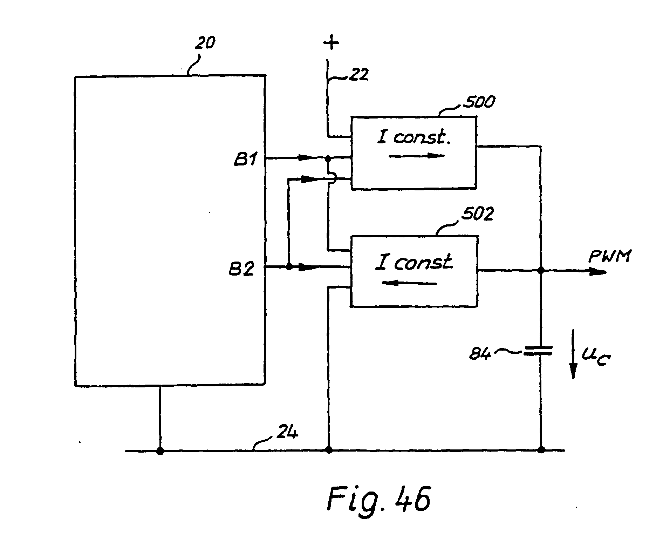

Fig. 46 zeigt eine Variante zu Fig. 1/Fig. 3/Fig. 18. Bei der Schaltung gemäß Fig. 3 nimmt der Ladestrom durch den Widerstand 94 ab, wenn die Spannung u_{C} am Kondensator 84 ansteigt. Ebenso nimmt der Entladestrom durch den Widerstand 90 ab, wenn die Spannung u_{C} am Kondensator 84 abnimmt. Hierdurch entstehen Nichtlinearitäten, die man aber bei den meisten An-wendungen tolerieren kann, da sich ja im Betrieb der Kondensator 84 auf eine Sollspannung u_{0C} auflädt, welche der Solldrehzahl n₀ entspricht, und im Bereich dieser Sollspannung ist die Abhängigkeit dieser Ströme von kleinen Schwankungen um den Wert u_{0C} sehr gering.

Sofern man jedoch hier jedes Problem vermeiden will, kann man gemäß Fig. 46 eine Konstantstromquelle 500 für den Ladestrom des Kondensators 84 verwenden, die eingeschaltet wird, wenn B1=B2=1 ist, und die ausgeschaltet wird, wenn B1=0 und B2=1 ist.

Ebenso kann man für den Entladestrom des Kondensators 84 eine Konstantstromquelle 502 verwenden, welche eingeschaltet wird, wenn B1=B2=0 ist, und welche ausgeschaltet wird, wenn B2=1 und B1=0 ist, vgl. die Tabelle der Fig. 4. In diesem Fall wird dem Kondensator 84 durch die Konstantstromquelle 500 pro Zeiteinheit eine konstante Ladungsmenge zugeführt, und ebenso wird durch die Konstantstromquelle 502 dem Kondensator 84 pro Zeiteinheit eine konstante Ladungsmenge entnommen, unabhängig von der Größe der Spannung u_{C}. Dies kann in manchen Fällen von Vorteil sein.

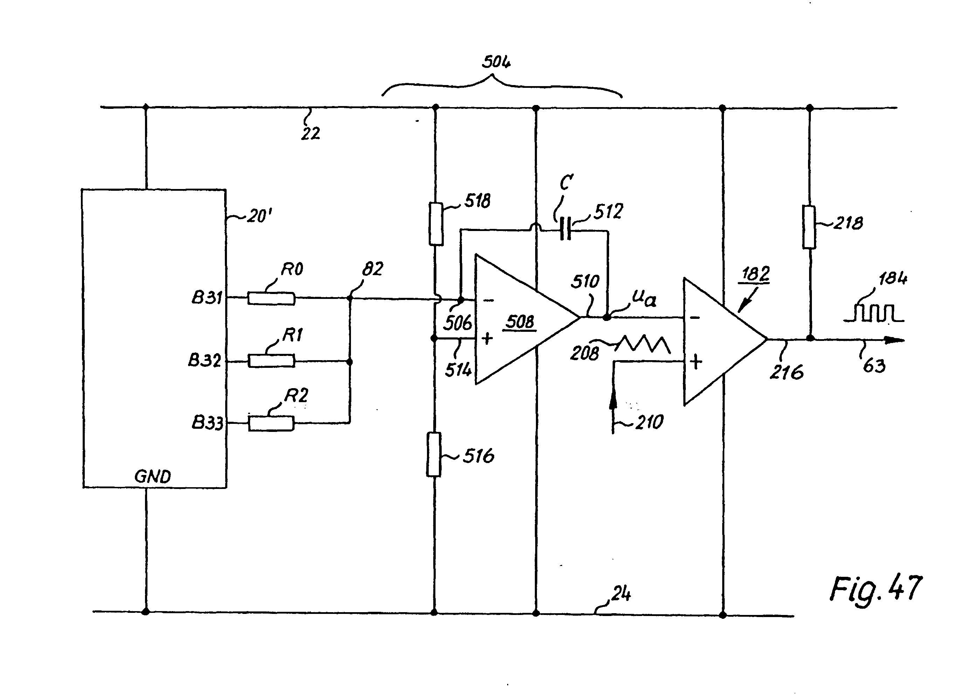

Fig. 47 zeigt eine Variante für die Speicheranordnung, in Form eines Integrators 504 mit Summeneingang 506. Der Knotenpunkt 82 (Fig. 31; Fig. 34) ist an diesen Summeneingang 506 eines Operationsverstärkers 508 angeschlossen, dessen Ausgang 510 über einen Kondensator 512 (mit dem Wert C) mit dem Summeneingang 506 verbunden ist, welcher der Minuseingang des Komparators 508 ist. Der Pluseingang 514 ist über einen Widerstand 516 mit der Minusleitung 24 und über einen Widerstand 518 mit der Plusleitung 22 verbunden. Beide Widerstände 516, 518 können gleich groß sein.

Typische Werte für die Widerstände R0, R1 und R2 wurden vorstehend bereits angegeben. Die Widerstände 516 und 518 können z.B. je 500 kΩ haben, d.h. wenn die Spannung zwischen Plusleitung 22 und Minusleitung 24 5 V beträgt, liegt der +Eingang auf +2,5V, und der Integrator 504 integriert folglich nach beiden Richtungen. Der Kondensator 512 kann z.B. 100 nF haben.

Liegt der Port B31 des Mikroprozessors 20' auf dem positivem Potential der Plusleitung 22, so integriert diese Schaltung mit der Zeitkonstanten R₀C das Ausgangssignal ua am Ausgang 510. Dies gilt für alle Ports B31, B32, B33, d.h. die Integration hängt ab von den Potentialen an diesen drei Ports, gewichtet mit den Faktoren R0, R1 und R2. Dadurch arbeitet diese Schaltung als Speicheranordnung, analog dem Kondensator 84 der Fig. 34, wobei in diesem Fall die Spannung am Kondensator 512 ansteigt.

Da bei Zunahme der Spannung am Kondensator 512 die Spannung uₐ am Ausgang 510 sinkt, ist der Verlauf der Spannung uₐ invers zum Verlauf der Spannung u_{C} in Fig. 34.

Liegt einer der Ports B31, B32, B33 auf 0 V, so wird die Spannung am Kondensator 512 durch den Integrationsvorgang niedriger, d.h. die Ausgangsspannung uₐ steigt in diesem Fall.

Aus diesem Grund muß in Fig. 13 diese Ausgangsspannung uₐ dem Minuseingang des Komparators 182 zugeführt werden, während die Dreieckspannung 208 dem Pluseingang zugeführt wird, wie in Fig. 47 dargestellt. Dann arbeitet der PWM-Steller 60 in der gleichen Weise, wie das bei Fig. 13 beschrieben wurde.

Die Schaltung nach Fig. 47 ist noch genauer als eine Schaltung mit Kondensator 84, da die beschriebenen Integrationsvorgänge unabhängig von der Spannung am Kondensator 512 ablaufen.Die Kosten sind praktisch dieselben, da Operationsverstärker sehr preiswert sind.

Naturgemäß sind vielfache weitere Abwandlungen und Modifikationen möglich, ohne den Rahmen der vorliegenden Ansprüche zu verlassen.

## Patentansprüche

1. Verfahren zum Regeln der Drehzahl eines Motors, der ein im Betrieb rotierendes Teil - im folgenden Rotor genannt - und ein im Betrieb nicht rotierendes Teil - im folgenden Stator genannt - aufweist, mit folgenden Schritten:
a) bei einer vorgegebenen ersten Winkelstellung (Fig. 10: α1) des Rotors relativ zum Stator wird die zeitabhängige Veränderung der Ladung einer ersten Speicheranordnung (34) gestartet;
b) ein Messzeitpunkt (Fig. 8: t1; Fig. 10: t7) wird erfasst, an welchem die Ladung (u34) der ersten Speicheranordnung (34) etwa einen vorgegebenen Wert ("Sollwert") erreicht;
c) wenn der Messzeitpunkt (Fig. 8: t1) vor einem zweiten Zeitpunkt (Fig. 8: t2) liegt, an welchem der Rotor im Betrieb einen vorgegebenen Winkelweg (Fig. 10: β)relativ zur ersten Winkelstellung (Fig. 10: α1)zurückgelegt hat, wird während des zwischen Messzeitpunkt und zweitem Zeitpunkt gelegenen Zeitintervalls (Fig. 8: t1 bis t2) die Ladung einer zweiten Speicheranordnung (84) in einer vorgegebenen Richtung zeitabhängig verändert;
d) wenn der Messzeitpunkt (Fig. 10: t7) zeitlich nach dem zweiten Zeitpunkt (Fig. 10: t6) liegt, wird während des zwischen ihnen gelegenen Zeitintervalls (Fig. 10: t6 bis t7) die Ladung der zweiten Speicheranordnung (84) in einer zur vorgegebenen Richtung entgegengesetzten Richtung verändert;
e) abhängig von der Größe der Ladung der zweiten speicheranordnung (84) wird die dem Motor pro Zeiteinheit zugeführte Energie gesteuert (Fig. 1; Fig. 15).

2. Verfahren nach Anspruch 1, bei welchem die dem Motor zugeführte Energie ein impulsförmiger elektrischer Strom (i) ist, der durch ein von der Größe der Ladung der zweiten Speicheranordnung (84) abhängiges Verändern seines Tastverhältnisses (TV) mittels Impulsbreitenmodulation (PWM) gesteuert wird.

3. Verfahren nach Anspruch 1 oder 2, bei welchem die erste Winkelstellung (Fig. 10: α1)durch die beim Übergang von einem Nordpol zu einem Südpol, oder umgekehrt, auftretende Potentialänderung des Ausgangssignals eines im oder am Motor vorgesehenen Hallsensors (Fig. 15: 234) vorgegeben wird.

4. Verfahren nach Anspruch 3, bei welchem der vorgegebene Winkelwert (Fig. 10: β)definiert wird durch einen sich an die erste Winkelstellung (α1)anschließenden, im wesentlichen konstanten Bereich der Ausgangsspannung des Hallsensors (234).

5. Verfahren nach einem oder mehreren der Ansprüche 2 bis 4, bei welchem zur Steuerung des Stromes im Motor ein PWM-Steller (60) verwendet wird, welcher abhängig von einer seinem Eingang (62) zugeführten Steuerspannung das Tastverhältnis (TV) seines Ausgangssignals ändern kann, wobei die Steuerspannung für ein Tastverhältnis von 0 % von Null verschieden ist und dasselbe Vorzeichen hat wie für höhere Tastverhältnisse benötigten Steuerspannungen.

6. Verfahren nach einem oder mehreren der vorhergehenden Ansprüche, bei welchem dann, wenn der Messzeitpunkt (Fig. 8: t1) vor dem zweiten Zeitpunkt (Fig. 8: t2) liegt, die Veränderung der Ladung der zweiten Speicheranordnung (84) in der vorgegebenen Richtung mit einer zeitabhängigen Rate erfolgt, deren Absolutwert höher ist als der Absolutwert der zeitabhängigen Rate für die Veränderung der Ladung dann, wenn der Messzeitpunkt (Fig. 10: t7) nach dem zweiten Zeitpunkt Fig. 10: t6) liegt.

7. Verfahren nach einem oder mehreren der vorhergehenden Ansprüche, bei welchem Ladung und Entladung der ersten Speicheranordnung (34) über einen Mikroprozessor (20) gesteuert werden.

8. Verfahren nach Anspruch 7, bei welchem das für den Mikroprozessor (20) vorgesehene Flussdiagramm für die Ladung bzw. Entladung der ersten und zweiten Speicheranordnung (34 bzw. 84) die Struktur eines Binärbaumes (Fig. 7) aufweist.

9. Verfahren nach Anspruch 7 oder 8, bei welchem das Programm für die Steuerung der Ladung und Entladung von erster und zweiter Speicheranordnung (34 bzw. 84) die Form von sich wiederholenden Schleifen (Fig. 6: S118) kurzer zeitlicher Dauer aufweist, welche, unabhängig vom augenblicklichen Weg des Durchlaufs durch die Schleifen, im wesentlichen dieselbe Zeitdauer haben.

10. Verfahren nach einem oder mehreren der Ansprüche 7 bis 9, bei welchem im Verlauf einer Schleife Abfragen (Fig. 7: S126, S144) für den Ladezustand der ersten Speicheranordnung (34) vorgesehen sind, welche je nach Ladezustand das Durchlaufen unterschiedlicher Teile der Programmschleife (Fig. 6: S118) bewirken.

11. Verfahren nach einem oder mehreren der vorhergehenden Ansprüche, bei welchem mindestens ein elektrisches Signal, dessen Zeitdauer dem Absolutwert der Regelabweichung (ε)proportional ist, im wesentlichen parallel mit der Bestimmung der Regelabweichung erzeugt wird (Fig. 1 bis 28).

12. Verfahren nach einem oder mehreren der Ansprüche 1 bis 10, bei welchem der Istwert der zu regelnden Größe ermittelt und durch Vergleich mit einem Sollwert die Regelabweichung (ε)nach Größe und Vorzeichen bestimmt wird, und daran anschließend das mindestens eine elektrische Signal, dessen Zeitdauer dem Absolutwert der Regelabweichung (ε)proportional ist, parallel zur Ermittlung des nachfolgenden Werts für den Istwert erzeugt wird (Fig. 34 bis 45).

13. Elektromotor
mit einem Stator,
mit einem Rotor,
mit einer ersten Speicheranordnung (34) und einer zweiten Speicheranordnung (84),
und mit einem Mikrocontroller oder Mikroprozessor (20), im folgenden generell als Mikroprozessor (20, 20') bezeichnet, welcher zur Steuerung der dem Motor pro Zeiteinheit zugeführten Energie ausgebildet ist und dem ein Programm zugeordnet ist, welches zur Durchführung der folgenden Schritte ausgebildet ist:
a) bei einer vorgegebenen ersten Winkelstellung (Fig. 10: α1) des Rotors relativ zum Stator wird die zeitabhängige Veränderung der Ladung der ersten Speicheranordnung (34) gestartet;
b) ein Messzeitpunkt (Fig. 8: t1; Fig. 10: t7) wird erfasst, an welchem die Ladung (u34) der ersten Speicheranordnung (34) etwa einen vorgegebenen Wert ("Sollwert") erreicht;
c) wenn der Messzeitpunkt (Fig. 8: t1) vor einem zweiten Zeitpunkt (Fig. 8: t2) liegt, an welchem der Rotor im Betrieb einen vorgegebenen Winkelweg (Fig. 10: β)relativ zur ersten Winkelstellung (Fig. 10: α1)zurückgelegt hat, wird während des zwischen dem Messzeitpunkt und dem zweitem Zeitpunkt gelegenen Zeitintervalls (Fig. 8: t1 bis t2) die Ladung der zweiten Speicheranordnung (84) in einer vorgegebenen Richtung zeitabhängig verändert;
d) wenn der Messzeitpunkt (Fig. 10: t7) zeitlich nach dem zweiten Zeitpunkt (Fig. 10: t6) liegt, wird während des zwischen ihnen gelegenen Zeitintervalls (Fig. 10: t6 bis t7) die Ladung der zweiten Speicheranordnung (84) in einer zur vorgegebenen Richtung entgegengesetzten Richtung verändert;
e) abhängig von der Größe der Ladung der zweiten Speicheranordnung (84) wird die dem Motor pro Zeiteinheit zugeführte Energie gesteuert (Fig. 1; Fig. 15).

14. Motor nach Anspruch 13, bei welchem dem Mikroprozessor mindestens ein Ausgang (B1, B2; B31, B32) zugeordnet ist, welcher zum Ausgeben eines von dem Programm steuerbaren diskreten elektrischen Werts (z.B. High oder Low) ausgebildet ist, wobei der mindestens eine Ausgang über eine Impedanz (Fig. 43: R0, R1, R2) mit der zweiten Speicheranordnung (84; 504) verbunden ist, um die Ladung der zweiten Speicheranordnung abhängig von dem diskreten elektrischen Wert in die vorgegebene Richtung oder in die zur vorgegebenen Richtung entgegengesetzte Richtung zu verändern.

15. Motor nach Anspruch 14, bei welchem die Impedanz als ohmscher Widerstand (Fig. 43: R0, R1, R2) ausgebildet ist.

16. Motor nach Anspruch 15, bei welchem mehrere Ausgänge (Fig. 31 und 43: B31, B32, B33) vorgesehen sind, welchen jeweils eine separate Impedanz, insbesondere in Form eines ohmschen Widerstands (R0, R1, R2) zur Verbindung mit der zweiten Speicheranordnung (84; 504) zugeordnet ist.

17. Motor nach Anspruch 15 oder 16, bei welchem die ohmschen Widerstände (Fig. 21: 90", 94", 318", 322") mindestens teilweise einstellbar ausgebildet sind.

18. Motor nach einem oder mehreren der Ansprüche 14 bis 17, bei welchem die an eine Mehrzahl von Ausgängen (Fig. 43: B31, B32, B33) angeschlossenen Widerstände (R0, R1, R2) zusammengeführt und über einen gemeinsamen Widerstand (Fig. 43: Rg) mit der zweiten Speicheranordnung (84; 504) verbunden sind.

19. Motor nach Anspruch 18, bei welchem der gemeinsame Widerstand (Fig. 43: Rg) einstellbar ausgebildet ist.

20. Motor nach einem oder mehreren der Ansprüche 14 bis 19, bei welchem der Mikroprozessor (20; 20') zwei Ausgänge (Fig. 3: B1, B2) aufweist, welche durch das Programm zwischen Low und hochohmig umschaltbar sind, und bei welchem beide Ausgänge über eine Serienschaltung einer Diode (Fig. 3: 88, 92) und einer Impedanz (Fig. 3: 90, 94) mit der zweiten Speicheranordnung (84; 504) verbunden sind, wobei die Dioden (88, 92) entgegengesetzt gepolt sind und einer der Ausgänge über eine Impedanz (95) mit einer Spannungsquelle verbunden ist.

21. Motor nach Anspruch 20, bei welchem die Impedanzen (90, 94) ungleich groß ausgebildet sind, um für Ladung und Entladung der zweiten Speicheranordnung (84; 504) unterschiedliche Zeitkonstanten zu erhalten.

22. Motor nach einem oder mehreren der Ansprüche 14 bis 21, bei welchem die zweite Speicheranordnung als Integrator (504) ausgebildet ist.

23. Motor nach Anspruch 22, bei welchem der Integrator (504) einen Operationsverstärker (508) aufweist, zwischen dessen Ausgang (510) und einem Eingang (506) eine Kapazität (512) angeordnet ist.

24. Motor nach Anspruch 14 oder 15, bei welchem die Impedanz als Konstantstromglied (Fig. 46: 500, 502) ausgebildet ist.

25. Motor nach einem der Ansprüche 14 bis 24,
bei welchem der mindestens eine Ausgang zur Ausgabe eines binären oder ternären Ausgangssignals (B1, B2) ausgebildet ist.

26. Motor nach einem der Ansprüche 13 bis 25,
welcher einen PWM-Steller (60) aufweist, bei welchem die zweite Speicheranordnung (84; 504) als analoge zweite Speicheranordnung ausgebildet ist,
wobei der PWM-Steller (60) abhängig von der Ladung der analogen zweiten Speicheranordnung (84; 504) den Strom zum Elektromotor (50) steuert.

27. Motor nach Anspruch 25 oder 26, bei welchem der Mikroprozessor (20; 20') zwei Ausgänge (B1, B2) aufweist, von denen jeder zwischen den logischen Werten "1" und "0" umschaltbar ist.

28. Motor nach Anspruch 27, bei welchem an jeden Ausgang (B1, B2) die Reihenschaltung eines Widerstands und einer Diode (94, 92 bzw. 90, 88) angeschlossen ist, wobei beide Reihenschaltungen zur zweiten Speicheranordnung (84; 504) führen und die Durchflussrichtung der beiden Dioden (88, 92) entgegengesetzt ist.

29. Motor nach Anspruch 28, bei welchem die Widerstände (90, 94) unterschiedlich groß sind.

30. Motor nach Anspruch 29, mit einer Anordnung zur Regelung der Drehzahl, bei welcher der Widerstand (94), welcher der Ladungsänderung der Speicheranordnung (84; 504) bei zu niedriger Drehzahl des Motors zugeordnet ist, kleiner ist als der andere Widerstand (90).

31. Motor nach einem oder mehreren der Ansprüche 26 bis 30, bei welchem die zweite Speicheranordnung als Kondensator (84) ausgebildet ist, und die Spannung an diesem Kondensator (84) über einen insbesondere verstellbaren hochohmigen Widerstand (80) dem Eingang (62) eines PWM-Stellers (60) zuführbar ist, welcher Eingang über einen abhängig vom Motorstrom (i; il, i2) veränderbaren Widerstand (72, 70, 66) mit einem Potential verbunden ist, das eine Verkleinerung des Tastverhältnisses (TV) des PWM-Stellers (60) bewirkt, wenn vom Eingang (62) des PWM-Stellers (60) ein Strom über diesen veränderbaren Widerstand (66, 70, 72) zu diesem Potential fließt.

32. Motor nach einem oder mehreren der Ansprüche 26 bis 31, bei welchem der PWM-Steller (60) einen Dreiecksgenerator (180) und einen Komparator (182) aufweist, dessen einem Eingang (210) eine Dreiecksspannung (208) vom Dreiecksgenerator (180), und dessen anderem Eingang (212) ein Eingangssignal von der Speicheranordnung (84; 504) und/oder von einer Vorrichtung zur Begrenzung des Motorstroms (i) zuführbar ist.

33. Motor nach Anspruch 32, bei welchem das Dreieckssignal (208) des Dreiecksgenerators (180) zwischen einem von Null verschiedenen Mindestwert und einem von Null verschiedenen Maximalwert oszilliert.

34. Motor nach Anspruch 32 oder 33, bei welchem der Dreiecksgenerator (180) einen Komparator (186) aufweist, dessen Ausgang (188) über eine Gegenkopplung (194) mit dem Minuseingang (196), und über eine Mitkopplung (190) mit dem Pluseingang (192), verbunden ist, und bei welchem dem Minuseingang (196) ein Speicherkondensator (198) zugeordnet ist.

35. Motor nach einem oder mehreren der Ansprüche 32 bis 34, bei welchem zwischen einer Strommessvorrichtung (58) für den Motorstrom (i) und dem Eingang (62) des PWM-Stellers (60) mindestens ein Filter (70, 72, 76) vorgesehen ist.

36. Motor nach Anspruch 35, bei welchem das Filter als T-Filter (70, 72, 76) ausgebildet ist.

## Claims

1. Method for regulating the rotational speed of a motor which comprises a part which rotates while in operation - referred to in the following as the rotor - and a part which does not rotate while in operation - referred to in the following as the stator, with the following steps:
a) the time-dependent alteration of the charge of a first storage arrangement (34) is started in a predetermined first angular position (Fig. 10: α1) of the rotor relative to the stator;
b) a measuring point in time (Fig. 8: t1; Fig 10: t7) is detected at which the charge (u34) of the first storage arrangement (34) roughly reaches a predetermined value ("set value");
c) when the measuring point in time (Fig. 8: t1) lies before a second point in time (Fig. 8: t2) at which the rotor while in operation has travelled a predetermined angular distance (Fig. 10: β) relative to the first angular position (Fig. 10: α1), the charge of a second storage arrangement (84) is altered dependent on time in a predetermined direction during the interval of time between the measuring point in time and the second point in time (Fig. 8: t1 to t2);
d) when the measuring point in time (Fig. 10: t7) lies chronologically after the second point in time (Fig. 10: t6), the charge of the second storage arrangement (84) is altered in the opposite direction to the predetermined direction during the interval in time between them (Fig. 10: t6 to t7);
e) the power supplied to the motor per unit of time is controlled depending on the magnitude of the charge of the second storage arrangement (84) (Fig. 1; Fig. 15).

2. Method according to claim 1, in which the power supplied to the motor is an electrical current in pulse form (i) which is controlled by alteration of its pulse duty cycle (TV) by means of pulse width modulation (PWM) dependent on the magnitude of the charge of the second storage arrangement (84).

3. Method according to claim 1 or 2, in which the first angular position (Fig. 10: α1) is predetermined by the change in the potential of the output signal of a Hall sensor (Fig. 15: 234) provided in or on the motor occurring during the transition from a north pole to a south pole or vice versa.

4. Method according to claim 3, in which the predetermined angle value (Fig. 10: β) is defined by an essentially constant range of the output voltage of the Hall sensor (234) directly following the first angular position (α1).

5. Method according to one of more of claims 2 to 4, in which the current in the motor is controlled using a PWM regulating unit (60) which can alter the pulse duty cycle (TV) of its output signal depending on a control voltage fed to its input (62), the control voltage for a pulse duty cycle of 0% being other than zero and having the same sign as control voltages required for higher pulse duty cycles.

6. Method according to one or more of the preceding claims, in which when the measuring point in time (Fig. 8: t1) lies before the second point in time (Fig. 8: t2), the alteration of the charge of the second storage arrangement (84) takes place in the predetermined direction with a time-dependent rate the absolute value of which is higher than the absolute value of the time-dependent rate for the alteration of the charge when the measuring point in time (Fig. 10: t7) lies after the second point in time (Fig. 10: t6).

7. Method according to one or more of the preceding claims, in which the charging and discharging of the first storage arrangement (34) are controlled by means of a microprocessor (20).

8. Method according to claim 7, in which the flow chart for the charging and discharging of the first and second storage arrangements (34 and 84 respectively) provided for the microprocessor (20) has the structure of a binary tree (Fig. 7).

9. Method according to claim 7 or 8, in which the program for controlling the charging and discharging of the first and second storage arrangements (34 and 84 respectively) has the form of repeating loops (Fig 6: S118) of short time duration which essentially have the same time duration independently of the instantaneous distance travelled through the loops.

10. Method according to one or more of claims 7 to 9, in which in the course of a loop, provision is made for interrogating steps (Fig. 7: S126, S144) to determine the state of charge of the first storage arrangement (34), each of which lead to different parts of the program loop (Fig. 6: S118) being run through according to the state of charge.

11. Method according to one or more of the preceding claims, in which at least one electrical signal, the time duration of which is proportional to the absolute value of the control deviation (ε), is produced essentially parallel with the determination of the control deviation (Figs. 1 to 28).

12. Method according to one or more of claims 1 to 10, in which the actual value of the parameter to be regulated is established and the magnitude and sign of the control deviation (ε) are determined by comparison with a set value, and directly following this the at least one electrical signal, the time duration of which is proportional to the absolute value of the control deviation (ε), is produced parallel with the determination of the following value for the actual value (Figs. 34 to 45).

13. Electric motor
with a stator,
with a rotor,
with a first storage arrangement (34) and a second storage arrangement (84),
and with a microcontroller or a microprocessor (20), referred to in the following generally as a microprocessor (20, 20'), which is designed for controlling the power supplied to the motor per unit of time and has associated therewith a program which is designed for carrying out the following steps:
a) the time-dependent alteration of the charge of the first storage arrangement (34) is started in a predetermined first angular position (Fig. 10: α1) of the rotor relative to the stator;
b) a measuring point in time (Fig. 8: t1; Fig 10: t7) is detected at which the charge (u34) of the first storage arrangement (34) roughly reaches a predetermined value ("set value");
c) when the measuring point in time (Fig. 8: t1) lies before a second point in time (Fig. 8: t2) at which the rotor while in operation has travelled a predetermined angular distance (Fig. 10: β) relative to the first angular position (Fig. 10: α1), the charge of the second storage arrangement (84) is altered dependent on time in a predetermined direction during the interval of time between the measuring point in time and the second point in time (Fig. 8: t1 to t2);
d) when the measuring point in time (Fig. 10: t7) lies chronologically after the second point in time (Fig. 10: t6), the charge of the second storage arrangement (84) is altered in the opposite direction to the predetermined direction during the interval in time between them (Fig. 10: t6 to t7);
e) the power supplied to the motor per unit of time is controlled depending on the magnitude of the charge of the second storage arrangement (84) (Fig. 1; Fig. 15).

14. Motor according to claim 13, in which the microprocessor has associated therewith at least one output (B1, B2; B31, B32) which is designed for outputting a discrete electrical value controllable by the program (e.g. high or low), the at least one output being connected through an impedance (Fig. 43: R0, R1, R2) to the second storage arrangement (84; 504) in order to alter the charge of the second storage arrangement in the predetermined direction or the opposite direction to the predetermined direction depending on the discrete electrical value.

15. Motor according to claim 14, in which the impedance is embodied as an ohmic resistance (Fig. 43: R0, R1, R2).

16. Motor according to claim 15, in which a plurality of outputs (Figs. 31 and 43: B31, B32, B33) are provided each of which has associated therewith a separate impedance, in particular in the form of a ohmic resistance (R0, R1, R2) for connection to the second storage arrangement (84; 504).

17. Motor according to claim 15 or 16, in which the ohmic resistances (Fig. 21: 90", 94", 318", 322") are designed so as to be at least partly adjustable.

18. Motor according to one or more of claims 14 to 17, in which the resistances (R0, R1, R2) connected to a plurality of outputs (Fig. 43: B31, B32, B33) are run together and connected via a common resistance (Fig. 43: Rg) to the second storage arrangement (84; 504).

19. Motor according to claim 18, in which the common resistance (Fig. 43: Rg) is designed so as to be adjustable.

20. Motor according to one or more of claims 14 to 19, in which the microprocessor (20; 20') comprises two outputs (Fig. 3: B1, B2) which can be switched between low and high ohmic states by the program, and in which both outputs are connected through a series circuit of a diode (Fig. 3: 88, 92) and an impedance (Fig. 3: 90, 94) to the second storage arrangement (84; 504), the diodes (88, 92) being connected with the opposite polarity and one of the outputs being connected through an impedance (95) to a voltage source.

21. Motor according to claim 20, in which the impedances (90, 94) are designed with different values in order to obtain different time constants for the charging and discharging of the second storage arrangement (84; 504).

22. Motor according to one or more of claims 14 to 21, in which the second storage arrangement is embodied as an integrator (504).

23. Motor according to claim 22, in which the integrator (504) comprises an operation amplifier (508) which has a capacitance (512) arranged between its output (510) and an input (506).

24. Motor according to claim 14 or 15, in which the impedance is embodied as a constant current element (Fig. 46: 500, 502).

25. Motor according to one of claims 14 to 24, in which the at least one output is designed for outputting a binary or ternary output signal (B1, B2).

26. Motor according to one of claims 13 to 25, which comprises a PWM regulating unit (60), in which the second storage arrangement (84; 504) is embodied as an analogue second storage arrangement, in which the PWM regulating unit (60) controls the current to the electric motor (50) depending on the charge of the analogue second storage arrangement (84; 504).

27. Motor according to claim 25 or 26, in which the microprocessor (20; 20') comprises two outputs (B1, B2) each of which can be switched between the logic values "1" and "0".

28. Motor according to claim 27, in which the series circuit of a resistance and a diode (94, 92 and 90, 88 respectively) is connected to each output (B1, B2), the two series circuits leading to the second storage arrangement (84; 504) and the direction of flow of the two diodes (88, 92) being opposed.

29. Motor according to claim 28, in which the resistances (90, 94) are of different sizes.

30. Motor according to claim 29, with an arrangement for regulating the rotational speed, in which the resistance (94) which is associated with the alteration of the charge of the storage arrangement (84; 504) when the rotational speed of the motor is too low, is smaller than the other resistance (90).

31. Motor according to one or more of claims 26 to 30, in which the second storage arrangement is embodied as a capacitor (84), and the voltage at this capacitor (84) can be fed through an in particular adjustable high ohmic resistance (80) to the input (62) of a PWM regulating unit (60), which input is connected through a resistance (72, 70, 66) which is variable depending on the motor current (i; i1, i2) to a potential which produces a reduction in the pulse duty cycle (TV) of the PWM regulating unit (60), when a current flows from the input (62) of the PWM regulating unit (60) through this variable resistance (66, 70 ,72) to this potential.

32. Motor according to one or more of claim 26 to 31, in which the PWM regulating unit (60) comprises a delta voltage generator (180) and a comparator (182), one input (210) of which can be fed with a delta voltage (208) from the delta voltage generator (180), and the other input (212) of which can be fed with an input signal from the storage arrangement (84; 504) and/or from a device for limiting the motor current (i).

33. Motor according to claim 32, in which the delta signal (208) of the delta voltage generator (180) oscillates between a minimum value other than zero and a maximum value other than zero.

34. Motor according to claim 32 or 33, in which the delta voltage generator (180) comprises a comparator (186), the output (188) of which is connected through a negative feedback element (194) to the negative input (196), and through a positive feedback element (190) to the positive input (192), and in which the negative input (196) has a storage capacitor (198) associated therewith.

35. Motor according to one or more of claims 32 to 34, in which at least one filter (70, 72, 76) is provided between a current measuring device (58) for the motor current (i) and the input (62) of the PWM regulating unit (60).

36. Motor according to claim 35, in which the filter is embodied as a T-filter (70, 72, 76).

## Revendications

1. Procédé de régulation de la vitesse de rotation d'un moteur qui présente une pièce rotative en fonctionnement - appelée rotor dans la suite - et une pièce non rotative en fonctionnement - appelée stator dans la suite -, comprenant les étapes suivantes :
a) à une première position angulaire définie (fig. 10 : α1) du rotor par rapport au stator, on démarre la modification en fonction du temps de la charge d'un premier dispositif accumulateur (34) ;
b) on saisit un instant de mesure (fig. 8 : t1 ; fig. 10 : t7) auquel la charge (u34) du premier dispositif accumulateur (34) atteint à peu près une valeur définie (« valeur de consigne ») ;
c) lorsque l'instant de mesure (fig. 8 : t1) se situe avant un deuxième instant (fig. 8 : t2) auquel le rotor a parcouru en fonctionnement une course angulaire définie (fig. 10 : β) par rapport à la première position angulaire (fig. 10 : α1), on modifie en fonction du temps, dans un sens défini, la charge d'un deuxième dispositif accumulateur (84) pendant l'intervalle de temps (fig. 8 : t1 à t2) compris entre l'instant de mesure et le deuxième instant ;
d) lorsque l'instant de mesure (fig. 10 : t7) se situe après le deuxième instant (fig. 8 : t6), on modifie en fonction du temps, dans un sens opposé au sens défini, la charge du deuxième dispositif accumulateur (84) pendant l'intervalle de temps (fig. 10 : t6 à t7) compris entre eux ;
e) on commande en fonction de la grandeur de la charge du deuxième dispositif accumulateur (84) l'énergie fournie au moteur par unité de temps (fig. 1 ; fig. 15).

2. Procédé selon la revendication 1, dans lequel l'énergie fournie au moteur est un courant électrique pulsé (i) qui est commandé par une modification de son rapport cyclique (TV) par modulation de largeur d'impulsion (PWM) en fonction de la grandeur de la charge du deuxième dispositif accumulateur (84).

3. Procédé selon la revendication 1 ou 2, dans lequel la première position angulaire (fig. 10 : α1) est définie par la variation de potentiel du signal de sortie d'un capteur à effet Hall (fig. 15 : 234) prévu dans ou sur le moteur au passage d'un pôle nord à un pôle sud ou inversement.

4. Procédé selon la revendication 3, dans lequel la valeur angulaire définie (fig. 10 : β) est définie par une plage essentiellement constante de la tension de sortie du capteur à effet Hall (fig. 15 : 234) faisant suite à la première position angulaire (fig. 10 : α1).

5. Procédé selon l'une ou plusieurs des revendications 2 à 4, dans lequel on utilise pour la commande du courant dans le moteur un actionneur PWM (60) qui peut faire varier le rapport cyclique (TV) de son signal de sortie en fonction d'une tension de commande fournie à l'une de ses entrées (62), la tension de commande pour un rapport cyclique de 0 % étant différente de zéro et de même signe que les tensions de commande requises pour des rapports cycliques plus élevés.

6. Procédé selon l'une ou plusieurs des revendications précédentes, dans lequel, lorsque l'instant de mesure (fig. 8 : t1) se situe avant le deuxième instant (fig. 8: t2), la modification de la charge du deuxième dispositif accumulateur (84) dans le sens défini est effectuée à une vitesse dépendant du temps dont la valeur absolue est plus élevée que la valeur absolue de la vitesse dépendant du temps pour la modification de la charge lorsque l'instant de mesure (fig. 10 : t7) se situe après le deuxième instant (fig. 10 : t6).

7. Procédé selon l'une ou plusieurs des revendications précédentes, dans lequel la charge et la décharge du premier dispositif accumulateur (34) sont commandées par un microprocesseur (20).

8. Procédé selon la revendication 7, dans lequel l'organigramme pour la charge et la décharge du premier et du deuxième dispositif accumulateur (34, respectivement 84) prévu pour le microprocesseur (20) présente la structure d'un arbre binaire (fig. 7).

9. Procédé selon la revendication 7 ou 8, dans lequel le programme de commande de la charge et de la décharge du premier et du deuxième dispositif accumulateur (34, respectivement 84) présente la forme de boucles itératives (fig. 6 : S118) de courte durée qui ont essentiellement la même durée, indépendamment du chemin de passage actuel à travers les boucles.

10. Procédé selon l'une ou plusieurs des revendications 7 à 9, dans lequel il est prévu pendant le déroulement d'une boucle des interrogations (fig. 7 : S126, S144) sur l'état de charge du premier dispositif accumulateur (34), lesquelles provoquent, en fonction de l'état de charge, le passage par différentes parties de la boucle de programme (fig. 6 : 118).

11. Procédé selon l'une ou plusieurs des revendications précédentes, dans lequel on génère au moins un signal électrique dont la durée est proportionnelle à la valeur absolue de l'écart de réglage (ε), essentiellement en parallèle avec la détermination de l'écart de réglage (fig. 1 à 28).

12. Procédé selon l'une ou plusieurs des revendications 1 à 10, dans lequel on calcule la valeur réelle de la grandeur à réguler, on détermine la grandeur et le signe de l'écart de réglage (ε) par comparaison avec une valeur de consigne, puis on génère le ou les signaux électriques dont la durée est proportionnelle à la valeur absolue de l'écart de réglage (ε) en parallèle avec la détermination de la valeur suivante de la valeur réelle (fig. 34 à 45).

13. Moteur électrique
avec un stator,
avec un rotor,
avec un premier dispositif accumulateur (34) et un deuxième dispositif accumulateur (84) et avec un microcontrôleur ou microprocesseur (20), appelé dans la suite de façon générale microprocesseur (20, 20'), lequel est conçu pour la commande de l'énergie fournie au moteur par unité de temps et auquel est associé un programme pour l'exécution des étapes suivantes :
a) à une première position angulaire définie (fig. 10 : α1) du rotor par rapport au stator, on démarre la modification en fonction du temps de la charge du premier dispositif accumulateur (34) ;
b) on saisit un instant de mesure (fig. 8 : t1 ; fig. 10 : t7) auquel la charge (u34) du premier dispositif accumulateur (34) atteint à peu près une valeur définie (« valeur de consigne ») ;
c) lorsque l'instant de mesure (fig. 8 : t1) se situe avant un deuxième instant (fig. 8 : t2) auquel le rotor a parcouru en fonctionnement une course angulaire définie (fig. 10 : β) par rapport à la première position angulaire (fig. 10 : α1), on modifie en fonction du temps, dans un sens défini, la charge du deuxième dispositif accumulateur (84) pendant l'intervalle de temps (fig. 8 : t1 à t2) compris entre l'instant de mesure et le deuxième instant ;
d) lorsque l'instant de mesure (fig. 10 : t7) se situe après le deuxième instant (fig. 8 : t6), on modifie en fonction du temps, dans un sens opposé au sens défini, la charge du deuxième dispositif accumulateur (84) pendant l'intervalle de temps (fig. 10 : t6 à t7) compris entre eux ;
e) on commande en fonction de la grandeur de la charge du deuxième dispositif accumulateur (84) l'énergie fournie au moteur par unité de temps (fig. 1 ; fig. 15).

14. Moteur selon la revendication 13, dans lequel au moins une sortie (B1, B2 ; B31, B32), conçue pour délivrer une valeur électrique discrète commandée par le programme (p. ex. haut ou bas), est associée au microprocesseur, cette ou ces sortie(s) étant reliée(s) via une impédance (fig. 43 : R0, R1, R2) au deuxième dispositif accumulateur (84 ; 504) pour modifier la charge du deuxième dispositif accumulateur dans le sens défini ou dans le sens opposé au sens défini en fonction de la valeur électrique discrète.

15. Moteur selon la revendication 14, dans lequel l'impédance prend la forme d'une résistance ohmique (fig. 43 : R0, R1, R2).

16. Moteur selon la revendication 15, dans lequel il est prévu plusieurs sorties (fig. 31 et 43 : B31, B32, B33) à chacune desquelles est associée une impédance séparée, en particulier sous la forme d'une résistance ohmique (R0, R1, R2), pour la liaison avec le deuxième dispositif accumulateur (84 ; 504).

17. Moteur selon la revendication 15 ou 16, dans lequel les résistances ohmiques (fig. 21 : 90", 94", 318", 322") sont, au moins en partie, réglables.

18. Moteur selon l'une ou plusieurs des revendications 14 à 17, dans lequel les résistances (R0, R1, R2) reliées à une pluralité de sorties (fig. 43 : B31, B32, B33) sont réunies et reliées au deuxième dispositif accumulateur (84) par une résistance commune (fig. 43 : Rg).

19. Moteur selon la revendication 18, dans lequel la résistance commune (fig. 43 : Rg) est réglable.

20. Moteur selon l'une ou plusieurs des revendications 14 à 19, dans lequel le microprocesseur (20 ; 20') présente deux sorties (fig. 3 : B1, B2) qui sont commutables par le programme entre un niveau bas et un niveau à basse impédance, et dans lequel les deux sorties sont reliées au deuxième dispositif accumulateur (84 ; 504) par le couplage en série d'une diode (fig. 3 : 88, 92) et d'une impédance (fig. 3 : 90, 94), les diodes (88, 92) étant polarisées en sens contraire et une des entrées étant reliée à une source de tension par une impédance (95).

21. Moteur selon la revendication 20, dans lequel les impédances (90, 94) sont de valeur inégale afin d'obtenir des constantes de temps différentes pour la charge et la décharge du deuxième dispositif accumulateur (84 ; 504).

22. Moteur selon l'une ou plusieurs des revendications 14 à 21, dans lequel le deuxième dispositif accumulateur est un intégrateur (504).

23. Moteur selon la revendication 22, dans lequel l'intégrateur (504) présente un amplificateur opérationnel (508) entre la sortie (510) et une entrée (506) duquel est disposée une capacité (512).

24. Moteur selon la revendication 14 ou 15, dans lequel l'impédance est un élément à courant constant (fig. 46 : 500, 502).

25. Moteur selon l'une des revendications 14 à 24, dans lequel au moins une des sorties (B1, B2) est conçue pour délivrer un signal de sortie binaire ou ternaire.

26. Moteur selon l'une des revendications 13 à 25, qui présente un actionneur PWM (60), dans lequel le deuxième dispositif accumulateur (84 ; 504) est un deuxième dispositif accumulateur analogique, l'actionneur PWM (60) commandant le courant vers le moteur électrique (50) en fonction de la charge du deuxième dispositif accumulateur analogique (84 ; 504).

27. Moteur selon la revendication 25 ou 26, dans lequel le microprocesseur (20 ; 20') présente deux sorties (B1, B2) dont chacune est commutable entre les valeurs logiques «1» et «0».

28. Moteur selon la revendication 27, dans lequel le couplage en série d'une résistance et d'une diode (94, 92 respectivement 90, 88) est relié à chaque sortie (B1, B2), les deux couplages en série menant au deuxième dispositif accumulateur (84 ; 504) et le sens de polarisation des deux diodes (88, 92) étant opposé.

29. Moteur selon la revendication 28, dans lequel les résistances (90, 94) sont de valeur différente.

30. Moteur selon la revendication 29, avec un dispositif de régulation de la vitesse de rotation, dans lequel la résistance (94) qui est associée à la modification de charge du dispositif accumulateur (84 ; 504) à trop faible vitesse de rotation du moteur est plus petite que l'autre résistance (90).

31. Moteur selon l'une ou plusieurs des revendications 26 à 30, dans lequel le deuxième dispositif accumulateur est un condensateur (84) et la tension à ce condensateur (84) peut être amenée à l'entrée (62) d'un actionneur PWM (60) par l'intermédiaire d'une résistance de valeur ohmique élevée (80), en particulier réglable, laquelle entrée est reliée par l'intermédiaire d'une résistance variable (72, 70, 66) en fonction du courant de moteur (i ; i1 ; i2) à un potentiel qui provoque une diminution du rapport cyclique (TV) de l'actionneur PWM (60) lorsqu'un courant circule de l'entrée (62) de l'actionneur PWM (60) vers ce potentiel via cette résistance variable (72, 70, 66).

32. Moteur selon l'une ou plusieurs des revendications 26 à 31, dans lequel l'actionneur PWM (60) présente un générateur triangulaire (180) et un comparateur (182) dont une entrée (210) peut recevoir une tension triangulaire (208) du générateur triangulaire (180) et l'autre entrée (212) un signal d'entrée du dispositif accumulateur (84 ; 504) et/ou d'un dispositif de limitation du courant de moteur (i).

33. Moteur selon la revendication 32, dans lequel le signal triangulaire (208) du générateur triangulaire (180) oscille entre une valeur minimale différente de zéro et une valeur maximale différente de zéro.

34. Moteur selon la revendication 32 ou 33, dans lequel le générateur triangulaire (180) présente un comparateur (186) dont la sortie (188) est reliée par un couplage négatif (194) à l'entrée négative (196) et par un couplage positif (192) à l'entrée positive (192), et dans lequel un condensateur de stockage (198) est associé à l'entrée négative (196).

35. Moteur selon l'une ou plusieurs des revendications 32 à 34, dans lequel il est prévu au moins un filtre (70, 72, 76) entre un dispositif de mesure de courant (58) du courant de moteur (i) et l'entrée (62) de l'actionneur PWM (60).

36. Moteur selon la revendication 35, dans lequel le filtre est un filtre en T (70, 72, 76).
